(19) Europäisches Patentamt
European Patent Office
Office européen des brevets

(11) Veröffentlichungsnummer : **0 297 044 B1**

(12) # EUROPÄISCHE PATENTSCHRIFT

(45) Veröffentlichungstag der Patentschrift :
**19.08.92 Patentblatt 92/34**

(51) Int. Cl.$^5$ : **C09B 62/04,** C09B 62/503, D06P 1/38

(21) Anmeldenummer : **88810410.6**

(22) Anmeldetag : **15.06.88**

(54) **Reaktivfarbstoffe, Verfahren zu deren Herstellung und deren Verwendung.**

Die Akte enthält technische Angaben, die nach dem Eingang der Anmeldung eingereicht wurden und die nicht in dieserPatentschrift enthalten sind.

(30) Priorität : **24.06.87 CH 2379/87**

(43) Veröffentlichungstag der Anmeldung :
**28.12.88 Patentblatt 88/52**

(45) Bekanntmachung des Hinweises auf die Patenterteilung :
**19.08.92 Patentblatt 92/34**

(84) Benannte Vertragsstaaten :
**BE CH DE ES FR GB IT LI**

(56) Entgegenhaltungen :
**EP-A- 0 214 093**
**FR-A- 1 439 996**
**FR-A- 2 417 532**

(73) Patentinhaber : **CIBA-GEIGY AG**
**Klybeckstrasse 141**
**CH-4002 Basel (CH)**

(72) Erfinder : **Tzikas, Athanassios, Dr.**
**Muttenzerstrasse 78**
**CH-4133 Pratteln (CH)**

EP 0 297 044 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Anmeldung betrifft neue verbesserte Reaktivfarbstoffe, die sich besonders für das Färben von cellulosehaltigen Fasermaterialien nach dem Ausziehverfahren oder nach Kontinueverfahren eignen, und die nass- und lichtechte Färbungen ergeben; sowie Verfahren zur Herstellung dieser Farbstoffe, und deren Verwendung zum Färben oder Bedrucken von textilen Materialien.

In der französischen Patentanmeldung FR-A-2 417 532 werden Phthalocyaninfarbstoffe beschrieben, welche zumindest einen Triazinrest und einen Reaktivrest enthalten; in den Beispielen ist die Verbindung der Formel

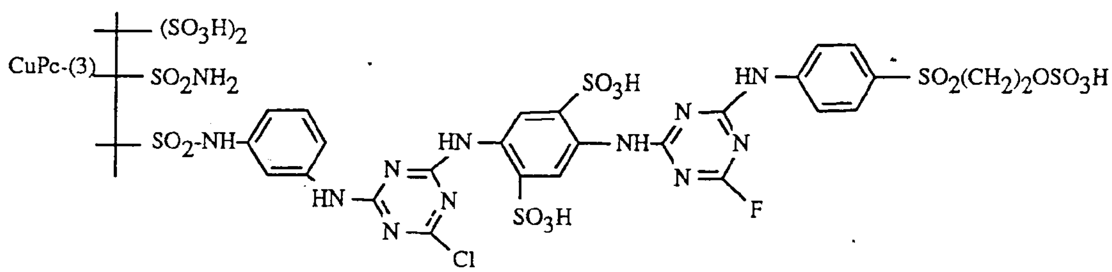

erwähnt.

Gegenstand der Erfindung sind Reaktivfarbstoffe der Formel

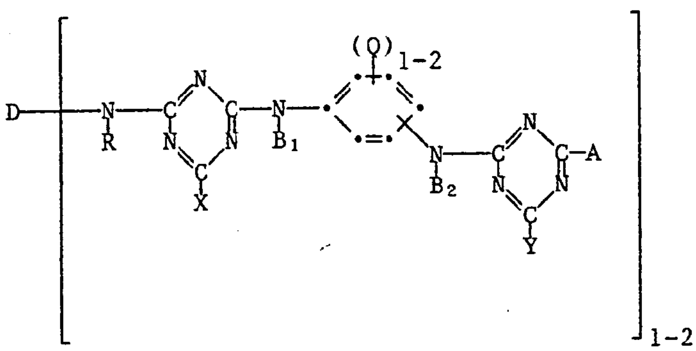

(1),

worin D der Rest eines Monoazo-, Polyazo-, Metallkomplexazo-, Anthrachinon-, Phthalocyanln-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid- Farbstoffes; R, $B_1$ und $B_2$ unabhängig voneinander Wasserstoff oder Alkyl mit 1 bis 4 Kohlenstoffatomen, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann; X und Y unabhängig voneinander Fluor, Chlor, Brom, Sulfo, $C_1$-$C_4$-Alkylsulfonyl oder Phenylsulfonyl; A ein Aminosubstituent, der mindestens eine Gruppe der Formel

$$-SO_2-Z \qquad (2)$$

enthält, und Z β-Sulfatoäthyl, β-Thiosulfatoäthyl, β-Phosphatoäthyl, β-Acyloxyäthyl, β-Halogenäthyl oder Vinyl ist;und Q für 1 bis 2 Substituenten aus der Gruppe Wasserstoff, $C_1$-$C_4$-Alkyl, $C_1$-$C_4$-Alkoxy, Halogen, Carboxy oder Sulfo steht, ausgenommen Reaktivfarbstoffe der Formel (1), worin D ein Phthalocyaninrest ist und weder X noch Y Fluor bedeutet.

Der Rest D in Formel (1) kann an seinem Grundgerüst die bei organischen Farbstoffen üblichen Substituenten gebunden enthalten.

Als Beispiele für weitere Substituenten im Rest D seien genannt: Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino; Propylamino, Isopropylamino oder Butylamino, Phenylamino, N-N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Koh-

lenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarabamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Reaktivfarbstoffe der Formel (1), worin D der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Die Reste R, $B_1$ bzw. $B_2$ sind, falls es sich um Alkylreste handelt, geradkettig oder verzweigt; sie können weitersubstituiert sein, z.B. durch Halogen, Hydroxy, Cyan, $C_1$-$C_4$-Alkoxy, $C_1$-$C_4$-Alkoxycarbonyl, Carboxy, Sulfamoyl, Sulfo oder Sulfato, Als Beispiele für R, $B_1$ und $B_2$ seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise ist R, $B_1$ bzw. $B_2$ Wasserstoff, Methyl oder Aethyl.

Die als Anionen abspaltbaren Substituenten X und Y sind je ein Halogenatom, wie Fluor, Chlor oder Brom, eine niedrigmolekulare Alkylsulfonylgruppe, wie Methylsulfonyl oder Aethylsulfonyl, der Phenylsulfonylrest oder eine Sulfogruppe. Vorzugsweise sind X und Y Fluor oder Chlor.

Der Aminosubstituent A ist der Rest eines aliphatischen, aromatischen oder heterocyclischen Amins, der mindestens eine Gruppe der Formel (2) enthält.

Als Aminosubstituent A kommt auch der Rest eines gemischt aliphatisch-aromatischen, aliphatisch-heterocyclischen oder aromatisch-heterocyclischen Amins in Betracht. Beispiele für A sind: Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält. Falls A der Rest eines aliphatischen Amins ist, handelt es sich vorzugsweise um Alkylamino- oder N,N-Dialkylaminogruppen, worin die Alkylketten auch durch andersartige Atome oder Gruppen, wie -O-, -NH- oder -CO-, unterbrochen sein können. Die Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Reste sind vor allem Furan-, Tiophen-, Pyrazol-, Pyridin-, Pyrimidin-, Chinolin-, Benzimidazol, Benzthiazol- und Benzoxazolreste; und als Aminogruppen, worin das Aminostickstoffatom Glied eines N-heterocyclischen Ringes ist, kommen vorzugsweise Reste von sechsgliedrigen N-heterocyclischen Verbindungen in Betracht, die als weitere Heteroatome Stickstoff, Sauerstoff oder Schwefel enthalten können. Die oben genannten Alkyl-, Cycloalkyl-, Aralkyl- und Arylreste, die heterocyclischen Reste, sowie die N-heterocyclischen Ringe enthalten zwingend mindestens eine Gruppe der Formel (2), sie können ausserdem weitersubstituiert sein, z.B. durch: Halogen, wie Fluor, Chlor und Brom, Nitro, Cyan, Trifluormethyl, Sulfamoyl, Carbamoyl, $C_1$-$C_4$-Alkyl, $C_1$-$C_4$-Alkoxy, Acylaminogruppen, wie Acetylamino oder Benzoylamino, Ureido, Hydroxy, Carboxy, Sulfomethyl oder Sulfo.

Als β-Acyloxyäthyl kommt für Z insbesondere der β-Acetoxyäthylrest und als β-Halogenäthyl insbesondere der β-Chloräthylrest in Betracht.

Entsprechende Aminosubstituenten A sind beispielsweise:

β-(β'-Chloräthylsulfonyl)-äthylamino, Bis-β-(β'-chloräthylsulfonyl)-äthylamino, β-[β'(β''-Chloräthylsulfonyl)-äthyloxy]-äthylamino, 3- oder 4-Sulfatoäthylsulfonyl-phenylamino, 3- oder 4-Vinylsulfonylphenylamino, 3- oder 4-Sulfatoäthylsulfonyl-benzylamino und 3- oder 4-Sulfatoäthylsulfonyl-phenäthylamino.

Der Substituent Q ist z.B. Wasserstoff, Methyl, Aethyl, Propyl, Isopropyl, Butyl, Isobutyl, sek-Butyl. tert.-Butyl, Methoxy, Aethoxy, Propyloxy, Isopropyloxy, Butyloxy, Isobutyloxy, sek.-Butyloxy, tert.-Butyloxy, Fluor, Chlor, Brom, Carboxy oder Sulfo. Vorzugsweise ist Q eine Sulfogruppe und sein Index = 1.

Der in eckige Klammern eingeschlossene Teil von Formel (1) ist ein Reaktivrest, welcher ein- oder zweimal im Molekül vorhanden sein kann; beide Formelvarianten sind gleich wichtig. Falls ein Farbstoff der Formel (1) zwei derartige Formelteile enthält, können diese gleich oder verschieden sein; vorzugsweise sind sie gleich. Die eckige Klammer umfasst u.a. den Aminosubstituenten A, der selbst wiederum einen Reaktivrest aufweist, und zwar die Gruppe $-SO_2-Z$; dieser Reaktivrest enthält eine Abgangsgruppe, z.B. wenn Z β-Chloräthyl ist, oder kann nach Art von faserreaktiven Gruppen wirksam werden, z.B. wenn Z Vinyl ist (Grundlegendes über Reaktivfarbstoffe siehe Venkataraman, K.: The Chemistry of Synthetic Dyes. New York: Academic Press 1972; Vol. VI, Reactive Dyes).

Ferner sind in Betracht zu ziehen, Reaktivfarbstoffe der Formel (1), worin der Rest D noch einen weiteren

Reaktivrest einschliesst. Die zusätzlichen, in D eingeschlossenen Reaktivreste können über Aminogruppen, oder in anderer Weise z.B. durch eine direkte Bindung an D gebunden sein.

Bevorzugte Ausführungsformen der Reaktivfarbstoffe der Formel (1) sind:

a) Reaktivfarbstoffe der Formel (1), worin A ein Rest der Formel

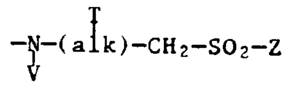 (3a)

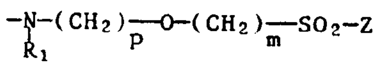 (3b)

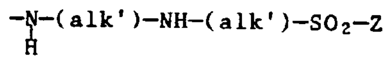 (3c)

oder

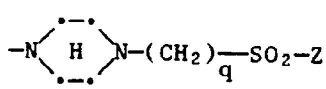 (3d)

ist; Z die unter Formel (1) angegebene Bedeutung hat; alk ein Alkylenrest mit 1 bis 6 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl oder ein Rest $-SO_2-Z$, worin Z die oben angegebene Bedeutung hat; V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann; oder ein Rest

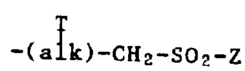 (3e)

worin Z, alk und T die angegebenen Bedeutungen haben; $R_1$ Wasserstoff oder $C_1$-$C_6$-Alkyl, alk' unabhängig voneinander Polymethylenreste mit 2 bis 6 C-Atomen oder deren verzweigte Isomere; und m = 1 bis 6, p = 1 bis 6 und q = 1 bis 6 ist.

b) Reaktivfarbstoffe der Formel (1), worin A ein Rest der Formel

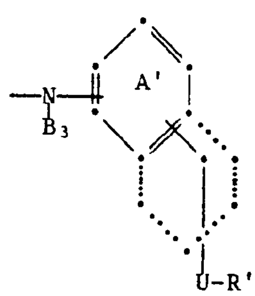 (4)

worin $B_3$ Wasserstoff oder Alkyl mit 1 bis 4 Kohlenstoffatomen, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann; U -CO- oder $-SO_2-$; R' ein Rest der Formel

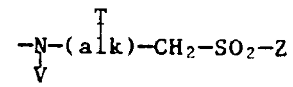

(3a)

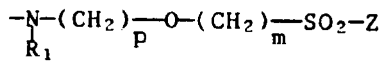

(3b)

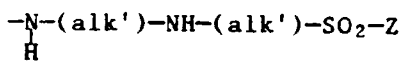

(3c)

oder

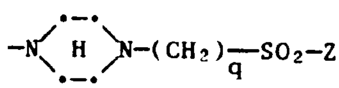

(3d)

ist, Z die unter Formel (1) angegebene Bedeutung hat; alk ein Alkylenrest mit 1 bis 6 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat; V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann; oder ein Rest

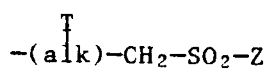

(3e),

worin Z, alk und T die angegebenen Bedeutungen haben; $R_1$ Wasserstoff oder $C_1$-$C_6$-Alkyl, alk' unabhängig voneinander Polymethylenreste mit 2 bis 6 C-Atomen oder deren verzweigte Isomere; und m = 1 bis 6, p = 1 bis 6 und q = 1 bis 6 ist; wobei falls U $-SO_2-$ ist, V nicht Wasserstoff sein darf; und der Benzol- bzw. Naphthalinrest A' weitere Substituenten enthalten kann.

c) Reaktivfarbstoffe der Formel (1), worin A ein Rest der Formel

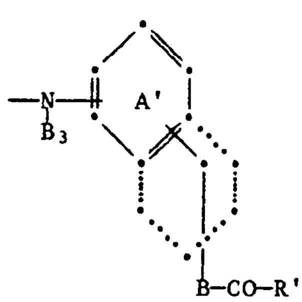

(5),

worin $B_3$ Wasserstoff oder Alkyl mit 1 bis 4 Kohlentoffatomen, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann; B ein Rest

$-(CH_2)_n-$ , $-O-(CH_2)_n-$ oder $-NH-(CH_2)_n-$,

n = 1 bis 6; R′ ein Rest der Formel

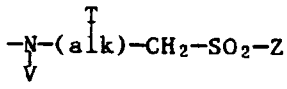
(3a)

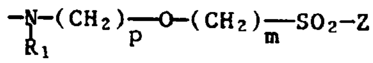
(3b)

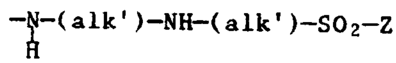
(3c)

oder

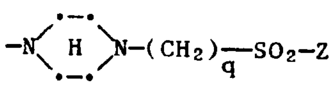
(3d)

ist; Z die unter Formel (1) angegebene Bedeutung hat; alk ein Alkylenrest mit 1 bis 6 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat; V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann; oder ein Rest

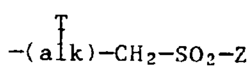
(3e),

worin Z, alk und T die angegebenen Bedeutungen haben; $R_1$ Wasserstoff oder $C_1$-$C_6$-Alkyl, alk′ unabhängig voneinander Polymethylenreste mit 2 bis 6 C-Atomen oder deren verzweigte Isomere; und m = 1 bis 6, p = 1 bis 6 und q = 1 bis 6 ist; und der Benzol- bzw. Naphthalinrest A′ weitere Substituenten enthalten kann.

d) Reaktivfarbstoffe der Formel (1), worin A ein Rest der Formel

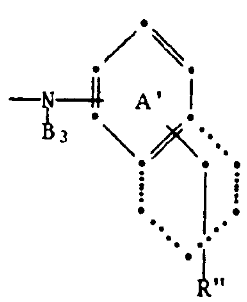
(6),

worin $B_3$ Wasserstoff oder Alkyl mit 1 bis 4 Kohlenstoffatomen, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann; R″ ein Rest der Formel

$-SO_2-Z$ (2)

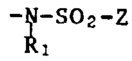 (2a)

oder

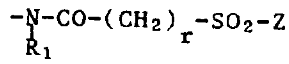 (2b)

ist; Z die unter Formel (1) angegebene Bedeutung hat; $R_1$ Wasserstoff oder $C_1$-$C_6$-Alkyl; und r = 3 bis 5 ist; und der Benzol- bzw. Naphthalinrest A′ weitere Substituenten enthalten kann.

e) Reaktivfarbstoffe gemäss a), worin A ein Rest der Formel

$-NHCH_2CH_2SO_2CH_2CH_2Cl$ (7a)

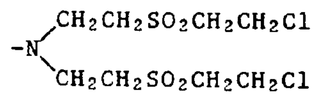 (7b)

$-NHCH_2CH_2OCH_2CH_2SO_2CH_2CH_2Cl$ (7c)

$-NHCH_2CH_2SO_2CH=CH_2$ (7d)

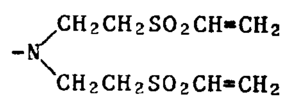 (7e)

$-NHCH_2CH_2OCH_2CH_2SO_2CH=CH_2$ (7f)

$-NHCH_2CH_2NHCH_2CH_2SO_2CH=CH_2$ (7g)

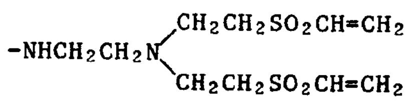 (7h)

oder

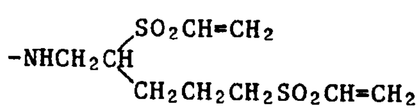 (7i)

ist.

f) Reaktivfarbstoffe gemäss b), worin A ein Rest der Formel

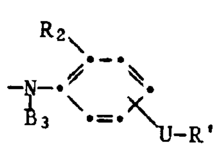 (8)

und $R_2$ Wasserstoff, $C_1$-$C_4$-Alkyl, $C_1$-$C_4$-Alkoxy, Halogen, Hydroxy, Carboxy oder Sulfo ist; und $B_3$, U und R′ die unter b) angegebenen Bedeutungen haben.

Erläuterungen zu a) bis f):

Der Alkylenrest alk ist vorzugsweise Methylen, Aethylen, Methylmethylen, Propylen oder Butylen. Der Substituent T ist als Acyloxyrest insbesondere Acetyloxy, Propionyloxy oder Butyryloxy, und als Alkoxycarbonylrest insbesondere Methoxycarbonyl, Aethoxycarbonyl oder Propyloxycarbonyl. Falls V ein Alkylrest ist, kann dieser Methyl, Aethyl, Propyl, Isopropyl, Butyl, Isobutyl, sec-Butyl oder tert-Butyl sein. Derivate der Carboxy- oder Sulfogruppe sind z.B. Carbamoyl, N-Methyl-, N-Aethyl-, N,N-Dimethyl- und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- und N,N-Diäthylsulfamoyl, Methylsulfonyl, Aethylsulfonyl und Propylsulfonyl. Der Rest $R_1$ ist beispielsweise Methyl, Aethyl, Propyl, Isopropyl, Butyl, Isobutyl, sec-Butyl, tert-Butyl, Pentyl oder Hexyl, oder vorzugsweise Wasserstoff. Die Polymethylenreste alk′ sind vorzugsweise Aethylen, Propylen oder Butylen. Die Indizes m, p und q sind unabhängig voneinander und vorzugsweise 2, 3 oder 4.

Der Rest $B_3$ ist, falls es sich um einen Alkylrest handelt, geradkettig oder verzweigt; er kann weitersubstituiert sein, z.B. durch Halogen, Hydroxy, Cyan, $C_1$-$C_4$-Alkoxy, $C_1$-$C_4$-Alkoxycarbonyl, Carboxy, Sulfamoyl, Sulfo oder Sulfato. Als Beispiele für $B_3$ seien die folgenden Reste genannt: Methyl, Aethyl, Propyl, Isopropyl, Butyl, Isobutyl, sek.-Butyl, tert.-Butyl, Carboxymethyl, β-Carboxyäthyl, B-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hyroxyäthyl, β-Hydroxybutyl, β-Cyanäthyl, Sulfomethyl, β-Sulfoäthyl, Aminosulfonylmethyl und β-Sulfatoäthyl. Vorzugsweise ist $B_3$ Wasserstoff. Das mit A′ bezeichnete Ringsystem bedeutet einen Benzol- oder Naphthalinkern.

Als weitere Substituenten am Benzol- bzw. Naphthalinrest A′ kommen die gleichen in Betracht, die weiter oben bei der Erläuterung des Restes D genannt sind.

Der Rest B enthält 1 bis 6, vorzugsweise 1 bis 4 Kohlenstoffatome; Beispiele für B sind: Methylen, Aethylen, Propylen, Butylen, Methylenoxy, Aethylenoxy, Propylenoxy, Butylenoxy und Aethylenamino. Falls B einen Rest

$$-O-(CH_2)_n- \quad \text{oder} \quad -NH-(CH_2)-$$

darstellt, ist B durch das Sauerstoffatom bzw. die -NH-Gruppe an das Ringsystem A′ gebunden.

Der Index r ist vorzugsweise = 3.

Der Substituent $R_2$ ist z.B. Wasserstoff, Methyl, Aethyl, Propyl, Isopropyl, Butyl, Isobutyl, sek.-Butyl, tert.-Butyl, Methoxy, Aethoxy, Propyloxy, Isopropyloxy, Butyloxy, Isobutyloxy, sek.-Butyloxy, tert-Butyloxy, Fluor, Chlor, Brom, Hydroxy, Carboxy oder Sulfo.

Bevorzugt sind weiterhin:

g) Reaktivfarbstoffe der Formel (1), worin $B_1$ und $B_2$ Wasserstoff und Q Sulfo ist.

h) Reaktivfarbstoffe der Formel (1), worin X und Y Chloratome sind.

i) Reaktivfarbstoffe der Formel (1), worin R Wasserstoff, Methyl oder Aethyl ist.

j) Reaktivfarbstoffe der Formel (1), worin D der Rest eines Mono-oder Disazofarbstoffes ist.

k) Reaktivfarbstoffe der Formel (1), worin D der Rest eines Metallkomplexazo- oder Formazanfarbstoffes ist.

l) Reaktivfarbstoffe der Formel (1), worin D der Rest eines Anthrachinonfarbstoffes ist.

m) Reaktivfarbstoffe der Formel (1), worin D der Rest eines Phthalocyaninfarbstoffes ist und weder X noch Y Fluor bedeutet.

n) Reaktivfarbstoffe der Formel (1), worin D der Rest eines Dioxazinfarbstoffes ist.

o) Reaktivfarbstoffe gemäss j), worin D ein Mono- oder Disazofarbstoffrest der Formel

$$D_1-N=N-(M-N=N)_s-K- \qquad (9a),$$

$$-D_1-N=N-(M-N=N)_s-K \qquad (9b),$$

oder

$$-D_1-N=N-(M-N=N)_s-K- \qquad (9c),$$

oder eines davon abgeleiteten Metallkomplexes; $D_1$ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon, 6-Hydroxypyridon-(2)-oder Acetessigsäurearylamid-Reihe ist, wobei $D_1$, M und K bei Azofarbstoffen übliche Substituenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; s = 0 oder 1 ist; und $D_1$, M und K zusammen mindestens zwei Sulfogruppen, vorzugsweise drei oder vier Sulfogruppen, enthalten.

p) Reaktivfarbstoffe gemäss j), worin D ein Disazofarbstoffrest der Formel

$$D_1\text{-N=N-K-N=N-}D_2\text{-} \quad (10a),$$

oder

$$\text{-}D_1\text{-N=N-K-N=N-}D_2\text{-} \quad (10b),$$

$D_1$ und $D_2$ unabhängig voneinander der Rest einer Diazokomponente der Benzol- oder Naphthalinreihe, und K der Rest einer Kupplungskomponente der Naphthalinreihe ist; wobei $D_1$, $D_2$ und K bei Azofarbstoffen übliche Substituenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; und $D_1$, $D_2$ und K zusammen mindestens zwei Sulfogruppen, vorzugsweise drei oder vier Sulfogruppen enthalten.

q) Reaktivfarbstoffe gemäss k), worin D der Rest eines 1:1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

r) Reaktivfarbstoffe gemäss k), worin D der Rest eines Formazanfarbstoffes der Formel

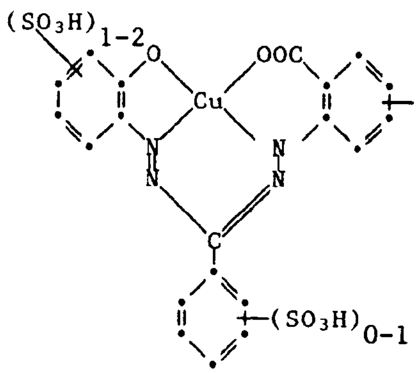

(11a) oder

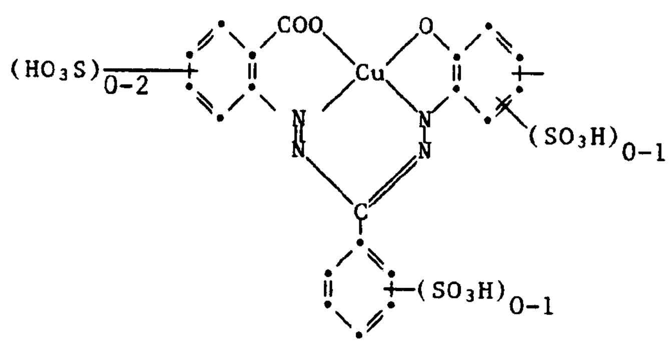

(11b),

ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.

s) Reaktivfarbstoffe gemäss 1), worin D der Rest eines Anthrachinonfarbstoffes der Formel

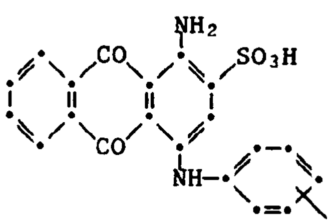

(12)

ist; wobei der Anthrachinonkern durch eine weitere Sulfogruppe, und der Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 stark wasserlöslichmachende Gruppen enthält.

t) Reaktivfarbstoffe gemäss m), worin D der Rest eines Phthalocyaninfarbstoffes der Formel

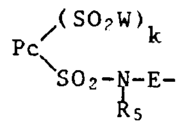

(13),

Pc der Rest eines Kupfer- oder Nickelphthalocyanins; W -OH und/oder $-NR_3R_4$; $R_3$ und $R_4$ unabhängig voneinander Wasserstoff oder Alkyl mit 1 bis 4 Kohlenstoffatomen, das durch Hydroxy oder Sulfo substituiert sein kann; $R_5$ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Aethylenrest; und k = 1 bis 3 ist.

u) Reaktivfarbstoffe gemäss n), worin D der Rest eines Dioxazinfarbstoffes der Formel

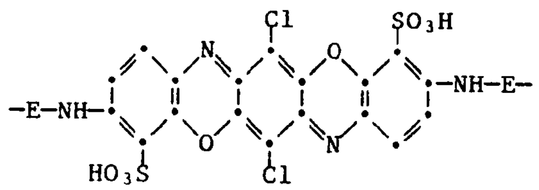

(14a)

oder

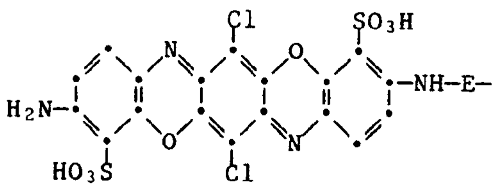

(14b)

ist, worin E ein Phenylenrest, der durch Alkyl mit 1 bis 4 C-Atomen, Halogen, Carboxy oder Sulfo substituiert sein kann; oder ein Alkylenrest mit 2 bis 6 C-Atomen ist; und die äusseren Benzolringe in den Formeln (14a) und (14b) durch Alkyl mit 1 bis 4 C-Atomen, Alkoxy mit 1 bis 4 C-Atomen, Acethylamino, Nitro, Halogen, Carboxy oder Sulfo weitersubstituiert sein können.

Bevorzugt sind ferner Reaktivfarbstoffe gemäss o) oder p), und r) bis u) der nachfolgenden Formeln (11b'), (12a), (13a), (14b') und (15) bis (30):

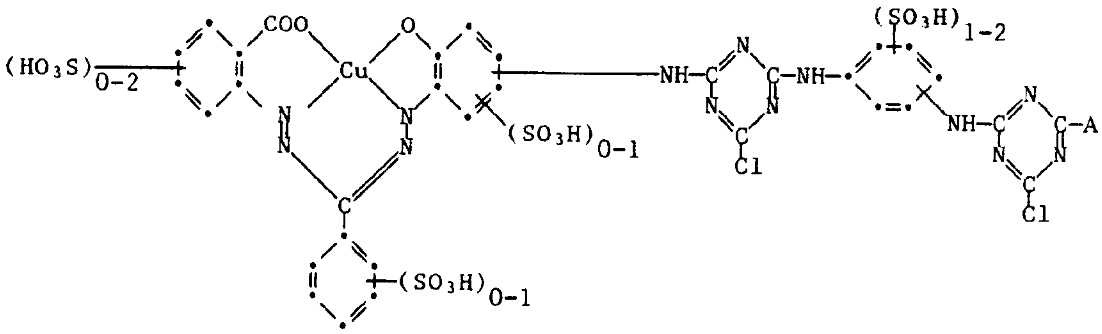

(11b'),

worin A ein Rest der Formel (7a) bis (7i) ist.

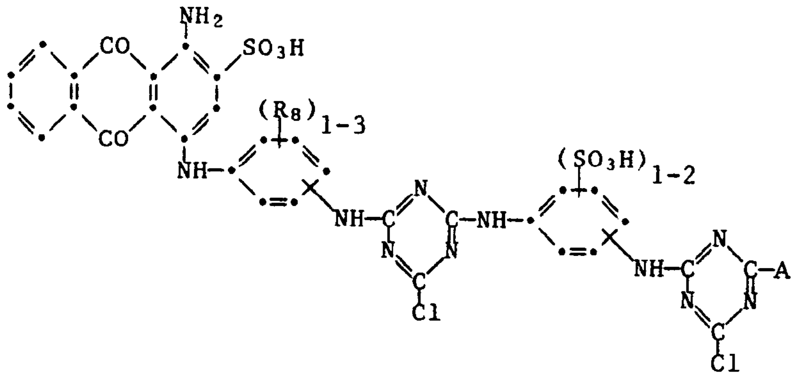

(12a),

worin $R_8$ für 1 bis 3 Substituenten aus der Gruppe Wasserstoff, $C_1$-$C_4$-Alkyl, $C_1$-$C_4$-Alkoxy, Halogen, Carboxy und Sulfo steht, und A ein Rest der Formel (7a) bis (7i) ist.

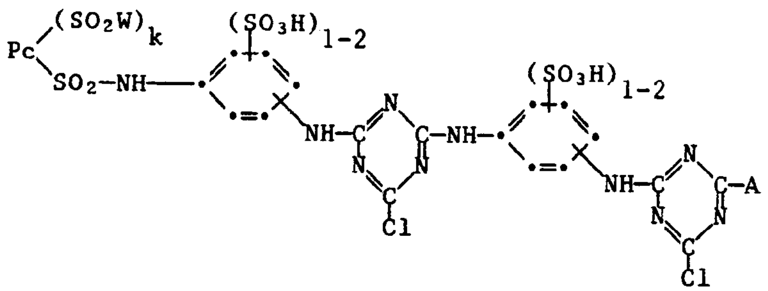

(13a),

worin Pc der Rest eines Kupfer- oder Nickelphthalocyanins; W -OH und/oder $-NR_3R_4$; $R_3$ und $R_4$ unabhängig voneinander Wasserstoff oder Alkyl mit 1 bis 4 Kohlenstoffatomen, das durch Hydroxy oder Sulfo substituiert sein kann; k = 1 bis 3, und A ein Rest der Formel (7a) bis (7i) ist.

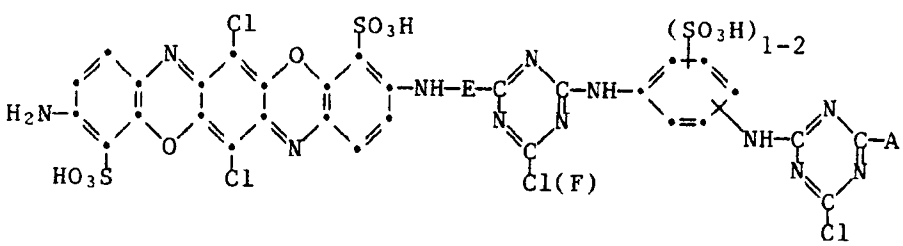

(14b'),

worin E eine direkte Bindung oder ein $-(CH_2)_2-NH-$ oder $-(CH_2)_3-NH-$ Rest und A ein Rest der Formel (7a) bis (7i) ist.

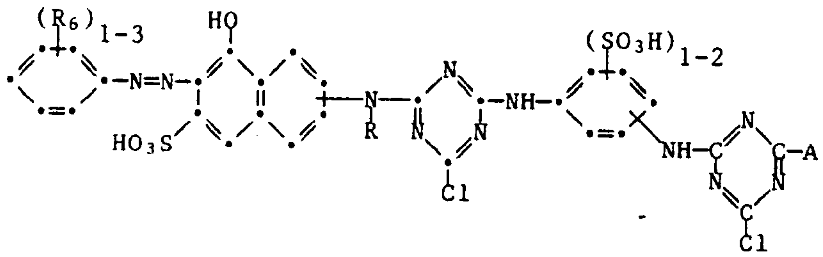

(15),

worin $R_6$ für 1 bis 3 Substituenten aus der Gruppe $C_1$-$C_4$-Alkyl, $C_1$-$C_4$-Alkoxy, Halogen, Carboxy und Sulfo steht; R die unter Formel (1) angegebene Bedeutung hat; und A ein Rest der Formel (7a) bis (7i) ist.

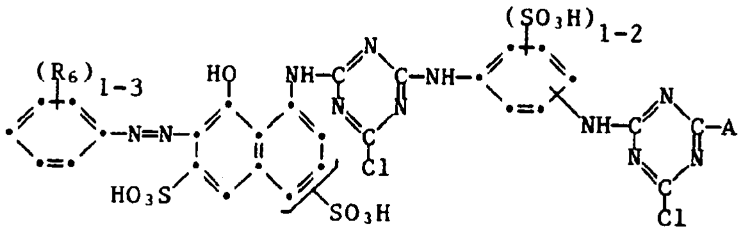

(16)

worin $R_6$ für 1 bis 3 Substituenten aus der Gruppe $C_1$-$C_4$-Alkyl, $C_1$-$C_4$-Alkoxy, Halogen, Carboxy und Sulfo steht; und A ein Rest der Formel (7a) bis (7i) ist.

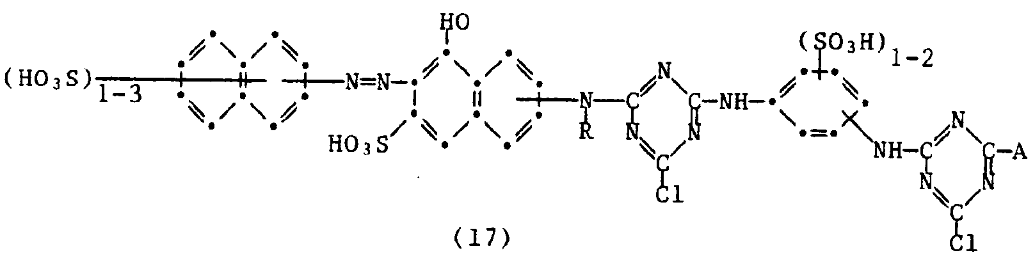

(17)

worin R die unter Formel (1) angegebene Bedeutung hat; und A ein Rest der Formel (7a) bis (7i) ist.

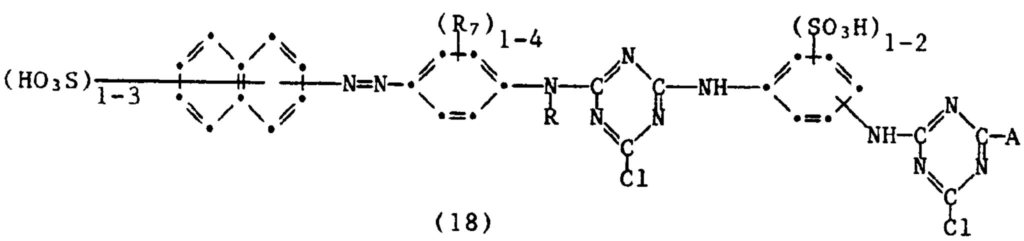

(18)

worin $R_7$ für 1 bis 4 Substituenten aus der Gruppe Wasserstoff, Halogen, Nitro, Cyan, Trifluormethyl, Sulfamoyl, Carbamoyl, $C_1$-$C_4$-Alkyl, $C_1$-$C_4$-Alkoxy, Amino, Acetylamino, Ureido, Hydroxy, Carboxy, Sulfomethyl und Sulfo unabhängig voneinander, steht; R die unter Formel (1) angegebene Bedeutung hat; und A ein Rest der Formel (7a) bis (7i) ist.

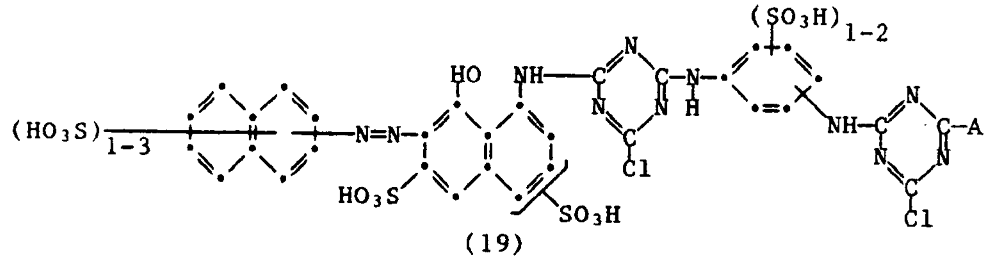

(19)

worin A ein Rest der Formel (7a) bis (7i) ist.

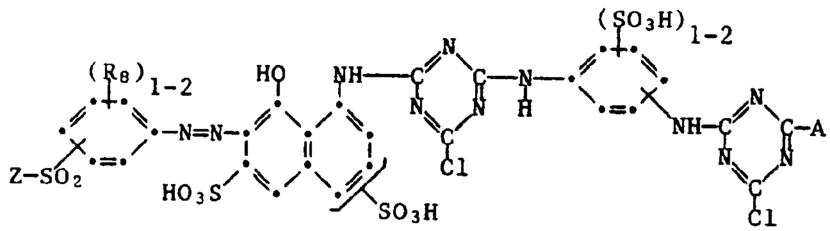

(20)

worin $R_8$ für 1 bis 2 Substituenten aus der Gruppe Wasserstoff, $C_1$-$C_4$-Alkyl, $C_1$-$C_4$-Alkoxy, Halogen, Carboxy und Sulfo steht; Z β-Sulfatoäthyl, β-Thiosulfatoäthyl, β-Phosphatoäthyl, β-Acyloxyäthyl, β-Halogenäthyl oder Vinyl; und A ein Rest der Formel (7a) bis (7i) ist.

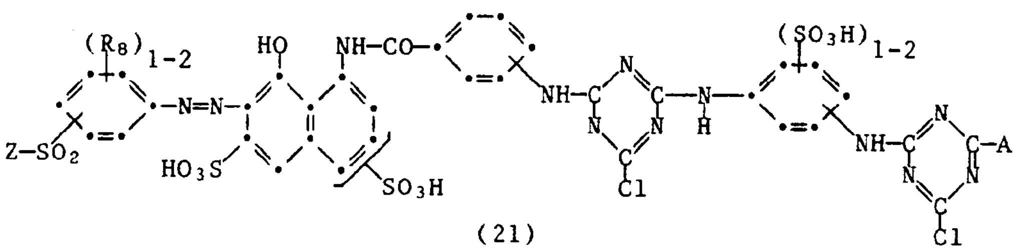

(21)

worin $R_8$ für 1 bis 2 Substituenten aus der Gruppe Wasserstoff, $C_1$-$C_4$-Alkyl, $C_1$-$C_4$-Alkoxy, Halogen, Carboxy und Sulfo steht; Z β-Sulfatoäthyl, β-Thiosulfatoäthyl, β-Phosphatoäthyl, β-Acyloxyäthyl, β-Halogenäthyl oder Vinyl; und A ein Rest der Formel (7a) bis (7i) ist.

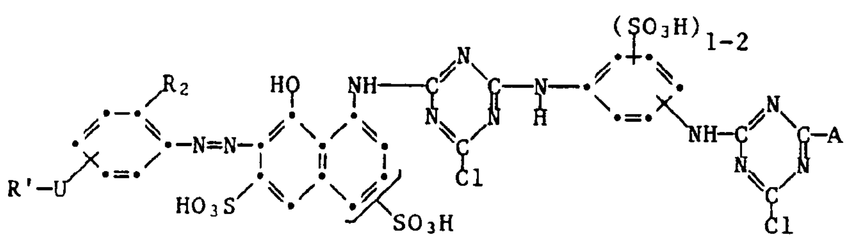

(22),

worin $R_2$ Wasserstoff, $C_1$-$C_4$-Alkyl, $C_1$-$C_4$-Alkoxy, Halogen, Hydroxy, Carboxy oder Sulfo; U -CO- oder -$SO_2$-; R′ ein Rest der Formel (3a) bis (3d); und A ein Rest der Formel (7a) bis (7i) ist.

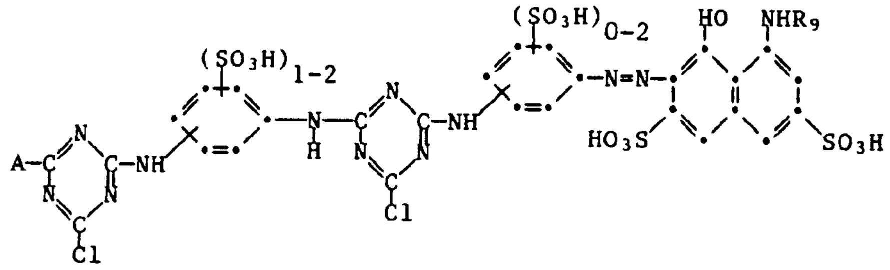

(23),

worin $R_9$ $C_1$-$C_4$-Alkanoyl oder Benzoyl; und A ein Rest der Formel (7a) bis (7i) ist.

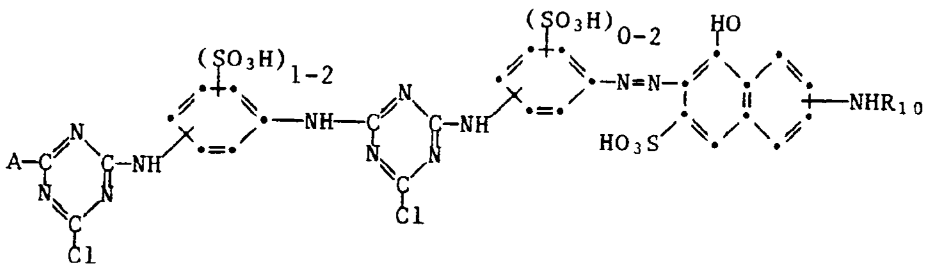

(24),

worin $R_{10}$ $C_1$-$C_4$-Alkanoyl oder Benzoyl; und A ein Rest der Formel (7a) bis (7i) ist.

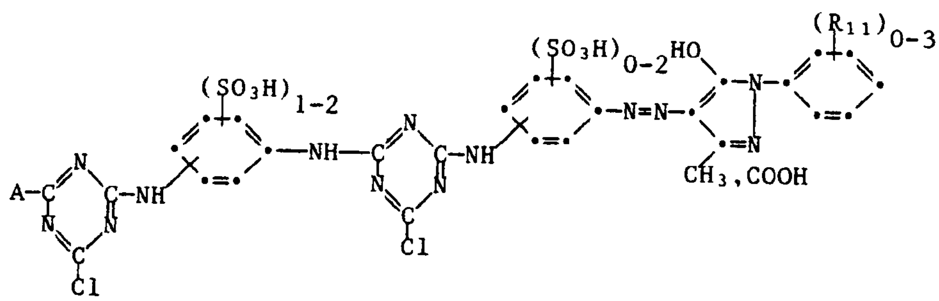

(25),

worin $R_{11}$ für 0 bis 3 Substituenten aus der Gruppe $C_1$-$C_4$-Alkyl, $C_1$-$C_4$-Alkoxy, Halogen, Carboxy und Sulfo steht; und A ein Rest der Formel (7a) bis (7i) ist.

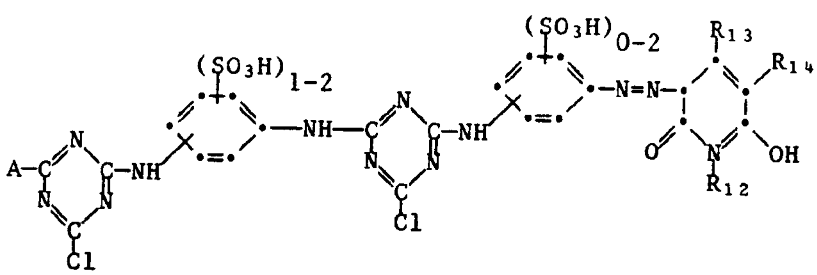

(26),

worin $R_{12}$ und $R_{13}$ unabhängig voneinander Wasserstoff, $C_1$-$C_4$-Alkyl oder Phenyl, und $R_{14}$ Wasserstoff, Cyano, Carbamoyl oder Sulfomethyl ist; und A ein Rest der Formel (7a) bis (7i) ist.

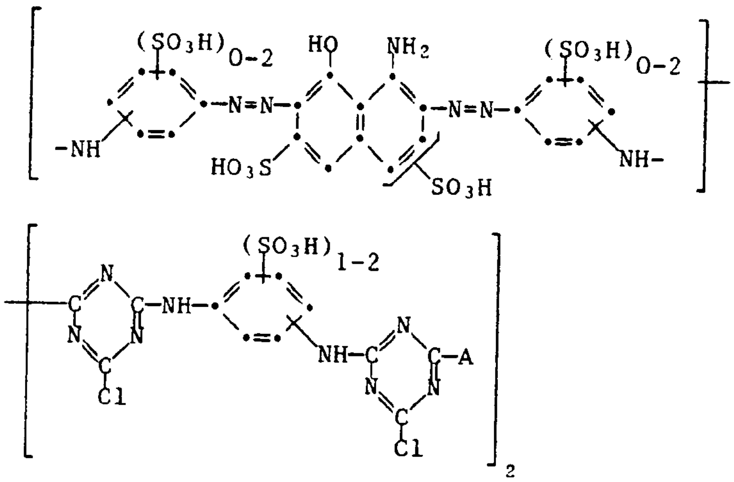

(27),

worin A ein Rest der Formel (7a) bis (7i) ist.

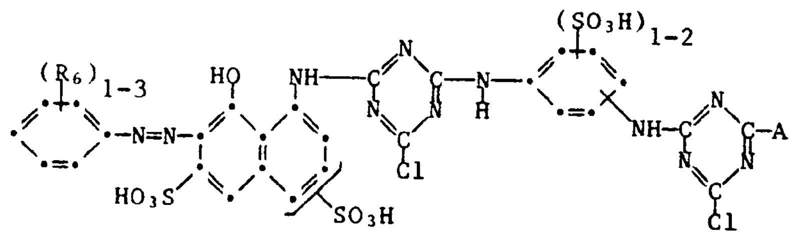

(28),

worin $R_6$ für 1 bis 3 Substituenten aus der Gruppe $C_1$-$C_4$-Alkyl, $C_1$-$C_4$-Alkoxy, Halogen, Carboxy und Sulfo steht; und A ein Rest der Formel (4), (5), (6) oder (8) ist.

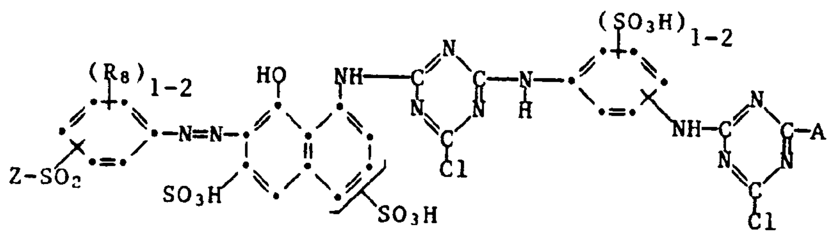

(29),

worin $R_8$ für 1 bis 2 Substituenten aus der Gruppe Wasserstoff, $C_1$-$C_4$-Alkyl, $C_1$-$C_4$-Alkoxy, Halogen, Carboxy und Sulfo steht; Z β-Sulfatoäthyl, β-Thiosulfatoäthyl, β-Phosphatoäthyl, β-Acyloxyäthyl, β-Halogenäthyl oder Vinyl; und A ein Rest der Formel (4), (5), (6) oder (8) ist.

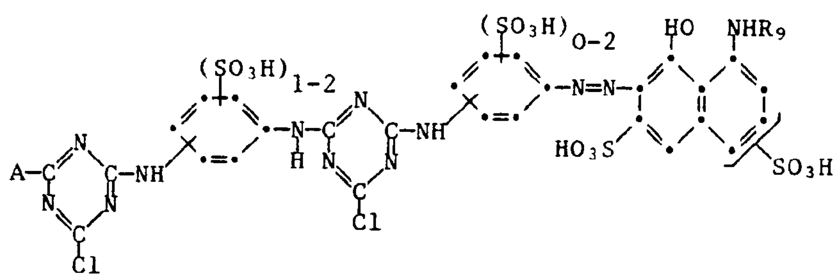

(30)

worin $R_9$ $C_1$-$C_4$-Alkanoyl oder Benzoyl; und A ein Rest der Formel (4), (5), (6) oder (8) ist.

Bevorzugt sind ausserdem Schwermetallkomplexe von Reaktivfarbstoffen der Formel (1); als komplexbildende Schwermetalle kommen vor allem Kupfer, Nickel, Kobalt oder Chrom in Betracht.

Bevorzugt sind insbesondere Reaktivfarbstoffe der Formel (1), worin Z die β-Sulfatoäthyl-, β-Chloräthyl- oder Vinylgruppe ist; oder worin X Fluor oder Chlor ist. In Betracht zu ziehen sind insbesondere auch Kombinationen von Merkmalen gemäss der vorhergehenden Beschreibung, sofern anwendbar.

Man erhält die Reaktivfarbstoffe der Formel (1), indem man einen organischen Farbstoff der Formel

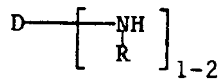

(31)

oder ein Farbstoffvorprodukt, mindestens zwei Aequivalente eines s-Triazins der Formel

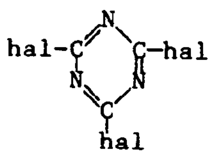

(32)

mindestens ein Aequivalent eines Diamins der Formel

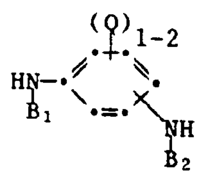

(33)

und mindestens ein Aequivalent eines Amins der Formel

H - A (34)

in beliebiger Folge miteinander umsetzt, wobei D, R, $B_1$, $B_2$, Q und A die unter Formel (1) angegebenen Bedeutungen haben, und hal ein Halogenatom oder eine der unter Formel (1) für X und Y definierten Gruppen ist, oder, im Falle der Verwendung von Farbstoffvorprodukten, die erhaltenen Zwischenprodukte in die gewünschten Monohalogentriazinfarbstoffe überführt und gegebenenfalls eine weitere Umwandlungsreaktion anschliesst.

Das molare Verhältnis der Ausgangsstoffe muss der Zusammensetzung des Endprodukts entsprechend gewählt werden, je nachdem ob eine oder zwei Aminogruppen -N(R)H in der Verbindung der Formel (31) vorhanden sind.

Gegebenenfalls wird an das erfindungsgemässe Verfahren eine weitere Umwandlungsreaktion angeschlossen. Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Ein wichtiges Verfahren ist dadurch gekennzeichnet, dass man einen Farbstoff der Formel

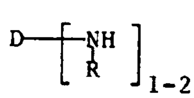

(31)

zunächst mit einem s-Triazin der Formel

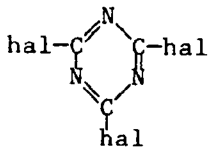

(32)

kondensiert, und die erhaltene Verbindung der Formel

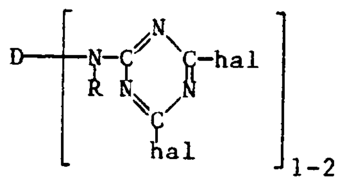

(35)

mit einem Diamin der Formel

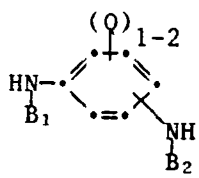

(33)

kondensiert, anschliessend erneut mit einem s-Triazin der Formel (32) kondensiert, und zuletzt mit einem Amin der Formel

H - A (34)

kondensiert.

Nach einem abgeänderten Verfahren können Reaktivfarbstoffe der Formel (1) hergestellt werden, indem man eine Komponente dieses Farbstoffes, die einen Rest der Formel

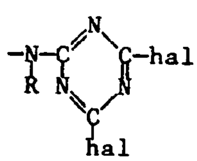

(36)

enthält, worin R und hal die oben angegebenen Bedeutungen haben, mit einer zur Herstellung des Farbstoffs benötigten zweiten Komponente, die gegebenenfalls einen Rest der Formel (36) enthält, umsetzt, und den so erhaltenen Farbstoff der Formel

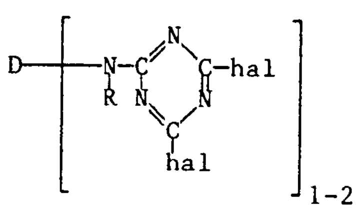

(35)

mit einem Diamin der Formel (33), einem weiteren s-Triazin der Formel (32) und einem Amin der Formel (34) umsetzt.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor

mit einem Halogentriazin kondensiert wird. Welche Reaktion z.B. bei der Herstellung eines sekundären Kondensationsproduktes aus einer Verbindung der Formel (33) dem Triazin der Formel (32) und dem organischen Farbstoff der Formel (31) oder einem Vorprodukt zweckmässigerweise zuerst ausgeführt wird, die des Triazins mit der Verbindung der Formel (33) oder mit dem organischen Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin Z ein Rest $HO-CH_2CH_2$-ist, herstellen und das Zwischenprodukt vor oder nach der Acylierung mit Schwefelsäure umsetzen, so dass die Hydroxygruppe in die Sulfatogruppe übergeführt wird; oder man verwendet einen analogen Farbstoff, worin Z die Gruppe $H_2C=CH$- ist, und lagert an das Zwischenprodukt Thioschwefelsäure an, wobei ein Rest $HO_3SS-CH_2CH_2$-entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen Restes für Z in eine Verbindung der Formel (1) oder ein Zwischenprodukt anstelle eines Halogenatoms oder der Sulfatogruppe, beispielsweise einer Thiosulfato- oder Phosphatogruppe, erfolgt in an sich bekannter Weise. Der Weg der Herstellung über eine Zwischenstufe des Reaktivrestes geht in vielen Fällen einheitlich und vollständig.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen.

Gegebenenfalls ist eine Verfahrensvariante anwendbar, bei welcher man von Farbstoffvorprodukten ausgeht. Diese Variante ist geeignet zur Herstellung von Reaktivfarbstoffen der Formel (1), worin D der Rest eines aus zwei oder mehr als zwei Komponenten zusammengesetzten Farbstoffes ist, beispielsweise eines Monoazo-, Disazo-, Trisazo-, Metallkomplexazo-, Formazan- oder Azomethinfarbstoffes.

Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Bevorzugt sind Reaktivfarbstoffe der Formel (1), worin D der Rest eines Mono- oder Disazofarbstoffes oder eines Metallkomplexazofarbstoffes ist. In diesem Falle sind die Reaktivreste der Formel

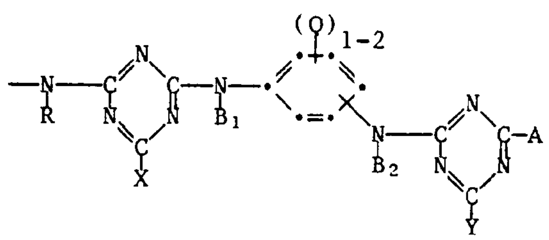

(1a),

an die Dioazo- und/oder Kupplungskomponenten gebunden. Falls in einem Reaktivfarbstoff der Formel (1) zwei Reste der Formel (1a) enthalten sind, ist vorzugsweise je ein Rest der Formel (1a) an eine Komponente, d.h. an eine Diazokomponente oder Kupplungskomponente, gebunden. Die Reaktivfarbstoffe haben somit z.B. die Formeln

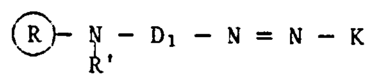

(37)

$$D_1 - N = N - K - \underset{R''}{N} - (R) \qquad (38)$$

und

$$(R) - \underset{R'}{N} - D_1 - N = N - K - \underset{R''}{N} - (R) \qquad (39)$$

worin R' und R" unabhängig voneinander die gleiche Bedeutung haben wie $B_1$ in der Formel (1), $D_1$ der Rest einer Diazokomponente, und K der Rest einer Kupplungskomponente ist, und Ⓡ einen Reaktivrest der Formel (1a) bedeutet.

Falls man von Farbstoffvorprodukten ausgeht, gelangt man zu den Reaktivfarbstoffen der Formel (1), indem man eine Komponente des Farbstoffes der Formel (31), die eine Gruppe -N(R)H enthält, und ein Triazin der Formel (32) kondensiert, vorher oder nachher mit einer Verbindung der Formel (33) kondensiert, und mit der anderen Komponente des Farbstoffes der Formel (31) umsetzt. Bei der Herstellung der bevorzugten Azofarbstoffe müssen die Diazokomponenten und die Kupplungskomponenten zusammen mindestens eine Aminogruppe -N(R)H, und können weitere Aminogruppen enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw. Nitrogruppe vor der Kondensation mit dem Triazin der Formel (32) durch Verseifen bzw. Reduzieren in die $H_2N$-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho-ortho'-Stellung zur Azobrücke komplexbildende Gruppen, z.B. Hydroxy-oder Carboxygruppen, enthalten, vor oder gegebenenfalls auch nach der Kondensation mit dem Triazin der Formel (32) mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxydative Kupferung in Betracht.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Organische Farbstoffe der Formel (31)

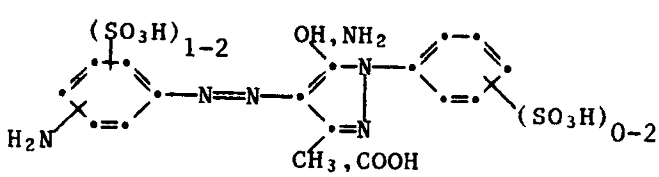

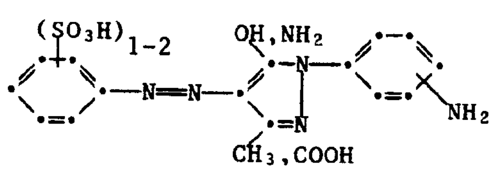

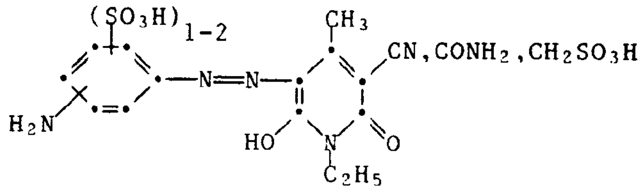

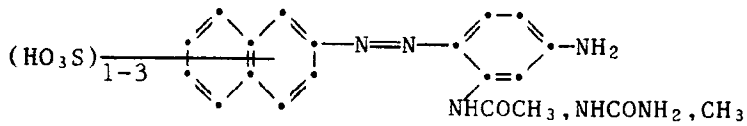

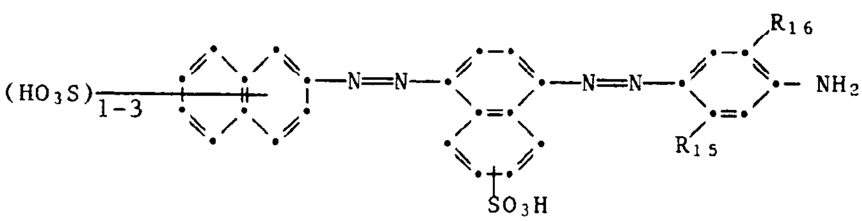

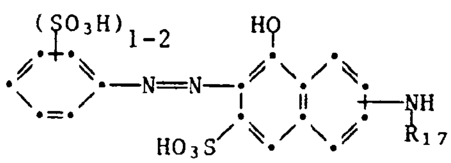

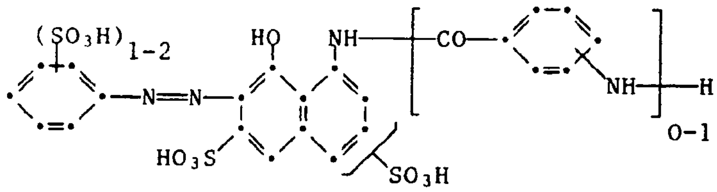

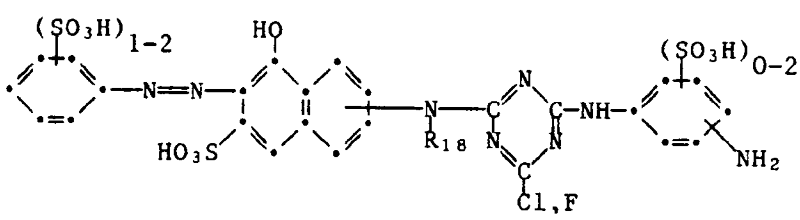

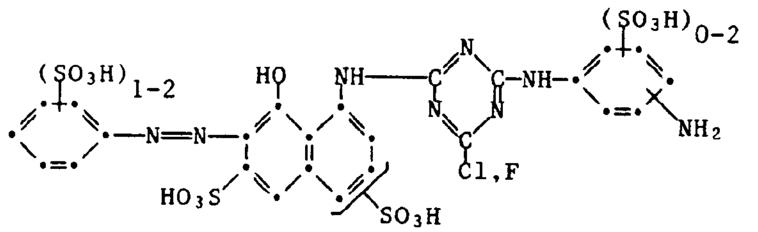

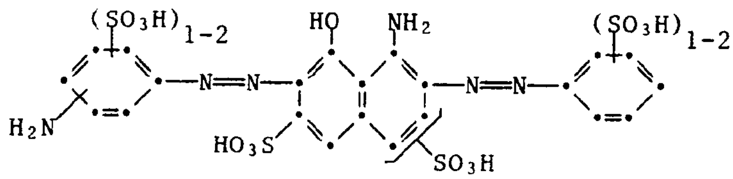

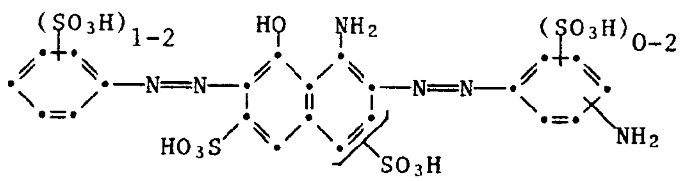

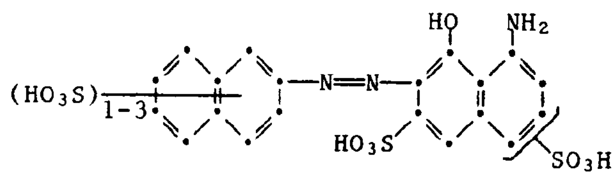

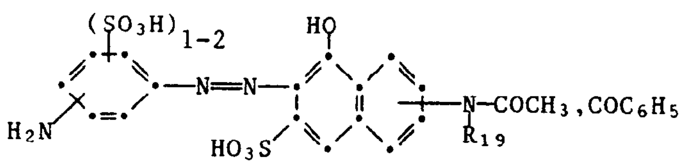

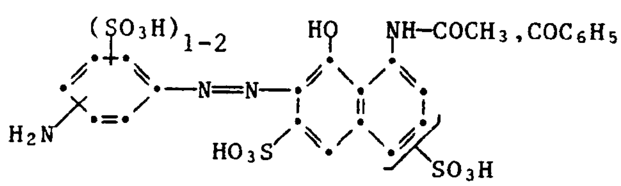

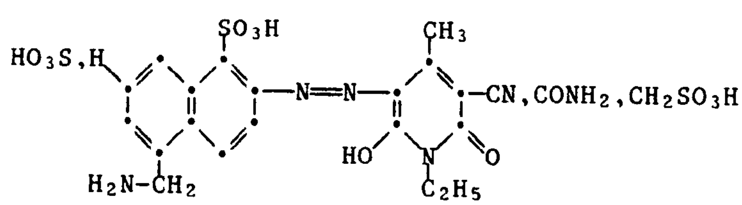

Metallkomplexe von Farbstoffen der Formeln:

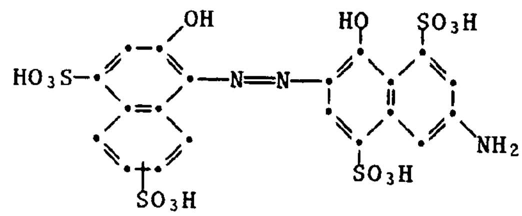

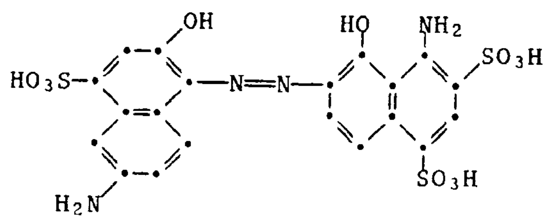

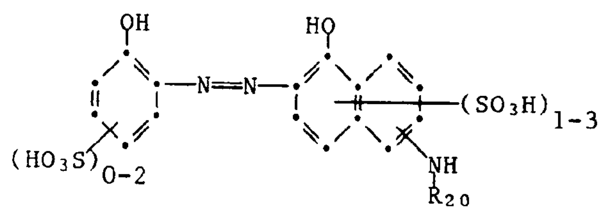

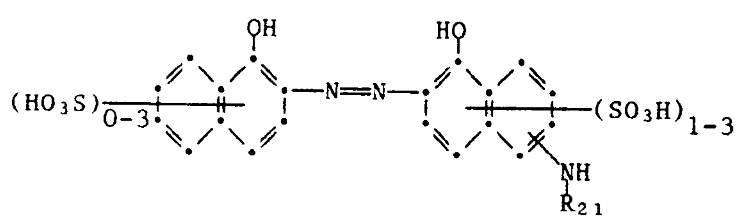

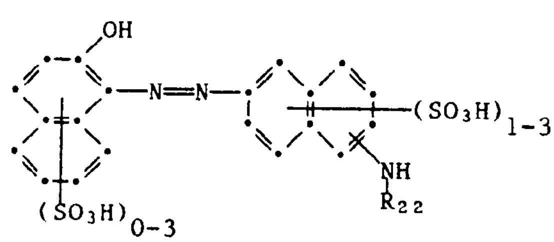

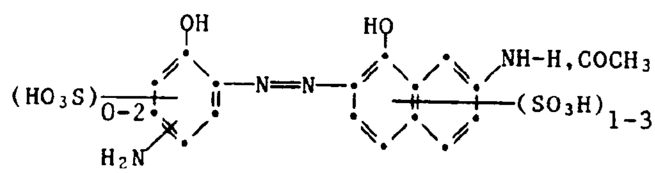

Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

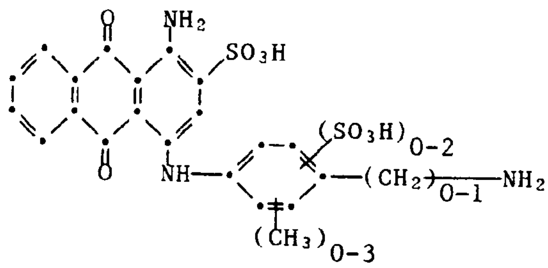

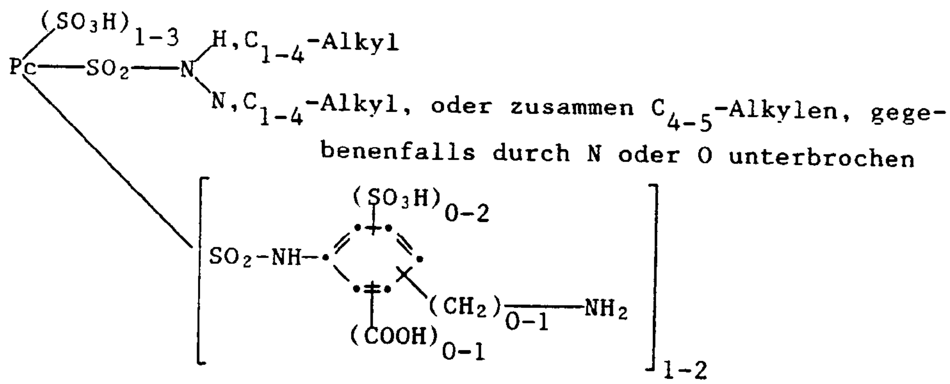

In dieser Formel steht Pc für den Cu- oder Ni-Phthalocyaninrest, die Gesamtzahl der Substituenten am Pc-Gerüst ist 4.

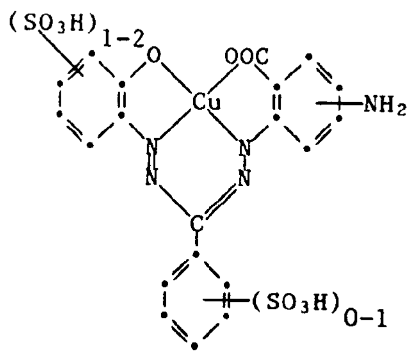

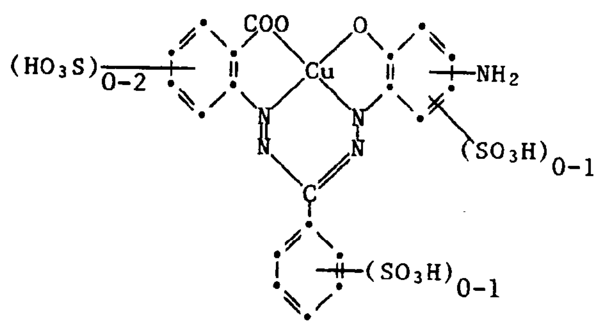

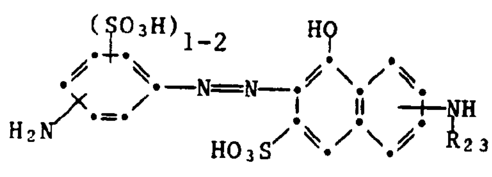

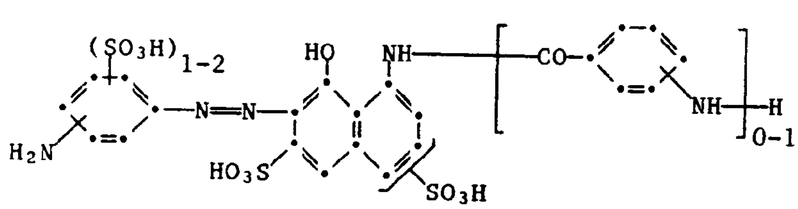

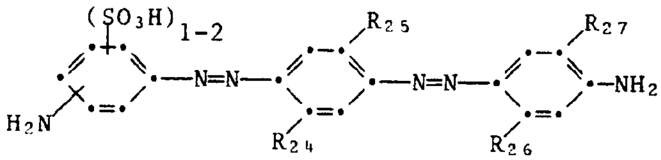

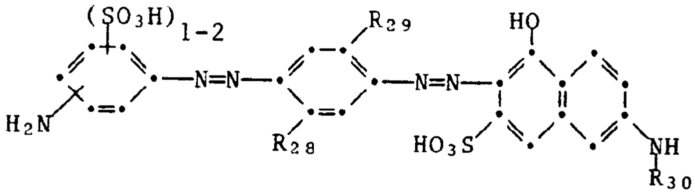

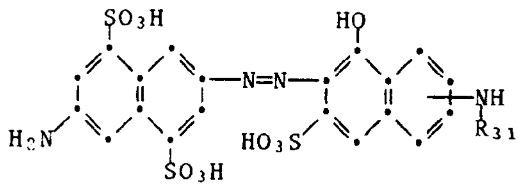

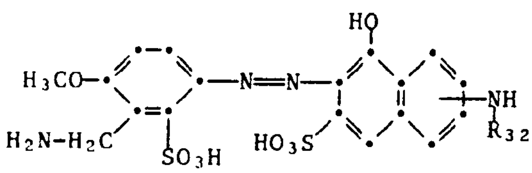

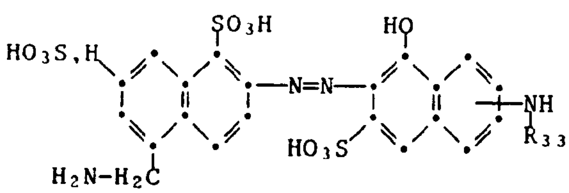

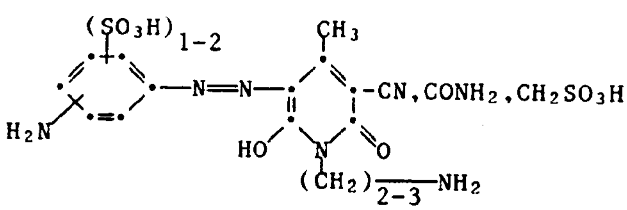

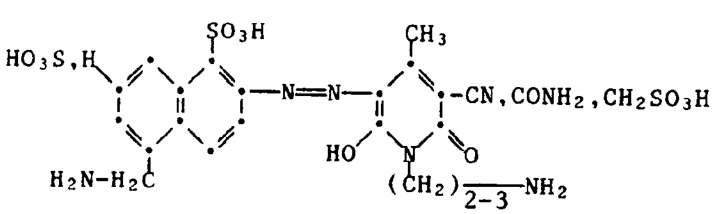

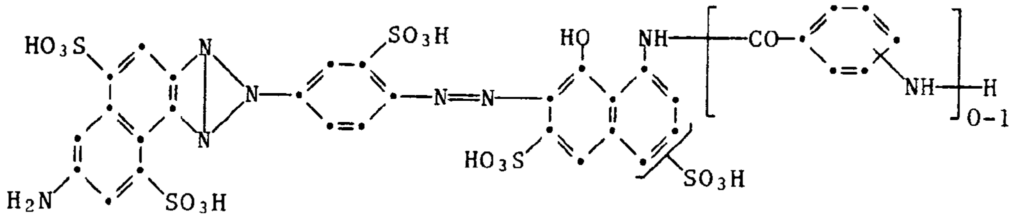

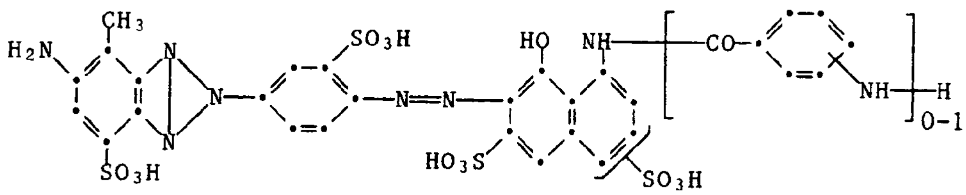

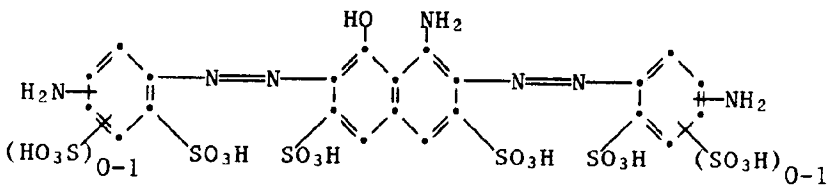

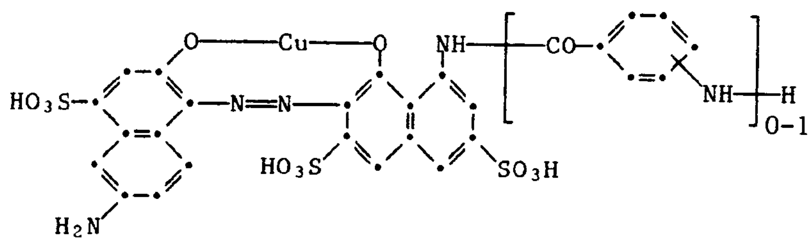

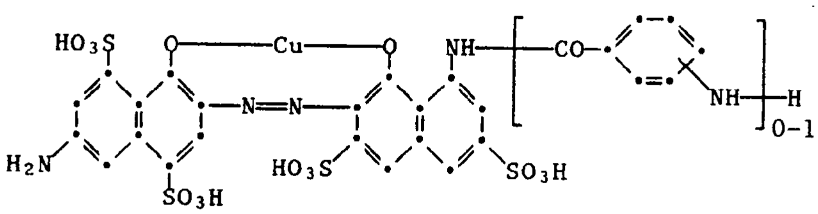

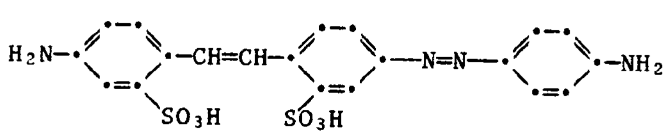

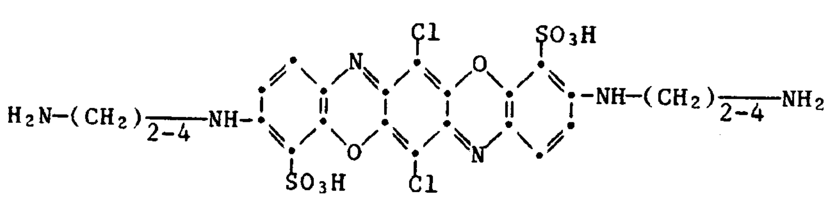

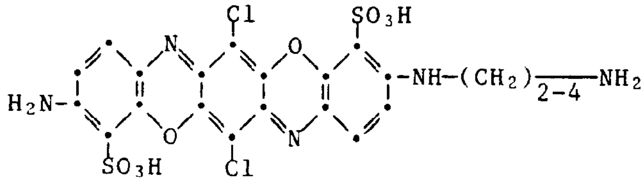

In den oben aufgeführten Formeln bedeuten die Reste $R_{17}$ bis $R_{23}$ und $R_{30}$ bis $R_{33}$ Wasserstoff oder $C_1$-$C_4$-Alkyl, und die Reste $R_{15}$, $R_{16}$ und $R_{24}$ bis $R_{29}$ Wasserstoff, $C_1$-$C_4$-Alkyl, $C_1$-$C_4$-Alkoxy, $C_1$-$C_4$-Alkanoylamino, Ureido oder Halogen, wobei die Reste $R_{15}$, $R_{16}$ ... etc., die zu ein und derselben Formel gehören, voneinander unabhängig sind. Vorzugsweise bedeuten die Reste $R_{17}$ bis $R_{23}$ und $R_{30}$ bis $R_{33}$ Wasserstoff, Methyl oder Aethyl, und die Reste $R_{15}$, $R_{16}$ und $R_{24}$ bis $R_{29}$ Wasserstoff, Methyl, Aethyl, Methoxy, Aethoxy, Acetylamino, Ureido oder Chlor. Die aromatischen Ringe in den obigen Farbstoffen können weitersubstituiert sein, die Benzolringe vor allem durch Methyl, Aethyl, Methoxy, Aethoxy, Methylsulfonyl, Aethylsulfonyl, Carboxy, Acetylamino oder Chlor, und die Naphthalinringe insbesondere durch Methoxy, Carboxy, Acetylamino, Nitro oder Chlor; gleiches gilt für die Anthrachinone, Dioxazine usw. Vorzugsweise sind die Benzolringe nicht weitersubstituiert.

Als Diazo- und Kupplungskomponenten seien einzeln genannt:

Diazokomponenten:

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothio-p-toluidinsulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder 8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazobenzol-3,4′-disulfonsäure, 3-Methoxy-4-amino-6-methylazobenzol-2′,4′-disulfonsäure, 3-Methoxy-4-amino-6-methylazobenzol-2′,5′-disulfonsäure, 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4′-Diaminostilben, 4,4′-Diaminodiphenylmethan, 4,4′-Diaminobiphenyl (Benzidin), 3,3′-Dimethylbenzidin, 3,3′-Dimethoxybenzidin, 3,3′- Dichlorbenzidin, 3,3′-Dicarboxybenzidin, 3,3′-Dicarboxymethoxybenzidin, 2,2′-Dimethylbenzidin, 4,2′-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3′-bzw. 4′-Aminobenzoylamino)-1-aminobenzol-6-sulfonsäure, 1-(4′-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4′-Diaminodiphenyloxid, 4,4′-Diamino-diphenylharnstoff-2,2′-disulfonsäure, 4,4′-Diaminodiphenyloxyäthan-2,2′-disulfonsäure, 4,4′-Diaminostilben-2,2′-disulfonsäure,4,4′-Diaminodiphenyläthan-2,2′-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Kupplungskomponenten

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6-oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6-bzw. -4,6-disulfonsäure, 1-Acetylamino-8-hydroxynaphthalin-3,6-bzw. -4,6-disulfonsäure, 1-(4′-Aminobenzoylamino)-8-hydroxynaphthalin-3,6-bzw. -4,6-disulfonsäure, 1-(4′-Nitrobenzoylamino)-8-hydroxynaphthalin-3,6- bzw. -4,6-disulfonsäure, 1-(3′-Aminobenzoylamino)-8-hydroxynaphthalin-3,6-bzw. -4,6-disulfonsäure, 1-(3′-Nitrobenzoylamino)-8-hydroxynaphthalin-3,6-bzw. -4,6-disulfonsäure, 2-(4′-Amino-3′-sulfophenylamino)-5-hydroxynaphthalin-7-sulfonsäure, 3-Methylpyrazolon-(5), 1-Phenyl-3-methyl-5-pyrazolon, 1-(4′-Sulfophenyl)-3-methyl-5-pyrazolon, 1-(4′-Sulfophenyl)-pyrazolon-(5)-3-carbonsäure, 1-(3′-Aminophenyl)-3-methyl-5-pyrazolon, 1-(2′,5′-Disulfophenyl)-3-methyl-5-pyrazolon, 1-(2′-Methyl-4′-sulfophenyl)-5-pyrazolon-3-carbonsäure, 1-(4′,8′-Disulfonaphthyl-[2′])-3-methyl-5-pyrazolon, 1-(5′,7′-Disulfonaphthyl-[2′])-3-methyl-5-pyrazolon, 1-(2′,5′-Dichlor-4′-sulfophenyl)-3-methyl-5-pyrazolon, 3-Aminocarbonyl-4-methyl-6-hydroxypyridion-(2), 1-Aethyl-3-cyan- oder -3-chlor-4-methyl-6-hydroxypyridon-(2), 1-Aethyl-3-sulfomethyl-4-methyl-6-hydroxypyridon-(2), 2,4,6-Triamino-3-cyanpyridin, 2-(3′-Sulfophenylamino)-4,6-diamino-3-cyanpyridin, 2-(2′-Hydroxyäthylamino)-3-cyan-4-methyl-6-aminopyridin, 2,6-Bis-(2′-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4′-sulfophenylazo)-naphthalin-3,6-disulfonsäure, 1-Amino-8-hydroxy-2-(2′,5′-disulfophenylazo)-naphthalin-3,6-disulfonsäure, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-N,N-di-β-hydroxyäthylaminobenzol, 1-Amino-3-N,N-di-β-sulfatoäthylaminobenzol, 1-Amino-3-N,N-di-β-hydroxyäthylamino-4-methoxybenzol, 1-Amino-3-N,N-di-β-sulfatoäthylamino-4-methoxybenzol, 1-Amino-3-sulfo-benzylaminobenzol, 1-Amino-3-sulfobenzylamino-4-chlorbenzol, 1-Amino-3-N,N-di-sulfobenzylaminobenzol.

Triazine der Formel (32)

2,4,6-Trifluor-s-triazin (Cyanurfluorid), 2,4,6-Trichlor-s-triazin (Cyanurchlorid), 2,4,6-Tribrom-s-triazin (Cyanurbromid), 2,4,6-Trisulfo-s-triazin, 2,4,6-Tris-methylsulfonyl-s-triazin, 2,4,6-Trisphenylsulfonyl-s-triazin.

Amine der Formel (34)

Amine der allgemeinen Formel (34) sind bekannt oder können nach bekannten Verfahren hergestellt werden. Diejenigen Amine, welche den Rest der Formel (5) bilden, können hergestellt werden, indem man entsprechende Nitrophenyl-, Nitrophenoxy- oder Nitrophenylaminoalkansäurechloride oder analoge Naphthalinverbindungen mit Aminen der Formel

H—R′ (40)

welche den Resten der Formeln (3a) bis (3d) entsprechen, kondensiert, und die Nitrogruppe zur Aminogruppe reduziert.

Die Umsetzung wird vorzugsweise in einem hochsiedenden organischen Lösungsmittel, z.B. Nitrobenzol, durchgeführt. Die Reduktion der Nitrogruppe zur Aminogruppe erfolgt in an sich bekannter Weise durch katalytische Hydrierung mit Pd/Kohlenstoff in Aethanol, Essigester oder Tetrahydrofuran bei Raumtemperature bis etwa 40°C. Die Reduktion kann auch mit Fe/Salzsäure oder Fe/Essigsäure in wässriger Lösung durchgeführt werden.

Nach einer anderen, in der DE-OS 20 40 620 beschriebenen Methode kann man das Säurechlorid mit einem ungesättigten aliphatischen Amin umsetzen, und an die Doppelbindung des Säureamids 2-Mercaptoäthanol bei Temperaturen zwischen 50°C und 180°C mit Hilfe katalytischer Mengen eines Radikalbildners oder von Schwefel anlagern. Die dadurch erhaltenen Hydroxyäthylthioäther-Verbindungen können auch hergestellt werden, indem man das Säurechlorid mit einem Halogenalkylamin kondensiert, und das Kondensationsprodukt mit 2-Mercaptoäthanol und Natriumalkoholat in Alkohol erwärmt. Die Thioätherverbindungen werden dann noch zu den entsprechenden Sulfonen oxydiert.

Die Oxydation der Thioätherverbindungen zu den Sulfonen kann nach verschiedenen Methoden erfolgen, beispielsweise mit Wasserstoffperoxid mit oder ohne Zusatz von Wolfram- oder Vanadinverbindungen als Katalysatoren, ferner mit Peressigsäure, Kaliumpermanganat oder Chromsäure, oder mit Chlor/Salzsäure je in wässrigem, wässrig-organischem oder organischem Medium.

Die so erhältlichen Carbonsäureamide, in denen die Gruppierung $-SO_2-Z$ eine β-Hydroxyäthylsulfonylgruppe darstellt, können durch Behandeln mit Sulfatierungsmitteln, Phosphorylierungsmitteln, Halogenierungsmitteln, Alkyl- oder Arylsulfonsäurehalogeniden, Alkyl- oder Arylcarbonsäurehalogeniden oder Alkyl- oder Arylcarbonsäureanhydriden in die entsprechenden Farbstoffvorprodukte übergeführt werden, in denen die Gruppierung $-SO_2-Z$ z.B. die Gruppierung $-SO_2-CH_2-CH_2-O-SO_3H$, $-SO_2-CH_2-CH_2-O-PO_3H_2$, $-SO_2-CH_2-CH_2-$Halogen, $-SO_2-CH_2-CH_2-O-CO-CH_3$ oder $-SO_2-CH_2-CH_2-O-CO-C_6H_5$ bedeutet. Die so erhaltenen Produkte können ihrerseits durch Behandeln mit alkalisch wirkenden Mitteln, wie beispielsweise Alkalihydroxid oder Alkalicarbonat, wie Natriumhydroxyd oder Natriumcarbonat, in entsprechende Verbindungen übergeführt werden, in denen die Gruppierung $-SO_2-Z$ die Gruppierung $-SO_2-CH=CH_2$ bedeutet. Die so erhaltenen Produkte können wiederum durch Umsetzung (Addition) mit Salzen oder Thioschwefelsäure, wie Natriumthiosulfat, in Verbindungen übergeführt werden, in denen die Gruppierung $-SO_2-Z$ die Gruppierung $-SO_2-CH_2-CH_2-S-SO_3H$ bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgebende Verbindungen. Geeignete Phosphorylierungsmittel sind hierbei beispielsweise konzentrierte Phosphorsäure, Pyro-, Meta- oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Bevorzugt sind Verbindungen der Formel

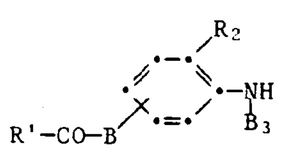

(41),

worin R′ ein Rest der Formel

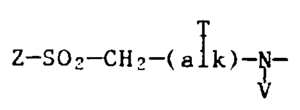

(3a)

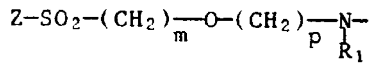

(3b)

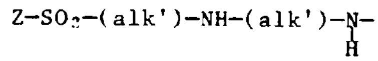

(3c)

oder

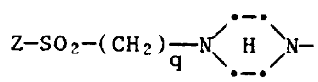

(3d)

ist; $B_3$, B, Z, alk, T, V, $R_1$, alk', m, p und q die unter Formel (5) angegebenen Bedeutungen haben; und $R_2$ Wasserstoff, $C_1$-$C_4$-Alkyl, $C_1$-$C_4$-Alkoxy, Halogen, Hydroxy, Carboxy oder Sulfo ist. In den Verbindungen der Formel (41) ist vorzugsweise $B_2$ Methyl, Aethyl, Isopropyl oder vor allem Wasserstoff; $R_2$ Methyl, Methoxy, Chlor, Hydroxy, Carboxy, Sulfo oder vor allem Wasserstoff; B Methylen, Methylenoxy, Propylen, Propylenoxy oder Butylenoxy; und R' einer der oben genannten Reste der Formeln (3a) bis (3d).

Das bevorzugte Verfahren zur Herstellung der Verbindungen der Formel (41) ist dadurch gekennzeichnet, dass man eine Verbindung der Formel

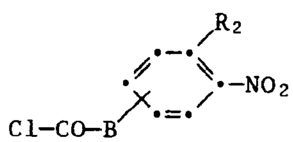

(42),

mit einem Amin der Formel

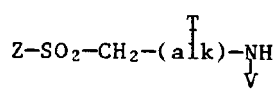

(43a)

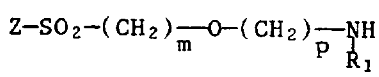

(43b)

$Z-SO_2-(alk')-NH-(alk')-NH_2$ (43c)

oder

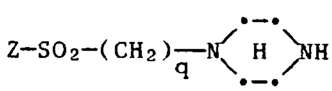

(43d)

kondensiert, und die Nitrogruppe zur Aminogruppe reduziert.

Nach einer Abänderung des oben beschriebenen Verfahrens können Verbindungen der Formel (41) auch in der Weise hergestellt werden, dass man eine Verbindung der Formel (42) mit einem Amin der Formel

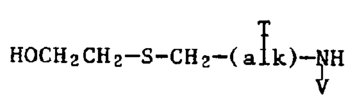

(44a)

$$HOCH_2CH_2{-}S{-}(CH_2)_m{-}O{-}(CH_2)_p{-}\underset{R_1}{\underset{|}{N}}H \qquad (44b)$$

$$HOCH_2CH_2{-}S{-}(alk'){-}NH{-}(alk'){-}NH_2 \qquad (44c)$$

oder

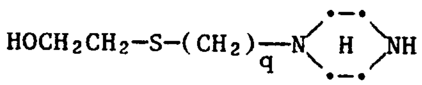

(44d)

kondensiert, das Kondensationsprodukt mit elementarem Chlor zu der entsprechenden β-Chloräthylsulfonyl-Verbindung oxydiert, und die Nitrogruppe zur Aminogruppe reduziert.

Ferner ist noch eine andere Verfahrensvariante anwendbar, wonach man zuerst eine Verbindung der Formel (42) mit einem der Amine der Formeln (44a) bis (44d) kondensiert, das erhaltene Produkt mit einem Peroxid zum Sulfon oxydiert, dann die Nitrogruppe zur Aminogruppe reduziert, die erhaltene Aminoverbindung mit einem s-Triazin der Formel (32) kondensiert, und zuletzt die Hydroxygruppe in dem Rest von einem der Amine der Formeln (44a) bis (44d) sulfatiert.

Die Kondensation der Verbindung der Formel (42) mit den Aminen der Formeln (44a) bis (44d) wird z.B. in Chloroform bei Raumtemperatur und in Gegenwart von alkalischen, säurebindenden Mitteln, z.B. Alkalihydroxiden, -carbonaten oder -bicarbonaten, durchgeführt. Anschliessend wird das Kondensationsprodukt in an sich bekannter Weise mit einer Chlor/Salzsäure-Mischung oxydiert. Die Reduktion der Nitrogruppe zur Aminogruppe erfolgt wie oben beschrieben.

Die als Ausgangsverbindungen verwendeten Amine der Formeln (43a) bis (44d) können analog dem Verfahren des Beispiels 1 der DE-OS 26 14 550 hergestellt werden.

Weitere Amine der Formel (34)

3-Aminobenzoesäure-N′-β-(β′-chloräthylsulfonyl)-äthylamid,
4-Chlor-3-aminobenzoesäure-N′-β-(β′-chloräthylsulfonyl)-äthylamid,
4-Methyl-3-aminobenzoesäure-N′-β-(β′-chloräthylsulfonyl)-äthylamid,
4-Methoxy-3-aminobenzoesäure-N′-β-(β′-chloräthylsulfonyl)-äthylamid,
3-Aminobenzoesäure-N′-β-[β′-(β″-chloräthylsulfonyl)-äthyloxy]-äthylamid,
3-Aminobenzoesäure-N′-γ-(β′-chloräthylsulfonyl)-propylamid,
3-Aminobenzoesäure-N′-bis-[β-(β′-chloräthylsulfonyl)-äthyl]-amid,
3-Aminobenzoesäure-N′-bis-[γ-(β′-chloräthylsulfonyl)-propyl]-amid,
3-N-Aethylaminobenzoesäure-N′-β-(β′-chloräthylsulfonyl)-äthylamid,
3-N-Isopropylaminobenzoesäure-N′-β-(β′-chloräthylsulfonyl)-äthylamid,
3-N-Isopropylaminobenzoesäure-N′-γ-(β′-chloräthylsulfonyl)-propylamid,
4-Aminobenzoesäure-N′-β-(β′-chloräthylsulfonyl)-äthylamid,
4-Aminobenzoesäure-N′-β-[β′-(β″-chloräthylsulfonyl)-äthyloxy]-äthylamid,
4-Aminobenzoesäure-N′-γ-(β′-chloräthylsulfonyl)-propylamid,
4-Aminobenzoesäure-N′-bis-[β-(β′-chloräthylsulfonyl)-äthyl]-amid,
4-Aminobenzoesäure-N′-bis-[γ-(β′-chloräthylsulfonyl)-propyl]-amid,
4-N-Aethylaminobenzoesäure-N′-β-(β′-chloräthylsulfonyl)-äthylamid,
4-N-Isopropylaminobenzoesäure-N′-γ-(β′-chloräthylsulfonyl)-propylamid,
4-Aminobenzoesäure-N′-β-(vinylsulfonyl)-äthylamid,
4-Aminobenzoesäure-N′-bis-[β-(vinylsulfonyl)-äthyl]-amid,
4-Aminobenzoesäure-N′-δ-(β′-chloräthylsulfonyl)-butylamid,
4-Chlor-3-aminobenzoesäure-N′-bis-[β-(β′-chloräthylsulfonyl)-äthyl]-amid,
4-Methyl-3-aminobenzoesäure-N′-bis-[β-(β′-chloräthylsulfonyl)-äthyl]-amid,
4-Methoxy-3-aminobenzoesäure-N′-bis-[γ-(β′-chloräthylsulfonyl)-propyl]-amid,
3-Aminobenzoesäure-N′-δ-(β′-Chloräthylsulfonyl)-butylamid,
3-Aminobenzoesäure-N′-β-[β′-(β″-chloräthylsulfonyl)-äthyloxy]-äthylamid,
4-Hydroxy-3-aminobenzoesäure-N′-β-(β′-chloräthylsufIonyl)-äthylamid,
4-Hydroxy-3-aminobenzoesäure-N′-bis-[β-(β′-chloräthylsulfonyl)-äthyl]-amid,
4-Methoxy-3-aminobenzoesäure-N′-bis-[β-(β′-chloräthylsulfonyl)-äthyl]-amid,

sowie entsprechende Verbindungen, worin die β-Chloräthylsulfonyl-Gruppe durch β-Sulfatoäthylsulfonyl oder Vinylsulfonyl ersetzt ist; weiterhin kommen in Betracht:
4-Amino-3-sulfobenzoesäure-N′-β-(β′-chloräthylsulfonyl)-äthylamid,
4-Amino-3-sulfobenzoesäure-N′-β-(β′-sulfatoäthylsulfonyl)-äthylamid,
4-Amino-3-sulfobenzoesäure-N′-β-vinylsulfonyl-äthylamid,
3-Amino-2-sulfobenzoesäure-N′-β-vinylsulfonyl-äthylamid,
3-Amino-4-methoxybenzoesäure-N′-β-(β′-sulfatoäthylsulfonyl)-äthylamid,
4-Amino-3-sulfobenzoesäure-N′-bis-(β-vinylsulfonyl-äthyl)-amid,
3-Amino-4-methoxybenzoesäure-N′-bis-[β-(β′-sulfatoäthylsulfonyl)-äthyl]-amid,
3-Amino-2-sulfobenzoesäure-N′-bis-(β-vinylsulfonyl-äthyl)-amid,
3-Amino-4-methoxybenzoesäure-N′-(γ-vinylsulfonyl-propyl)piperazid,
4-Amino-3-methoxybenzoesäure-N′-bis(β-vinylsulfonyl-äthyl)-amid,
3-Aminobenzoesäure-N′-β-(β′-vinylsulfonyl-äthylamino)-äthylamid,
3-Amino-4-methylbenzoesäure-N′-(β-vinylsulfonyl-äthyl)-piperazid,
4-Amino-3-sulfobenzoesäure-N′-bis-[β-(β′-sulfatoäthylsulfonyl)-äthyl]-amid,
3-Amino-4-methoxybenzoesäure-N′-bis-(β-vinylsulfonyl-äthyl)amid,
3-Amino-4-methoxybenzoesäure-N′-(β-vinylsulfonyl-äthyl)-amid,
4-Amino-3-sulfobenzoesäure-N′-(γ-vinylsulfonyl-propyl)-piperazid,
4-Amino-3-sulfobenzoesäure-N′-β-(β′-vinylsulfonyl-äthylamino)-äthylamid,
3-Amino-4-methylbenzoesäure-N′-β-(β′-sulfatoäthylsulfonyl)-äthylamid,
4-Amino-3-sulfobenzoesäure-N′-bis-[β-(β′-chloräthylsulfonyl)-äthyl]-amid,
4-Amino-3-sulfobenzoesäure-N′-(β-vinylsulfonyl-äthyl)-piperazid,
4-Amino-3-sulfobenzoesäure-N′-β-(β′-vinylsulfonyl-äthylamino)-äthylamid,
5-Amino-1,3-benzodicarbonsäure-N′,N″-(β-vinylsulfonyl-äthyl)-diamid,
4-Amino-3-sulfobenzoesäure-N′-β-(β′-vinylsulfonyl-äthyloxy)-äthylamid,
ferner analoge Aminobenzoesäureamide oder Aminobenzolsulfonsäureamide der folgenden Aminoverbindungen:
β-[β′-(β″-Chloräthylsulfonyl)-äthylamino]-äthylamin,
β-(β′-Vinylsulfonyl-äthylamino)-äthylamin,
β-[β′-(β″-Sulfatoäthylsulfonyl)-α′-methyl-äthylamino]-äthylamin,
β-[β′-(β″-Sulfatoäthylsulfonyl)-α′-methyl-äthylamino]-β-methyläthylamin,
γ-[β′-(β″-Sulfatoäthylsulfonyl)-α′-methyl-äthylamino]-propylamin,
δ-[β′-(β″-Sulfatoäthylsulfonyl)-α′-methyl-äthylamino]-n-butylamin,
α-Carbonsäure-β-(β′-chloräethylsulfonyl)-äthylamin,
α-Carbonsäureäthylester-β-(β′-chloräthylsulfonyl)-äthylamin,
β-Hydroxy-γ-(β′-chloräthylsulfonyl)-propylamin,
β,γ-(Bis-β′-chloräthylsulfonyl)-propylamin,
β-Acetoxy-(β′-acetoxyäthylsulfonyl)-propylamin,
β-Chlor-γ-(β′-chloräthylsulfonyl)-propylamin,
β-Sulfato-γ-(β′-sulfatoäthylsulfonyl)-propylamin,
Bis-[β-hydroxy-γ-(β′-chloräthylsulfonyl)-propyl]-amin,
Bis-[β-chlor-γ-(β′-chloräthylsulfonyl)-propyl]-amin,
Bis-[β-sulfato-γ-(β′-sulfatoäthylsulfonyl)-propyl]-amin,
β-Hydroxy-γ-(β′-vinylsulfonyl)-propylamin,

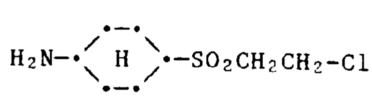

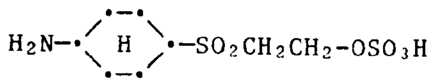

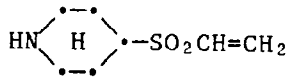

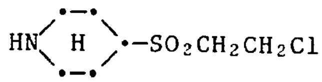

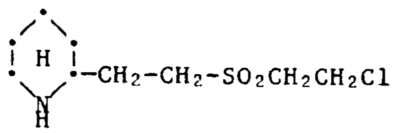

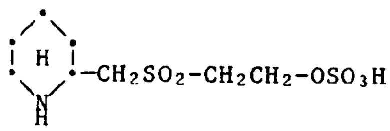

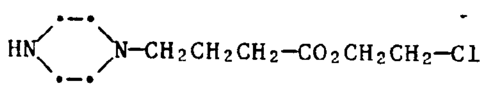

$H_2N\text{-}CH_2CH_2\text{-}O\text{-}CH_2CH_2\text{-}SO_2CH_2CH_2\text{-}Cl$

$H_2N\text{-}CH_2CH_2CH_2\text{-}O\text{-}CH_2CH_2CH_2\text{-}SO_2CH_2CH_2\text{-}Cl$

$H_2N\text{-}CH_2CH_2\text{-}NH\text{-}CH_2CH_2SO_2\text{-}CH_2CH_2\text{-}Cl$

$H_2N\text{-}CH_2CH_2\text{-}NH\text{-}CH_2CH_2SO_2\text{-}CH{=}CH_2$

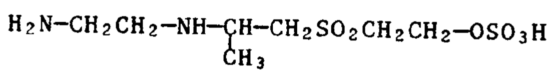

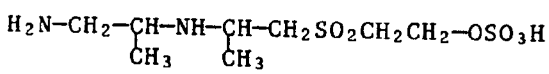

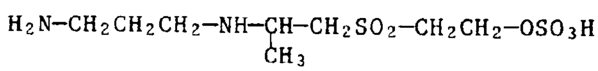

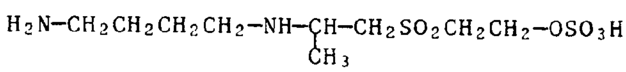

$H_2NCH_2CH_2SO_2CH_2CH_2Cl$

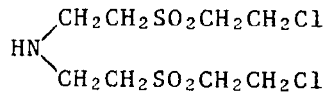

$H_2NCH_2CH_2OCH_2CH_2SO_2CH_2CH_2Cl$

$H_2NCH_2CH_2SO_2CH=CH_2$

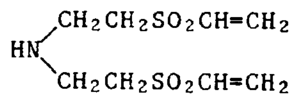

$H_2NCH_2CH_2OCH_2CH_2SO_2CH=CH_2$

$H_2NCH_2CH_2NHCH_2CH_2SO_2CH=CH_2$

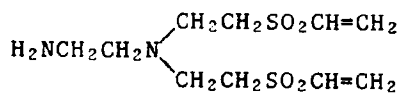

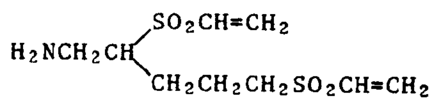

1-Aminobenzol-2-, -3- oder -4-β-sulfatoäthylsulfon,
1-Amino-4-methylbenzol-3-β-sulfatoäthylsulfon,
1-Aminobenzol-3-β-chloräthylsulfon,
1-Amino-4-methoxybenzol-3-β-sulfatoäthylsulfon,
1-Aminobenzol-4-β-sulfatoäthylsulfon-2-sulfonsäure,
1-Aminobenzol-5-β-sulfatoäthylsulfon-2-sulfonsäure,
1-Aminobenzol-5-β-sulfatoäthylsulfon-2,4-disulfonsäure,
1-Aminonapthalin-4-β-sulfatoäthylsulfon,
1-Amino-2,5-dimethoxybenzol-4-β-sulfatoäthylsulfon,
1-Aminobenzol-4-β-sulfatoäthylsulfon-2-carbonsäure,
1-Aminobenzol-5-β-sulfatoäthylsulfon-2-carbonsäure,
1-Amino-2-methoxybenzol-4-β-sulfatoäthylsulfon,
1-Amino-2-chlorbenzol-4-β-sulfatoäthylsulfon,
1-Amino-2-methoxybenzol-5-β-sulfatoäthylsulfon,
2-Aminonaphthalin-8-β-sulfatoäthylsulfon,
2-Aminonaphthalin-8-β-sulfatoäthylsulfon-6-sulfonsäure,
1-Amino-2,5,-dimethoxybenzol-4-vinylsulfon,
1-Amino-2-methoxy-5-methylbenzol-4-β-sulfatoäthylsulfon,
1-Amino-2,5-diäthyoxybenzol-4-β-sulfatoäthylsulfon,
1-Amino-2-brombenzol-4-β-sulfatoäthylsulfon,
1-Amino-2-brombenzol-4-vinylsulfon,
1-Aminobenzol-5-vinylsulfon-2,4-disulfonsäure,
1-Aminobenzol-5-β-phosphatoäthylsulfon-2,4-disulfonsäure,
1-Aminobenzol-5-β-chloräthylsulfon-2,4-disulfonsäure,
2-Aminonaphthalin-8-β-phosphatoäthylsulfon-6-sulfonsäure,
2-Aminonaphthalin-8-vinylsulfon-6-sulfonsäure,
1-Amino-2-methoxy-5-methylbenzol-4-β-chloräthylsulfon,
2-Aminophenol-4-β-sulfataoäthylsulfon,
1-Aminobenzol-3- oder -4-vinylsulfon,

1-Amino-2-hydroxybenzol-4-β-sulfatoäthylsulfon,
1-Aminobenzol-5-vinylsulfon-2-sulfonsäure,
3-(N-Methyl-β-sulfatoäthylsulfonylamino)-1-aminobenzol,
3-(N-Aethyl-β-sulfatoäthylsulfonylamino)-1-aminobenzol,
3-β-Sulfato-äthylsulfonylamino-1-aminobenzol.

Die Kondensation des s-Triazins der Formel (32), insbesondere eines 2,4,6-Trihalogen-s-triazins mit den organischen Farbstoffen der Formel (31) bzw. den eine Gruppe -N(R)H enthaltenden diazotierbaren und/oder kupplungsfähigen Komponenten erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit den Verbindungen der Formel (34) setzt man die freien Amine oder deren Salze, bevorzugt in Form des Hydrochlorids, ein. Die Umsetzung wird bei Temperaturen etwa zwischen 0 und 40°, bevorzugt zwischen 5 und 25°C, unter Zusatz säurebindender Mittel, bevorzugt Natriumcarbonat, in einem pH-Bereich von 2 bis 8 bevorzugt 5 bis 6,5, durchgeführt.

Die Kondensation des Halogentriazins mit einer Verbindung der Formel (34) kann vor oder nach der Kondensation des Halogentriazins mit einem Farbstoff der Formel (31) geschehen. Die Kondensation des Halogentriazins mit einer Verbindung der Formel (34) erfolgt vorzugsweise in wässriger Lösung oder Suspension, bei niedriger Temperatur und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Falls die Reaktivfarbstoffe der Formel (1), worin D der Rest eines Anthrachinonfarbstoffes ist, eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen z.B. ein Naphthalinsulfonsäure-Formaldehyd-Kondensat oder insbesondere Anthrachinon-2-sulfonsäure, behoben werden.

Die Reaktivfarbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1:

Zu einer neutralen wässrigen Lösung, enthaltend 35.8 Teile des Natriumsalzes der 2-(3'-Aminophenyl)amino-4,6-dichlor-1,3,5-triazin-4'-sulfonsäure gibt man 25 Vol-Teile einer 4n-Natriumnitritlösung, kühlt durch Eiszugabe auf 0° und stürzt 25 Vol.-Teile konzentrierte Salzsäure auf einmal zu. Nach beendeter Diazotierung zerstört man einen geringen Ueberschuss an salpetriger Säure durch Zugabe von Sulfaminsäure. In die Suspension der Diazoverbindung giesst man nun eine wässrige Lösung, enthaltend 24 Teile des Natriumsalzes von 2,6-Dihydroxy-3-sulfomethyl-4-methylpyridin. Die Diazoverbindung geht in Lösung und es entsteht eine klare gelbe Farbstofflösung. Man stellt auf pH 7 und gibt dann eine neutrale wässrige Lösung von 21 Teilen des Natriumsalzes der 1,3-Phenylendiamin-4-sulfonsäure zu. Man kondensiert bei 20 - 25°, wobei durch Zutropfen von Natronlauge der pH-Wert der Lösung bei 6 - 7 gehalten wird. Nach beendeter Kondensation kühlt man auf 0° ab und versetzt mit einer Lösung von 18,5 Teilen Cyanurchlorid in 50 Teilen Aceton. Man kondensiert bei 0 - 5°, wobei man durch Zutropfen von Natronlauge den pH-Wert bei 6 - 7 hält. Nach beendeter Kondensation fügt man 25,2 Teile $HClH_2N(CH_2)O(CH_2)_2SO_2(CH_2)_2Cl$ zu und rührt 3 Stunden bei 20 - 40° und pH 7 - 8. Durch Zugabe von Kochsalz wird der Farbstoff der Formel

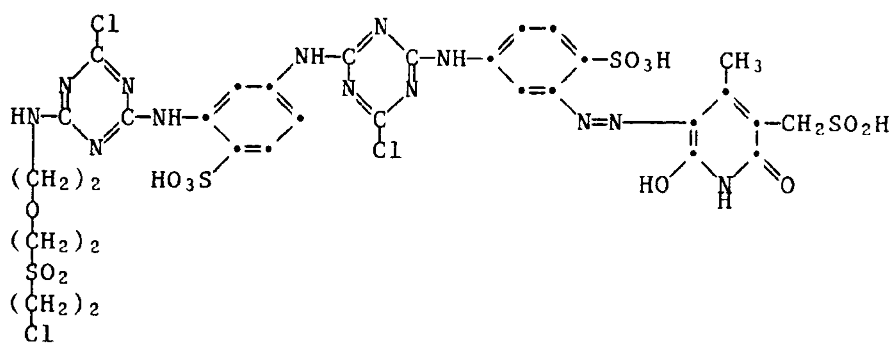

ausgesalzt, dann abfiltriert und getrocknet. Er färbt Cellulosefasern in echten, grünstichig gelben Tönen.

Beispiel 2:

54,5 Teile des Farbstoffes 2-(4'-Amino-2'-ureido-phenylazo)-naphthalin-3,6,8-trisulfonsäure werden mit 250 Teilen Wasser neutral gelöst. Diese neutrale Lösung gibt man zu einer Suspension von 18,5 Teilen Cyanurchlorid in Aceton und Wasser. Durch Kühlung mit Eis hält man die Temperatur bei 0° bis 3°. Im Verlauf der Acylierungsreaktion werden 9 g Bicarbonat so eingetragen, dass der pH zwischen 5,5 und 7 bleibt. Wenn kein Ausgangsfarbstoff mehr im Chromatogramm nachweisbar ist, gibt man eine neutrale wässrige Lösung von 19 Teilen 1,3-Phenylendiamin-4-sulfonsäure zu. Man kondensiert bei 20 - 25°, wobei durch Zutropfen von Natronlauge der pH-Wert der Lösung bei 6 - 7 gehalten wird. Nach beendeter Kondensation kühlt man auf 0° ab und versetzt mit einer Lösung von 18,5 Teilen Cyanurchlorid in 50 Teilen Aceton. Man kondensiert bei 0 - 5°, wobei man durch Zugabe von Natronlauge den pH-Wert 6 - 7 hält. Nach beendeter Kondensation fügt man 22 Teile $HClH_2N(CH_2)_2SO_2(CH_2)_2Cl$ zu und rührt 3 Stunden bei 20 - 40° und pH 7 - 8. Durch Zugabe von Kochsalz wird der Farbstoff der Formel

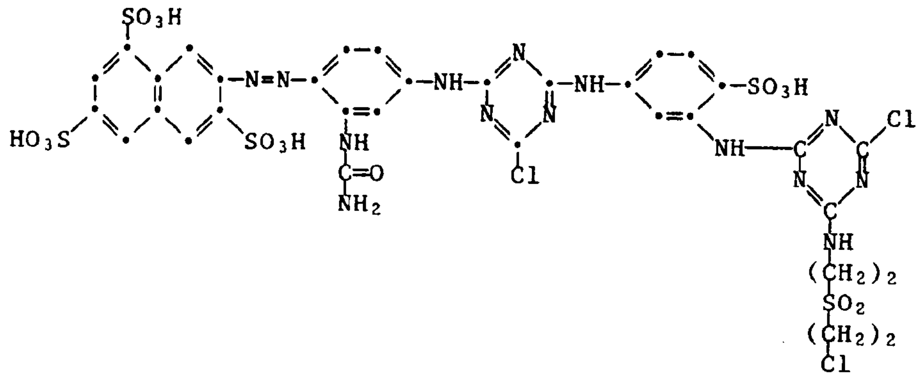

ausgesalzt, dann abfiltriert und getrocknet. Er färbt Cellulosefasern in echten, goldgelben Tönen.

Beispiel 3:

54,5 Teile des Farbstoffes 2-(4'-Amino-2'-ureidophenylazo)-naphthalin-3,6,8-trisulfonsäure werden mit 250 Teilen Wasser neutral gelöst. Diese neutrale Lösung gibt man zu einer Suspension von 18,5 Teilen Cyanurchlorid in Aceton und Wasser. Durch Kühlung mit Eis hält man die Temperatur bei 0° bis 3°. Im Verlauf der Acylierungsreaktion werden 9 g Bicarbonat so eingetragen, dass der pH zwischen 5,5 und 7 bleibt, Wenn kein Ausgangsfarbstoff mehr im Chromatogramm nachweisbar ist, gibt man eine neutrale wässrige Lösung von 19 Teilen 1,4-Phenylendiamin-2-sulfonsäure zu. Man kondensiert bei 20 - 25°, wobei durch Zutropfen von Natronlauge der pH-Wert der Lösung bei 6 - 7 gehalten wird. Nach beendeter Kondensation kühlt man auf 0° ab und versetzt mit einer Lösung von 18,5 Teilen Cyanurchlorid in 50 Teilen Aceton. Man kondensiert bei 0 - 5°, wobei man durch Zugabe von Natronlauge den pH-Wert 6 - 7 hält. Nach beendeter Kondensation fügt man 22 Teile $HClH_2N(CH_2)_2O(CH_2)_2Cl$ zu und rührt 3 Stunden bei 20 - 40° und pH 7 - 8. Durch Zugabe von Kochsalz wird der Farbstoff der Formel

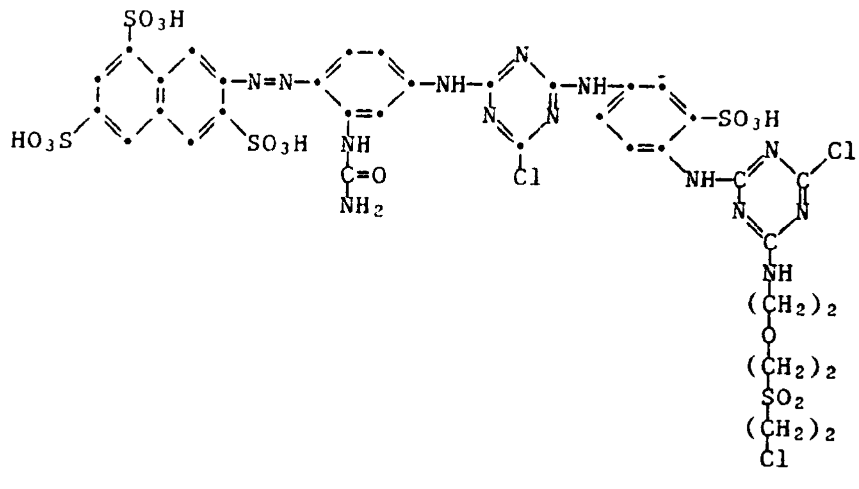

ausgesalzt, dann abfiltriert und getrocknet. Er färbt Cellulosefasern in echten, goldgelben Tönen.

Beispiel 4:

54,5 Teile des Farbstoffes 2-(4'-Amino-2'-ureidophenylazo)-naphthalin-3,6,8-trisulfonsäure werden mit 250 Teilen Wasser neutral gelöst. Diese neutrale Lösung gibt man zu einer Suspension von 18,5 Teilen Cyanurchlorid in Aceton und Wasser. Durch Kühlung mit Eis hält man die Temperatur bei 0° bis 3°. Im Verlauf der Acylierungsreaktion werden 9 g Bicarbonat so eingetragen, dass der pH zwischen 5,5 und 7 bleibt. Wenn kein Ausgangsfarbstoff mehr im Chromatogramm nachweisbar ist, gibt man eine neutrale wässrige Lösung von 19 Teilen 1,3-Phenylendiamin-4-sulfosäure zu. Man kondensiert bei 20 - 25°, wobei durch Zutropfen von Natronlauge der pH-Wert der Lösung bei 6 - 7 gehalten wird. Nach beendeter Kondensation kühlt man auf 0° ab und

versetzt mit einer Lösung von 18,5 Teilen Cyanurchlorid in 50 Teilen Aceton. Man kondensiert bei 0 - 5°, wobei man durch Zugabe von Natronlauge den pH-Wert 6 - 7 hält. Nach beendeter Kondensation fügt man 37 Teile $HClHN[(CH_2)_2SO_2(CH_2)_2Cl]_2$ zu und rührt 3 Stunden bei 20 - 40° und pH 7 - 8. Durch Zugabe von Kochsalz wird der Farbstoff der Formel

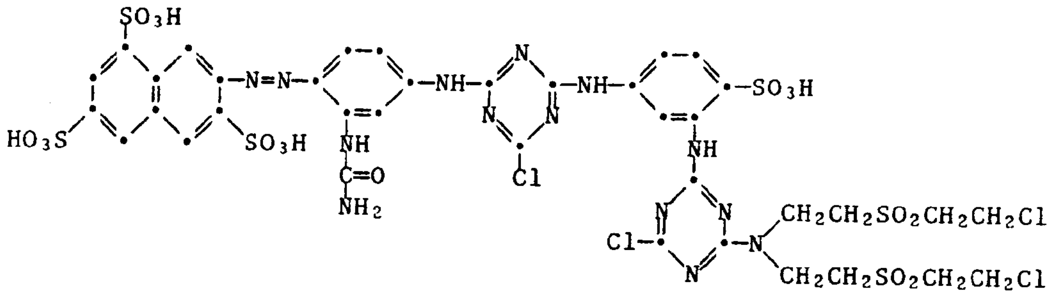

ausgesalzt, dann abfiltriert und getrocknet. Er färbt Cellulosefasern in echten, goldgelben Tönen.

Beispiel 5:

18,5 Teile Cyanurchlorid werden in 110 Teilen Aceton gelöst und unter kräftigem Rühren auf 250 Teile Eis gegeben. Dazu lässt man eine Lösung von 55,3 Teilen des Farbstoffs der folgenden Konstitution

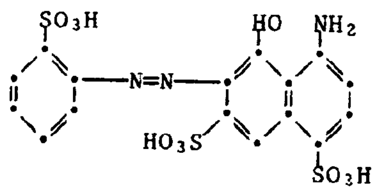

bei 0° hinzufliessen. Anschliessend werden 50 Teile 2-normale Sodalösung zugetropft, wobei sich ein pH-Wert von 6 - 6,5 ergibt. Nun gibt man eine neutrale wässrige Lösung von 19 Teilen 1,4-Phenylendiamin-2-sulfosäure zu. Man kondensiert bei 20 - 25°, wobei durch Zutropfen von Natronlauge der pH-Wert der Lösung bei 6 - 7 gehalten wird. Nach beendeter Kondensation kühlt man auf 0° ab und versetzt mit einer Lösung von 18,5 Teilen Cyanurchlorid in 50 Teilen Aceton. Man kondensiert bei 0 - 5°, wobei man durch Zugabe von Natronlauge den pH-Wert 6 - 7 hält. Nach beendeter Kondensation fügt man 22 Teile $HClH_2N(CH_2)_2SO_2(CH_2)_2Cl$ zu und rührt 3 Stunden bei 20 - 40° und pH 7 - 8. Durch Zugabe von Kochsalz wird der Farbstoff der Formel

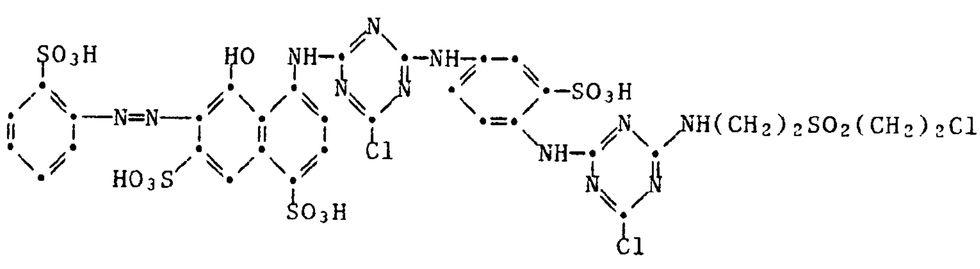

ausgesalzt, dann abfiltriert und getrocknet. Er färbt Cellulosefasern in echten, gelbstichig roten Tönen.

Beispiel 6:

18,5 Teile Cyanurchlorid werden in 110 Teilen Aceton gelöst und unter kräftigem Rühren auf 250 Teile Eis gegeben. Dazu lässt man eine Lösung von 50,3 Teilen des Farbstoffs der folgenden Konstitution

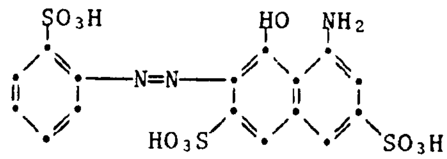

bei 0° hinzufliessen. Anschliessend werden 50 Teile 2-normale Sodalösung zugetropft, wobei sich ein pH-Wert von 6 - 6,5 ergibt. Nun gibt man eine neutrale wässrige Lösung von 19 Teilen 1,3-Phenylendiamin-4-sulfosäure zu. Man kondensiert bei 20 - 25°, wobei durch Zutropfen von Natronlauge der pH-Wert der Lösung bei 6 - 7 gehalten wird. Nach beendeter Kondensation kühlt man auf 0° ab und versetzt mit einer Lösung von 18,5 Teilen Cyanurchlorid in 50 Teilen Aceton. Man kondensiert bei 0 - 5°, wobei man durch Zugabe von Natronlauge den pH-Wert 6 - 7 hält. Nach beendeter Kondensation fügt man 22 Teile $HClH_2N(CH_2)_2SO_2(CH_2)_2Cl$ zu und rührt 3 Stunden bei 20 - 40° und pH 7 - 8. Durch Zugabe von Kochsalz wird der Farbstoff der Formel

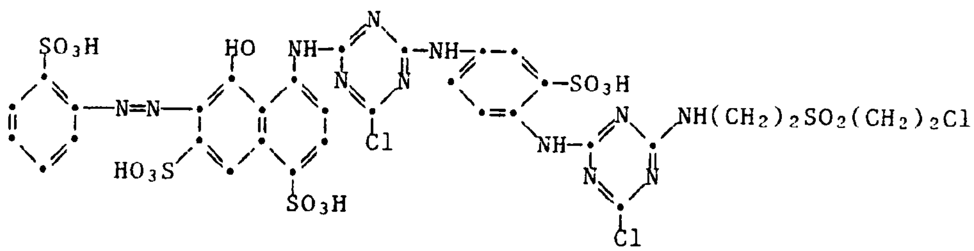

ausgesalzt, dann abfiltriert und getrocknet. Er färbt Cellulosefasern in echten, gelbstichig roten Tönen.

Beispiel 7:

18,5 Teile Cyanurchlorid werden in 110 Teilen Aceton gelöst und unter kräftigem Rühren auf 250 Teile Eis gegeben. Dazu lässt man eine Lösung von 55,3 Teilen des Farbstoffs der folgenden Konstitution

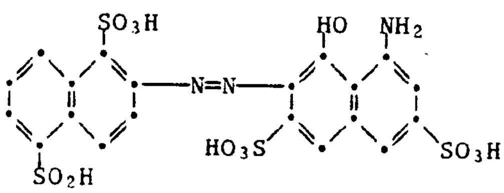

bei 0° hinzufliessen. Anschliessend werden 50 Teile 2-normale Sodalösung zugetropft, wobei sich ein pH-Wert von 6 - 6,5 ergibt. Nun gibt man eine neutrale wässrige Lösung von 19 Teilen 1,3-Phenylendiamin-4-sulfosäure zu. Man kondensiert bei 20 - 25°, wobei durch Zutropfen von Natronlauge der pH-Wert der Lösung bei 6 - 7 gehalten wird. Nach beendeter Kondensation kühlt man auf 0° ab und versetzt mit einer Lösung von 18,5 Teilen Cyanurchlorid in 50 Teilen Aceton. Man kondensiert bei 0 - 5°, wobei man durch Zugabe von Natronlauge den pH-Wert 6 - 7 hält. Nach beendeter Kondensation fügt man 22 Teile $HClH_2N(CH_2)_2SO_2(CH_2)_2Cl$ zu und rührt 3 Stunden bei 20 - 40° und pH 7 - 8. Durch Zugabe von Kochsalz wird der Farbstoff der Formel

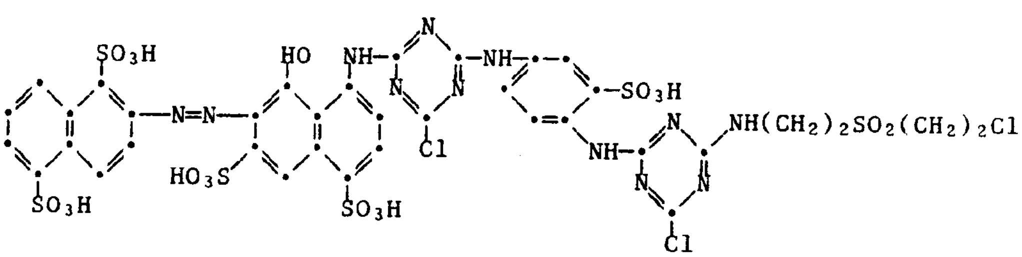

ausgesalzt, dann abfiltriert und getrocknet. Er färbt Cellulosefasern in echten, blaustichig roten Tönen.

Beispiel 8:

18,5 Teile Cyanurchlorid werden in 110 Teilen Aceton gelöst und unter kräftigem Rühren auf 250 Teile Eis gegeben. Dazu lässt man eine Lösung von 55,3 Teilen des Farbstoffs der folgenden Konstitution

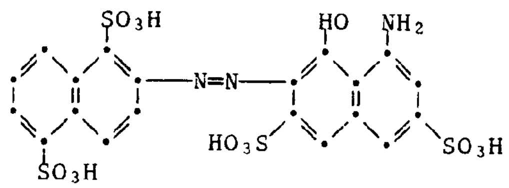

bei 0° hinzufliessen. Anschliessend werden 50 Teile 2-normale Sodalösung zugetropft, wobei sich ein pH-Wert von 6 - 6,5 ergibt. Nun gibt man eine neutrale wässrige Lösung von 19 Teilen 1,3-Phenylendiamin-4-sulfosäure zu. Man kondensiert bei 20 - 25°, wobei durch Zutropfen von Natronlauge der pH-Wert der Lösung bei 6 - 7 gehalten wird. Nach beendeter Kondensation kühlt man auf 0° ab und versetzt mit einer Lösung von 18,5 Teilen Cyanurchlorid in 50 Teilen Aceton. Man kondensiert bei 0 - 5°, wobei man durch Zugabe von Natronlauge den pH-Wert 6 - 7 hält. Nach beendeter Kondensation fügt man 25 Teile $HClH_2N(CH_2)_2O(CH_2)SO_2(CH_2)_2Cl$ zu und rührt 3 Stunden bei 20 - 40° und pH 7 - 8. Durch Zugabe von Kochsalz wird der Farbstoff der Formel

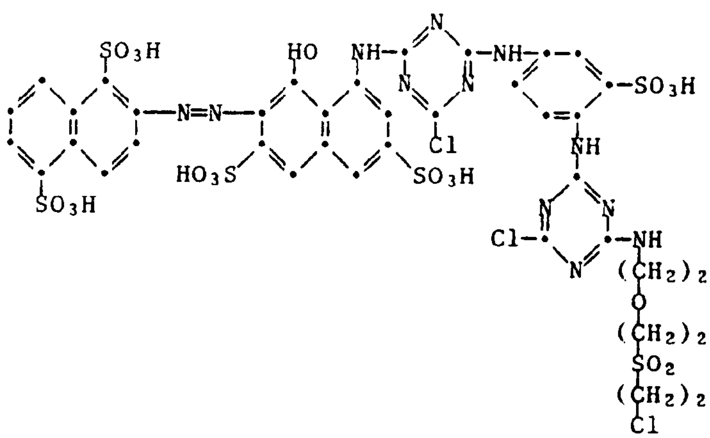

ausgesalzt, dann abfiltriert und getrocknet. Er färbt Cellulosefasern in echten, blaustichig roten Tönen.

Beispiel 9:

58,1 Teile des durch Diazotierung von 2-Aminophenol-4,6-disulfonsäure und Kupplung auf 2-Amino-5-naphthol-7-sulfonsäure mit anschliessender Kupferung in essigsaurer Lösung hergestellten Kupferkomplexfarbstoffes werden in Wasser neutral gelöst. Diese Farbstofflösung lässt man bei 0 - 5° zu einer Anschlämmung von 18,5 Teilen Cyanurchlorid hinzulaufen, welche durch Lösung des Cyanurchlorides in 110 Teilen Aceton und Zutropfen zu 250 Teilen Eis hergestellt wurde. Während der Umsetzung hält man den pH-Wert durch Zutropfen von 50 Teilen 2-normaler Sodalösung auf 4,5 - 5,5. Es wird 1 - 2 Stunden bei 0 -5° nachgerührt, bis die Umsetzung beendet ist. Dann gibt man eine neutrale wässrige Lösung von 19 Teilen 1,4-Phenylendiamin-2-sulfosäure zu. Man kondensiert bei 20 - 25°, wobei durch Zutropfen von Natronlauge der pH-Wert der Lösung bei 6 - 7 gehalten wird. Nach beendeter Kondensation kühlt man auf 0° ab und versetzt mit einer Lösung von 18,5 Teilen Cyanurchlorid in 50 Teilen Aceton. Man kondensiert bei 0 - 5°, wobei man durch Zugabe von Natronlauge den pH-Wert 6 - 7 hält. Nach beendeter Kondensation fügt man 22 Teile $HClH_2N(CH_2)_2SO_2(CH_2)_2Cl$ zu und rührt 3 Stunden bei 20 - 40° und pH 7 - 8. Durch Zugabe von Kochsalz wird der Farbstoff der Formel

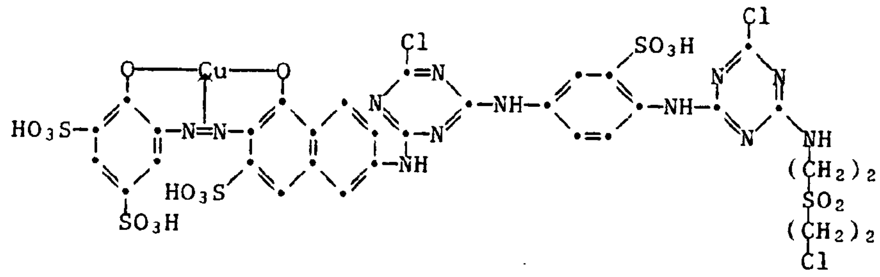

ausgesalzt, dann abfiltriert und getrocknet.

Beispiel 10:

50,3 Teile des Farbstoffes 1-Amino-4-(3′-amino-4′-methyl-5′-sulfo-phenyl-amino)-anthrachinon-2-sulfonsäure werden mit Wasser und der nötigen Menge Soda neutral gelöst. Diese Lösung wird bei 0 - 5° zu einer Anschlämmung von 18,5 Teilen Cyanurchlorid gegeben, welche durch Zutropfen des in 110 Teilen Aceton gelösten Cyanurchlorides auf 250 Teile Eis hergestellt wurde. Der bei der Umsetzung entstehende Chlorwasserstoff wird durch Zutropfen von 50 Teilen 2-normaler Sodalösung neutralisiert, wobei sich ein pH-Wert von 6 - 6,5 einstellt. Nun gibt man eine neutrale wässrige Lösung von 19 Teilen 1,3-Phenylendiamin-4-sulfosäure zu. Man kondensiert bei 20 - 25°, wobei durch Zutropfen von Natronlauge der pH-Wert der Lösung bei 6 - 7 gehalten wird. Nach beendeter Kondensation kühlt man auf 0° ab und versetzt mit einer Lösung von 18,5 Teilen Cyanurchlorid in 50 Teilen Aceton. Man kondensiert bei 0 - 5°, wobei man durch Zugabe von Natronlauge den pH-Wert 6 - 7 hält. Nach beendeter Kondensation fügt man 22 Teile $HClH_2N(CH_2)_2SO_2(CH_2)_2Cl$ zu und rührt 3 Stunden bei 20 - 40° und pH 7 - 8. Durch Zugabe von Kochsalz wird der Farbstoff der Formel

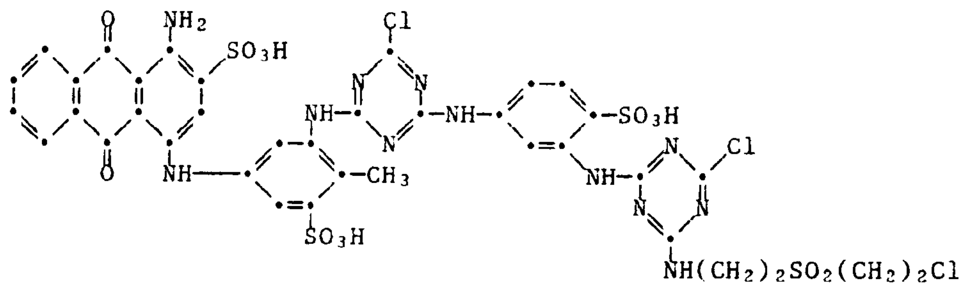

ausgesalzt, dann abfiltriert und getrocknet. Er färbt Cellulosefasern in echten, reinen blauen Tönen.

Beispiel 11:

106,6 Teile des Farbstoffes 3-(3′-Amino-4-sulfo-phenyl-amino-sulfonyl)-kupferphthalocyanin-3″,3‴,3‴-trisulfonsäure werden mit Wasser und der nötigen Sodamenge neutral gelöst. Diese Lösung lässt man bei 0° bis 5° zu einer Anschlämmung von 18,5 Teilen Cyanurchlorid hinzulaufen, welche durch Zutropfen des in 110 Teilen Aceton gelösten Cyanurchlorids auf 250 Teile Eis hergestellt wurde. Bei der Umsetzung wird der pH-Wert durch Zutropfen von 50 ml 2-normaler Sodalösung auf 6 bis 6,5 gehalten. Zu der erhaltenen Zwischenstufe gibt man eine neutrale wässrige Lösung von 19 Teilen 1,3-Phenylendiamin-4-sulfosäure zu. Man kondensiert bei 20 - 25°, wobie durch Zutropfen von Natronlauge der pH-Wert der Lösung bei 6 - 7 gehalten wird. Nach beendeter Kondensation kühlt man auf 0° ab und versetzt mit einer Lösung von 18,5 Teilen Cyanurchlorid in 50 Teilen Aceton. Man kondensiert bei 0 - 5°, wobei man durch Zugabe von Natronlauge den pH-Wert 6 - 7 hält. Nach beendeter Kondensation fügt man 26 Teile $HClH_2N(CH_2)_2$-O-$(CH_2)_2SO_2(CH_2)_2Cl$ zu und rührt 3 Stunden bei 20 - 40° und pH 7 - 8. Durch Zugabe von Kochsalz wird der Farbstoff der Formel

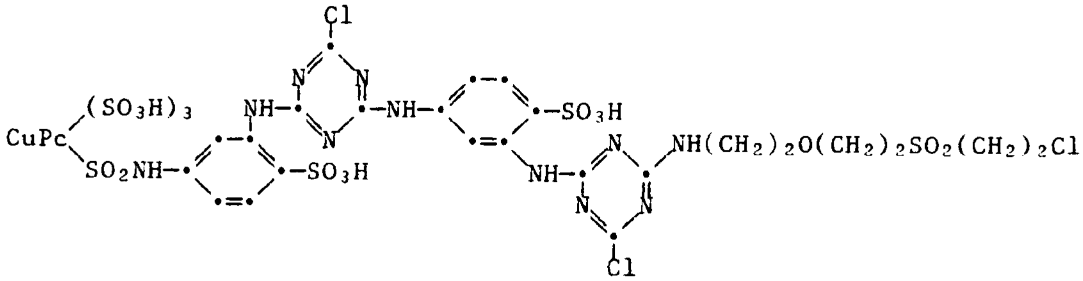

ausgesalzt, dann abfiltriert und getrocknet. Er färbt Cellulosefasern in echten, reinen Türkis Tönen.

Beispiel 12:

70,2 Teile des Disazofarbstoffes 1-Amino-2-(4′-sulfophenylazo)-7-(2″-sulfo-5″-aminophenylazo)-8-naphtol-3,6-disulfonsäure werden in Form einer neutralen Lösung bei 0 - 5° mit einer Anschlämmung von 18,5 Teilen Cyanurchlorid umgesetzt, welche in 110 Teilen Aceton gelöst und mit 250 Teilen Eis wieder gefällt wurden. Die Umsetzung erfolgt bei pH 6,0 - 6,5, wobei die Einhaltung des pH-Wertes durch Zutropfen von 50 Teilen 2-normaler Sodalösung erfolgt. Nun gibt man eine neutrale wässrige Lösung von 19 Teilen 1,3-Phenylendiamin-4-sulfosäure zu. Man kondensiert bei 20 - 25°, wobei durch Zutropfen von Natronlauge der pH-Wert der Lösung bei 6 - 7 gehalten wird. Nach beendeter Kondensation kühlt man auf 0° ab und versetzt mit einer Lösung von 18,5 Teilen Cyanurchlorid in 50 Teilen Aceton. Man kondensiert bei 0 - 5°, wobei man durch Zugabe von Natronlauge den pH-Wert 6 - 7 hält. Nach beendeter Kondensation fügt man 22 Teile $HClH_2N(CH_2)_2$-O-$(CH_2)_2SO_2(CH_2)_2Cl$ zu und rührt 3 Stunden bei 20 - 40°C und pH 7 - 8. Durch Zugabe von Kochsalz wird der Farbstoff der Formel

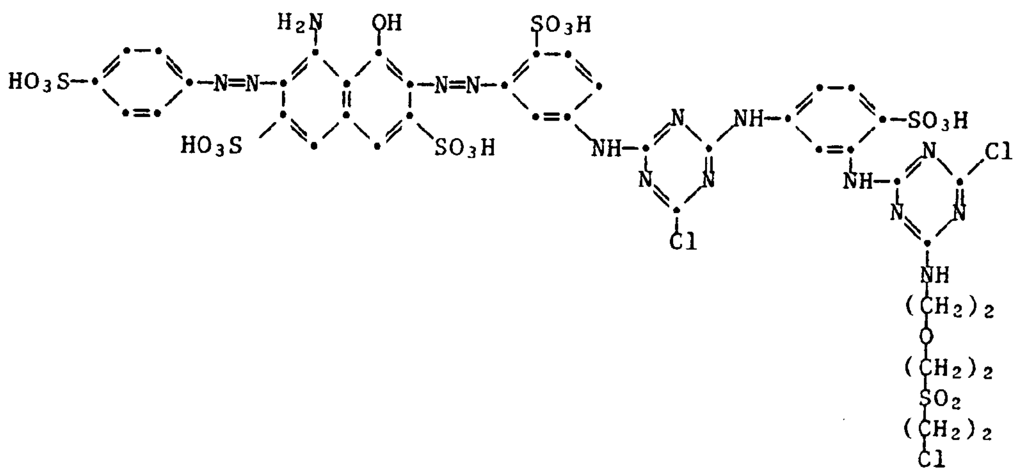

ausgesalzt, dann abfiltriert und getrocknet. Er färbt Cellulosefasern in echten, marineblauen Tönen.

Beispiel 13:

54,4 Teile des Farbstoffes 2-(4′-Amino-2-ureido-phenylazo)-naphthalin-3,6,8-trisulfonsäure werden mit 250 Teilen Wasser neutral gelöst. Diese neutrale Lösung wird auf 0°C abgekühlt und dann innert 15 Minuten mit 14 Teilen Cyanurfluorid versetzt.

Im Verlauf der Acylierungsreaktion werden 9 g Bicarbonat so eingetragen, dass der pH zwischen 5,5 und 7 bleibt. Wenn kein Ausgangsfarbstoff mehr im Chromatogramm nachweisbar ist, gibt man eine neutrale wässrige Lösung von 19 Teilen 1,3-Phenylendiamin-4-sulfonsäure zu. Man kondensiert bei 20 - 25°, wobei durch Zutropfen von Natronlauge der pH-Wert der Lösung bei 6 - 7 gehalten wird. Nach beendeter Kondensation kühlt man auf 0° ab und versetzt mit einer Lösung von 18,5 Teilen Cyanurchlorid in 50 Teilen Aceton. Man kondensiert bei 0 - 5°, wobei man durch Zugabe von Natronlauge den pH-Wert 6 - 7 hält. Nach beendeter Kondensation fügt man 22 Teile $HClH_2N(CH_2)_2SO_2(CH_2)_2Cl$ zu und rührt 3 Stunden bei 20 - 40° und pH 7 - 8. Durch Zugabe

von Kochsalz wird der Farbstoff der Formel

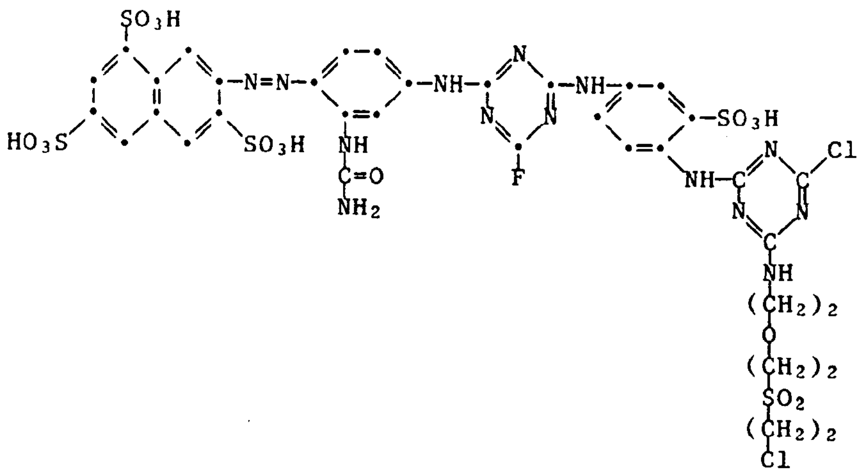

ausgesalzt, dann abfiltriert und getrocknet. Er färbt Cellulosefasern in echten, goldgelben Tönen.

Analog zu den in den Beispielen 1 bis 13 beschriebenen Verfahren können auch die in der folgenden Tabelle aufgeführten Farbstoffe der Nrn. 14 bis 47 hergestellt werden. Die Farbstoffe färben Cellulosefasern in den in der dritten Spalte angegebenen Tönen.

| Bsp. Nr. | Farbstoff | Farbton |
|---|---|---|
| 14 | 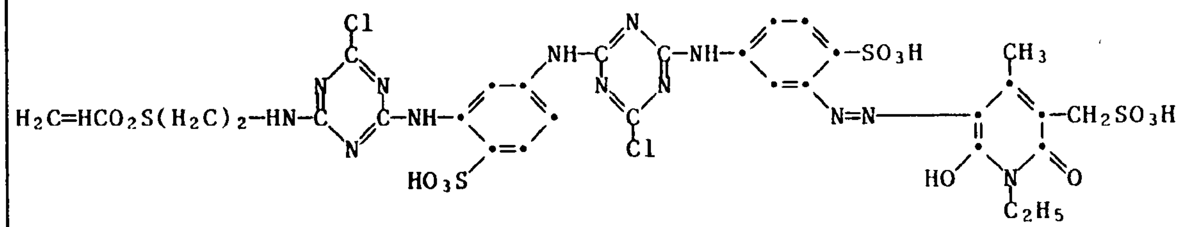 | Zitronen-gelb |
| 15 | 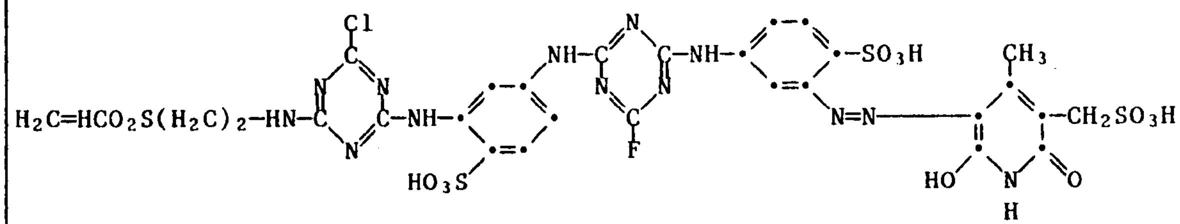 | Zitronen-gelb |
| 16 | 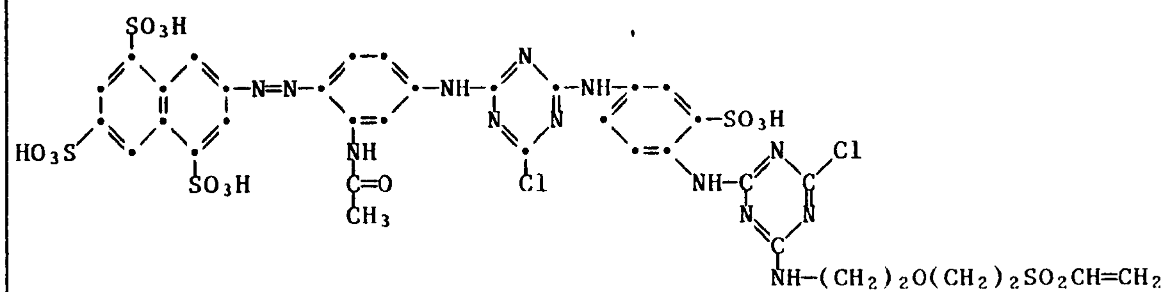 | Gelb |

| Bsp. Nr. | Farbstoff | Farbton |
|---|---|---|
| 17 | 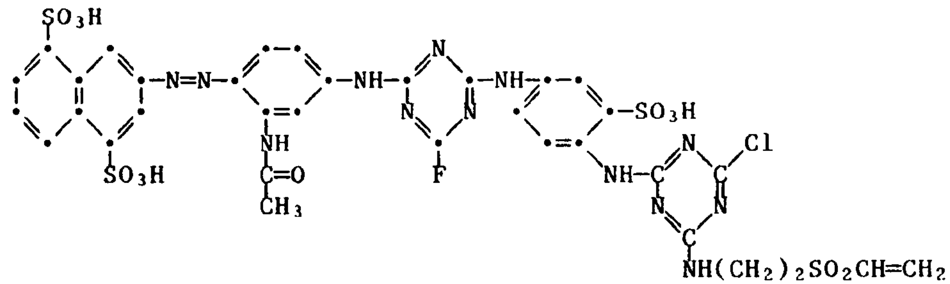 | Gelb |
| 18 | 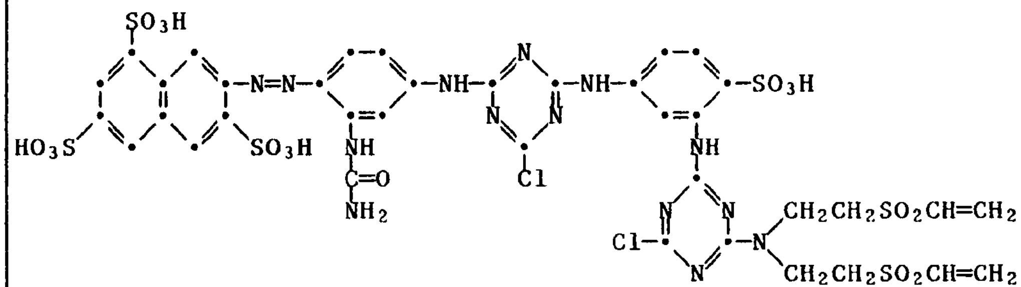 | Goldgelb |
| 19 | 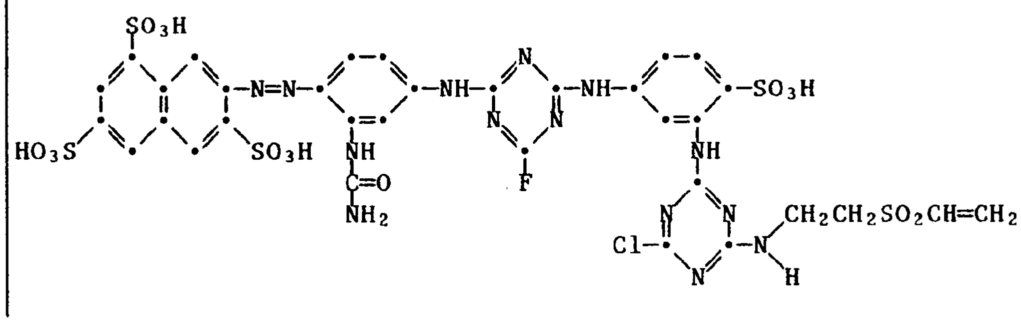 | Goldgelb |

| Bsp. Nr. | Farbstoff | Farbton |
|---|---|---|
| 20 | 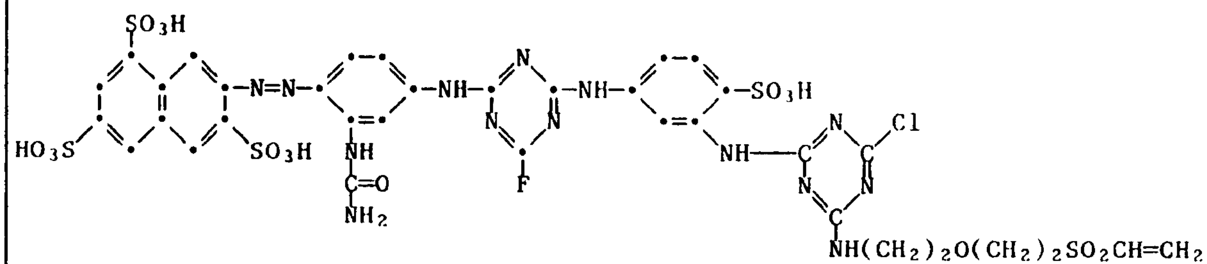 | Goldgelb |
| 21 | 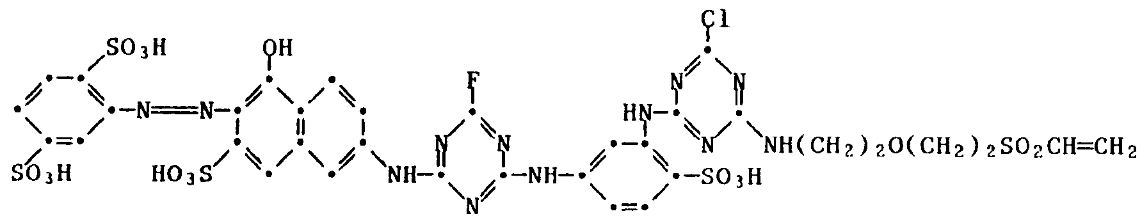 | Gold-orange |
| 22 | 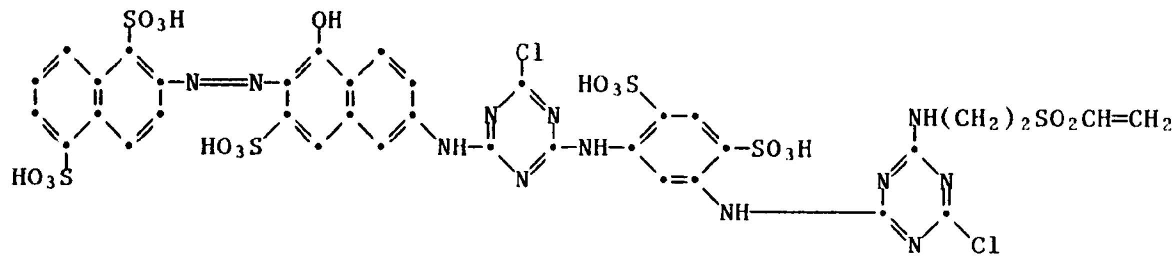 | Orange |

| Bsp. Nr. | Farbstoff | Farbton |
|---|---|---|
| 23 | 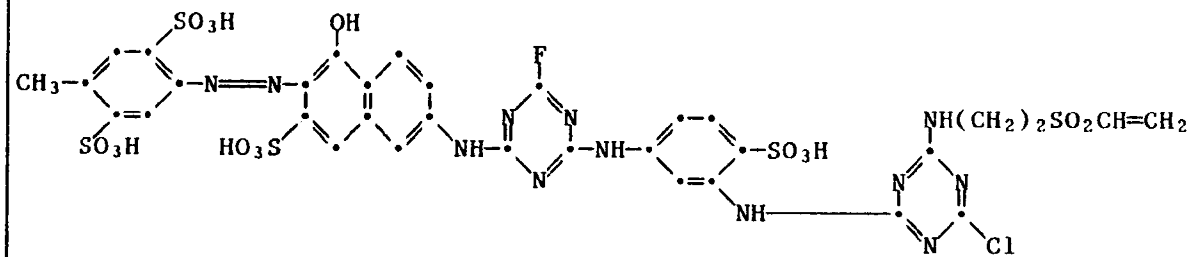 | Orange |
| 24 | 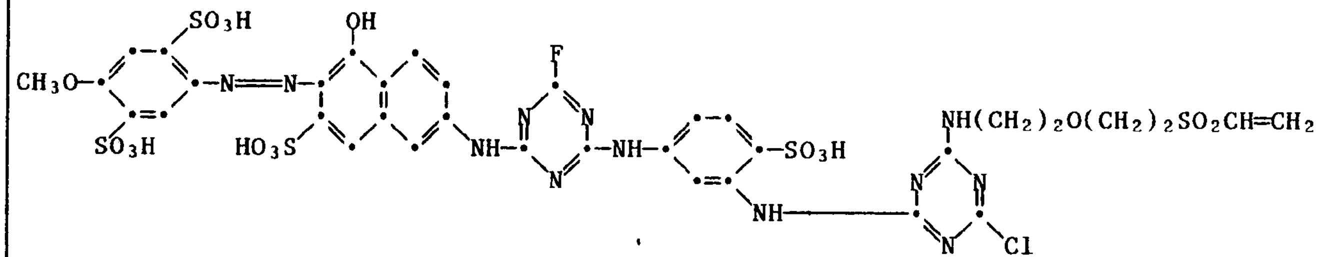 | Scharlach |
| 25 | 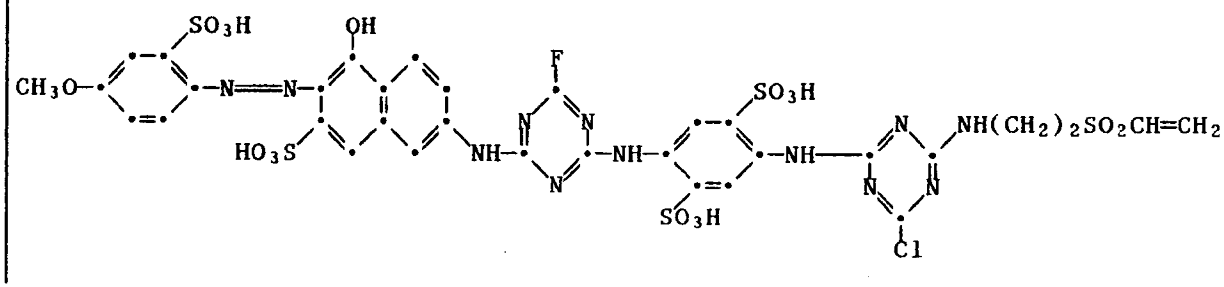 | Scharlach |

| Bsp. Nr. | Farbstoff | Farbton |
|---|---|---|
| 26 | 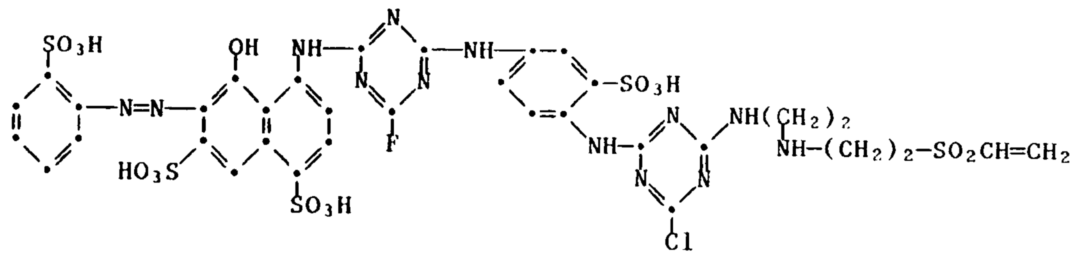 | Scharlach |
| 27 | 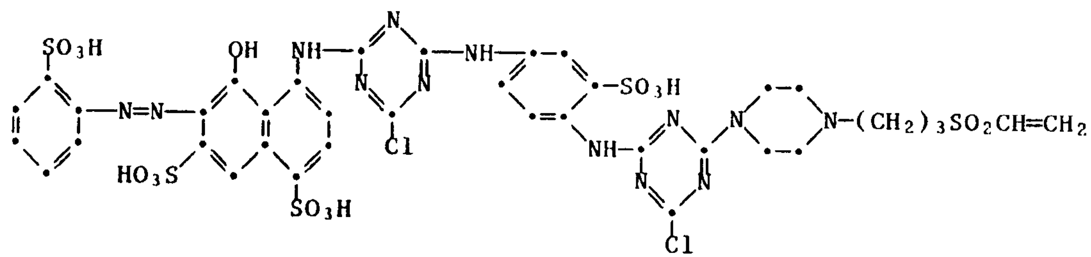 | Scharlach |
| 28 | 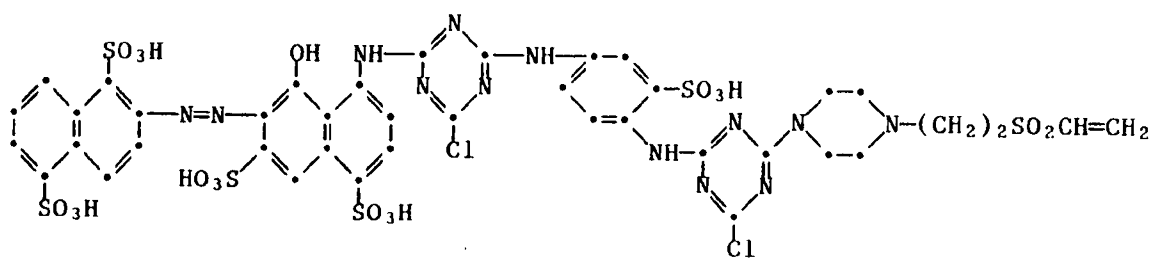 | Rot |

| Bsp. Nr. | Farbstoff | Farbton |
|---|---|---|
| 29 | 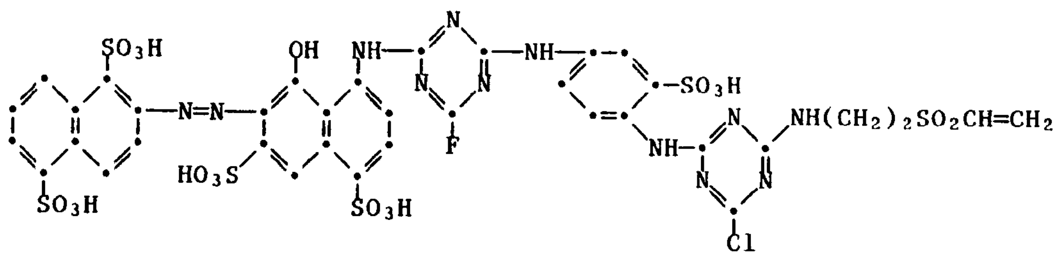 | Rot |
| 30 | 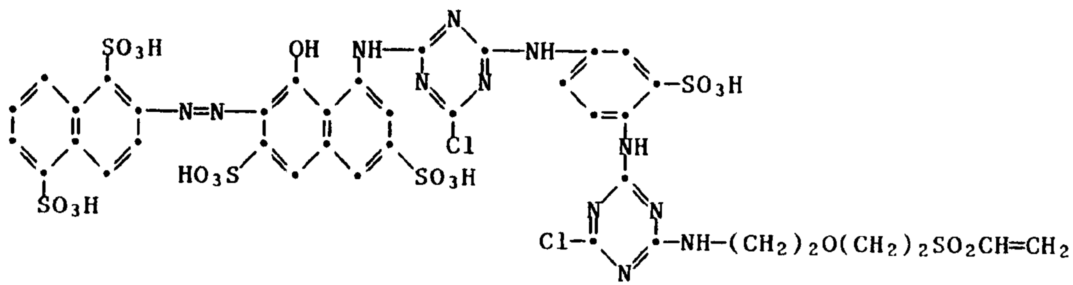 | Blau-stichig Rot |
| 31 | 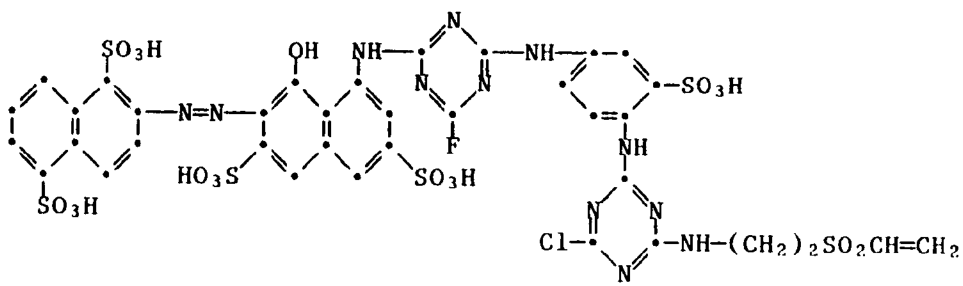 | Blau-stichig Rot |

| Bsp. Nr. | Farbstoff | Farbton |
|---|---|---|
| 32 | 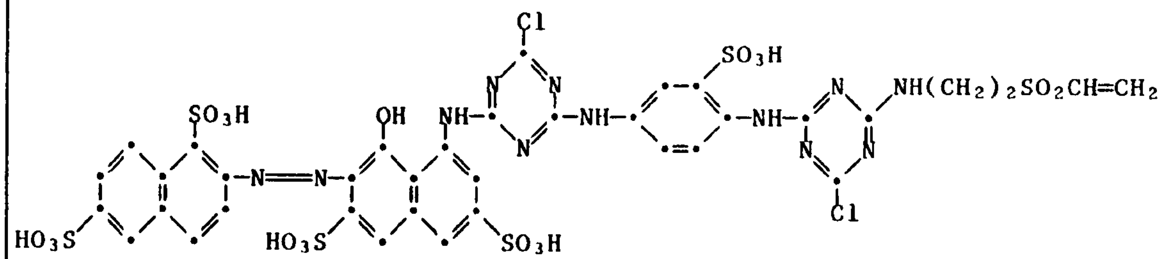 | Blau-stichig Rot |
| 33 | 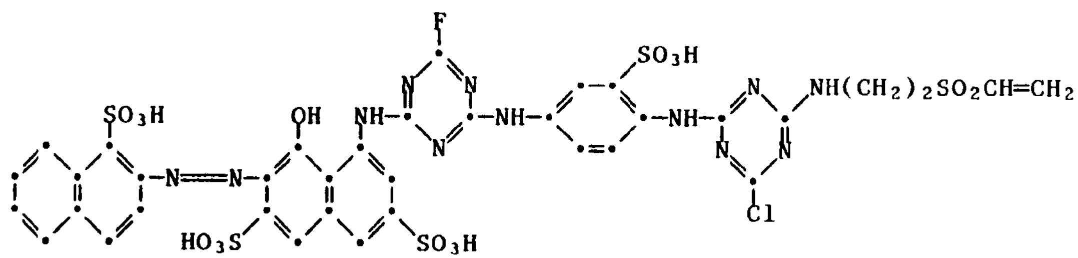 | Blau-stichig Rot |
| 34 | 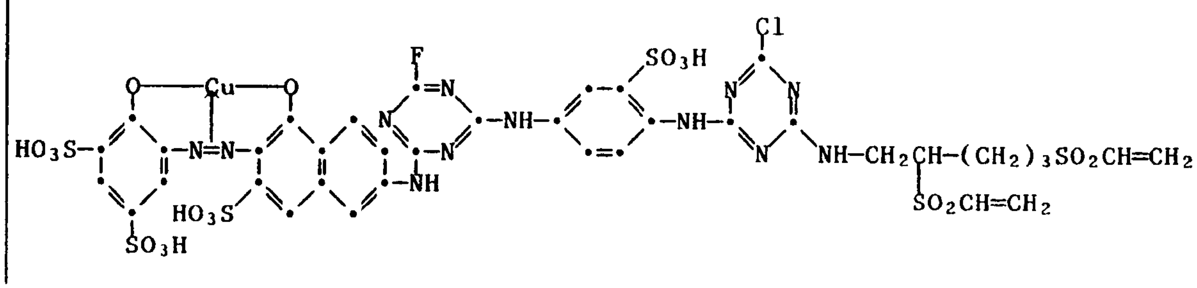 | Blau |

| Bsp. Nr. | Farbstoff | Farbton |
|---|---|---|
| 35 | 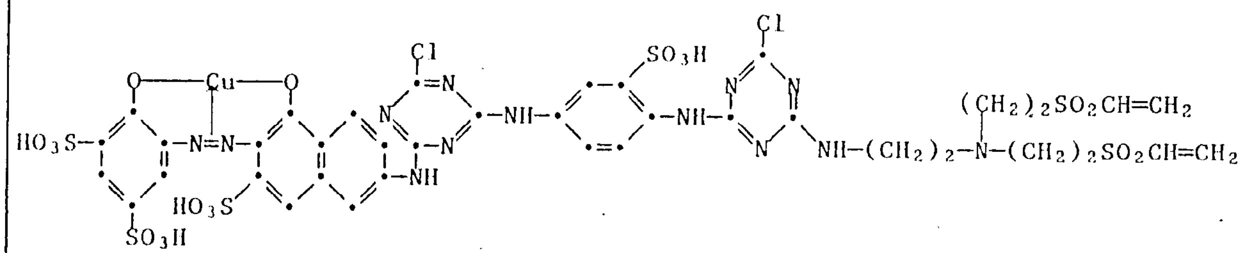 | Blau |
| 36 | 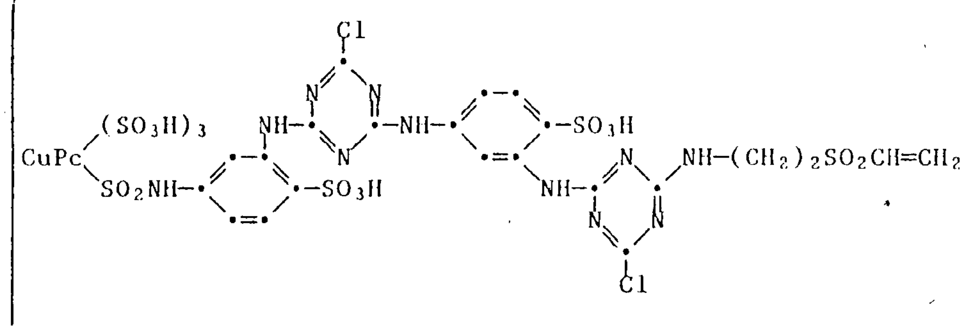 | Türkis |

| Bsp. Nr. | Farbstoff | Farbton |
|---|---|---|
| 37 | 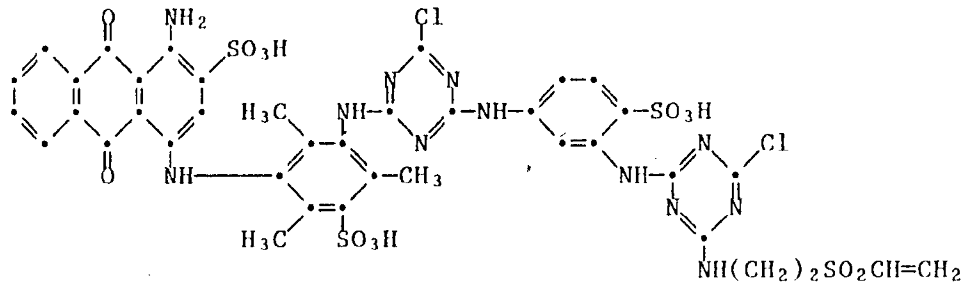 | Blau |
| 38 | 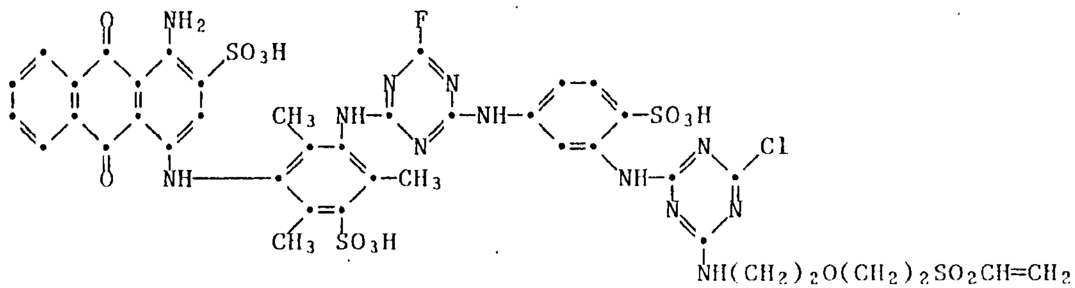 | Blau |
| 39 | 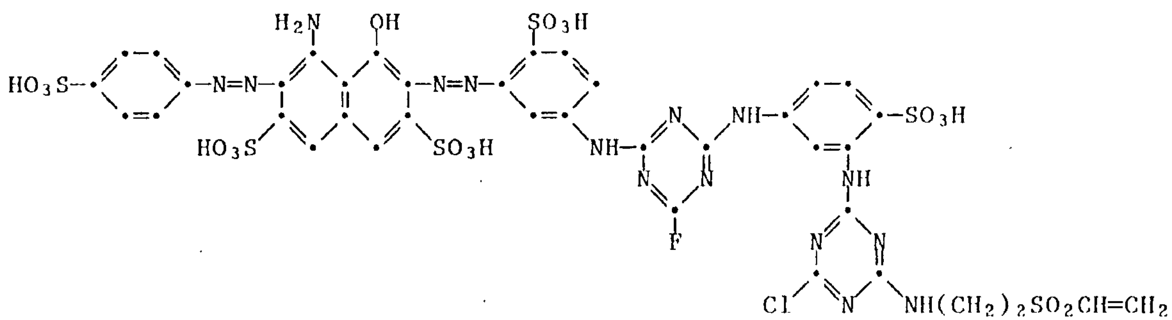 | Marine-blau |

| Bsp. Nr. | Farbstoff | Farbton |
|---|---|---|
| 40 | 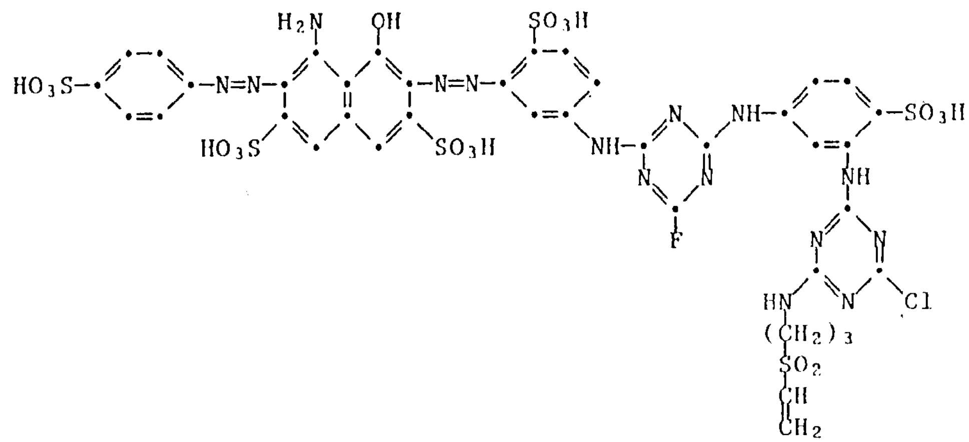 | Marine-blau |
| 41 | 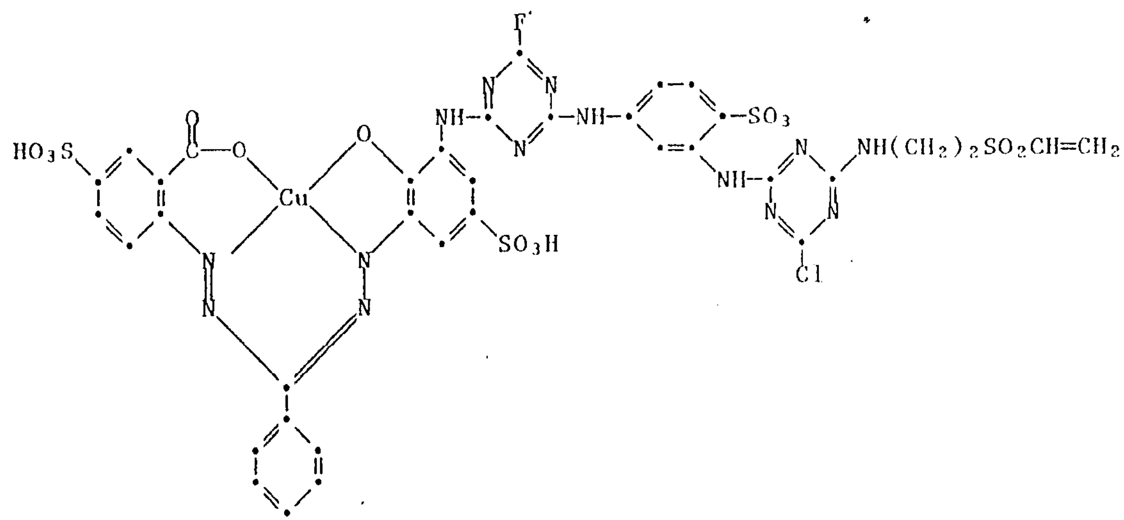 | Blau |

| Bsp. Nr. | Farbstoff | Farbton |
|---|---|---|
| 42 | 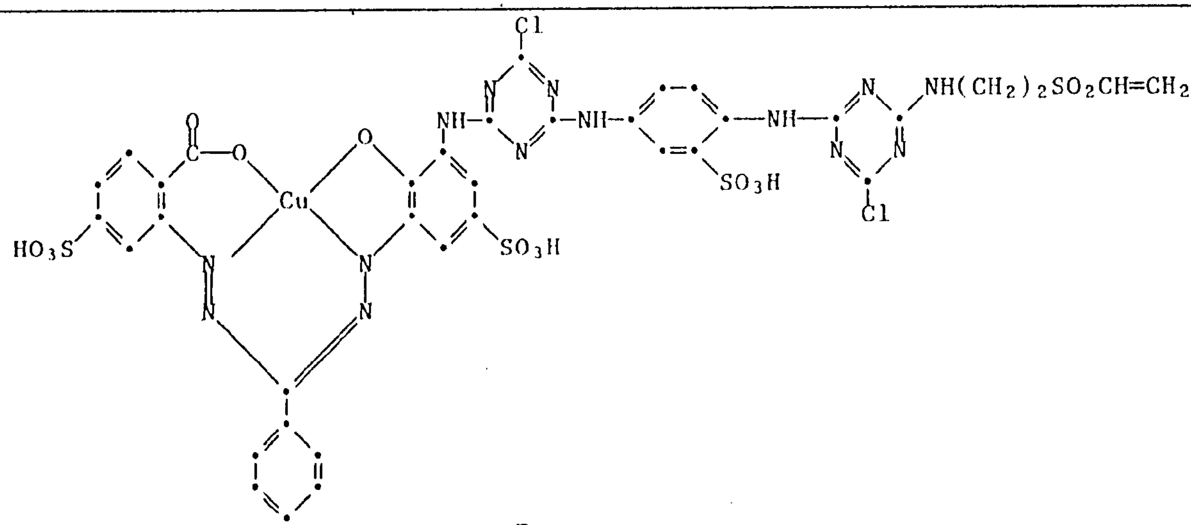 | Blau |
| 43 | 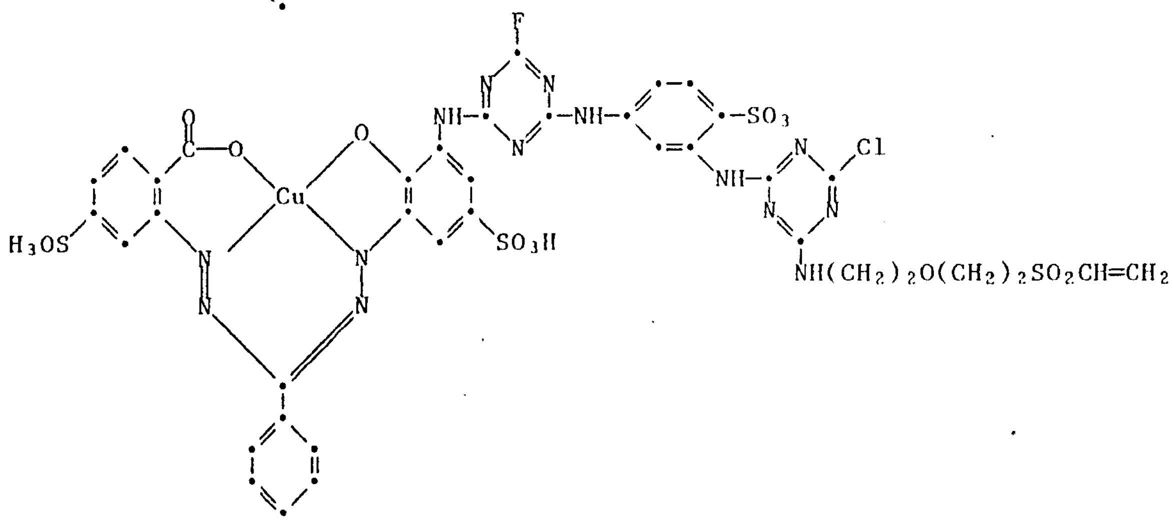 | Blau |

| Bsp. Nr. | Farbstoff | Farbton |
|---|---|---|
| 44 | 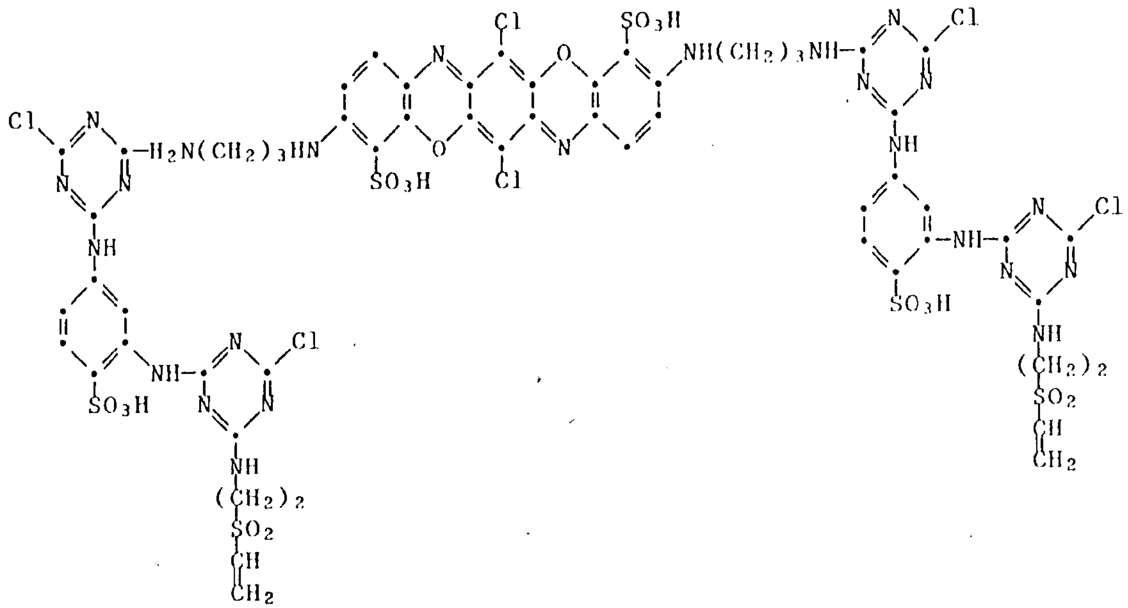 | Blau |
| 45 | 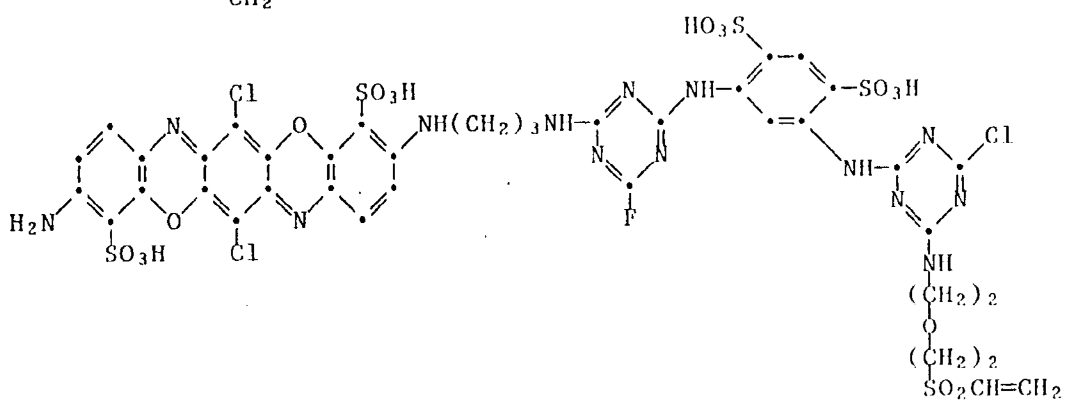 | Blau |

| Bsp. Nr. | Farbstoff | Farbton |
|---|---|---|
| 46 | 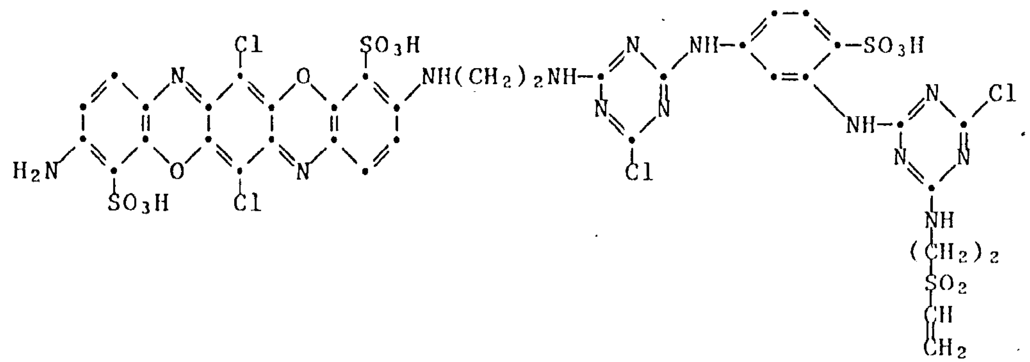 | Blau |
| 47 | 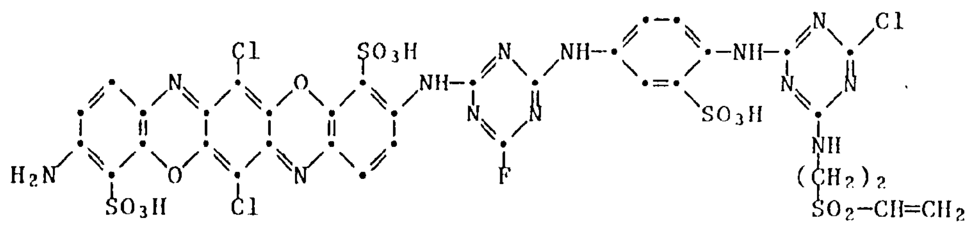 | Blau |

Färbevorschrift I

2 Teile des gemäss Beispeil 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispeil 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispeil 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyid und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70 % seines Gewichtes zunimmt, und dann auf eine Kaulge aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfosaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Färbevorschrift VII

In 2000 Teile Wasser werden 2 Teile des Farbstoffes von Beispiel 5, 160 Teile Natriumsulfat und als Puffermittel 4 Teile $Na_2HPO_4 \cdot 12H_2O$ und 1 Teil $KH_2PO_4$ gegeben, so dass ein Färbebad mit einem pH von 7 erhalten wird. In dieses Bad werden 100 Teile einer Wirkware aus nicht-mercerisierter Baumwolle eingetaucht. Im Laufe von 30 Minuten wird die Temperatur des Bades auf 130°C gebracht, und bei dieser Temperatur wird 60 Minuten lang gefärbt. Danach wird die gefärbte Ware aus dem Bad genommen, mit Wasser gewaschen, geseift, wieder mit Wasser gewaschen und getrocknet. Es wird eine tiefrote Färbung erhalten.

Färbevorschrift VIII

In 2000 Teile Wasser werden 2 Teile des Farbstoffes von Beispiel 5, 2 Teile des bekannten wasserunlöslichen Anthrachinonfarbstoffes der Formel

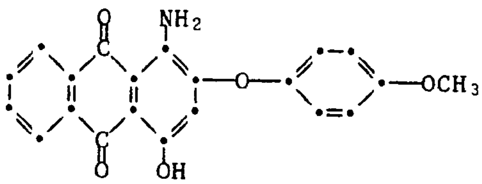 ,

120 Teile Natriumsulfat und als Puffermittel 4 Teile $Na_2HPO_4 \cdot 12H_2O$ und 1 Teil $KH_2PO_4$ gegeben. In das so erhaltene Färbebad werden 100 Teile eines Polyester/Baumwoll-Mischgewebes (50:50) eingetaucht, und im Laufe von 30 Minuten wird die Temperatur des Bades auf 130°C gebracht, bei welcher 60 Minuten gefärbt wird. Dann wird das gefärbte Gewebe aus dem Bad genommen, mit Wasser gewaschen, geseift, erneut mit Wasser gewaschen und getrocknet. Es wird ein egal rot gefärbtes Gewebe erhalten. Das Färbebad wird vor Beginn und während des Färbens auf pH 7 gehalten.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel I erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel

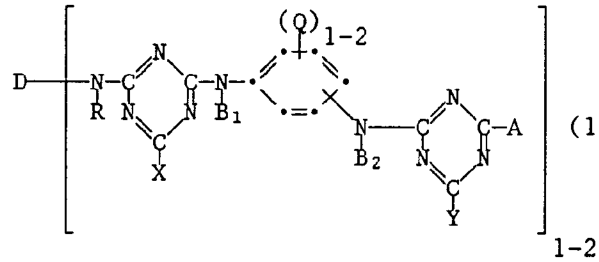 (1),

worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; R, $B_1$ und $B_2$ unabhängig voneinander Wasserstoff oder Alkyl mit 1 bis 4 Kohlenstoffatomen, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann; X und Y unabhängig voneinander Fluor, Chlor, Brom, Sulfo, $C_1$-$C_4$-Alkylsulfonyl oder Phenylsulfonyl; A ein Aminosubstituent, der mindestens eine Gruppe der Formel

$$-SO_2-Z \qquad (2)$$

enthält, und Z β-Sulfatoäthyl, β-Thiosulfatoäthyl, β-Phosphatoäthyl, β-Acyloxyäthyl, β-Halogenäthyl oder Vinyl ist; und Q für 1 bis 2 Substituenten aus der Gruppe Wasserstoff, $C_1$-$C_4$-Alkyl, $C_1$-$C_4$-Alkoxy, Halogen, Carboxy oder Sulfo steht, ausgenommen Reaktivfarbstoffe der Formel (1), worin D ein Phthalocyaninrest ist und weder X noch Y Fluor bedeutet.

2. Reaktivfarbstoffe gemäss Anspruch 1, worin A ein Rest der Formel

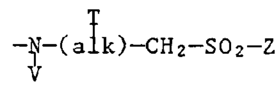 (3a)

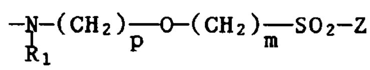 (3b)

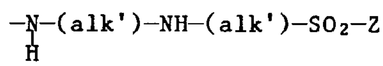 (3c)

oder

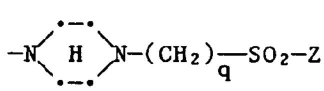 (3d)

ist; Z die in Anspruch 1 angegebene Bedeutung hat; alk ein Alkylenrest mit 1 bis 6 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl oder ein Rest $-SO_2-Z$, worin Z die oben angegebene Bedeutung hat; V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann; oder ein Rest

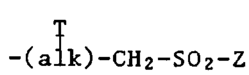 (3e)

worin Z, alk und T die angegebenen Bedeutungen haben; Rg Wasserstoff oder $C_1$-$C_6$-Alkyl, alk' unabhängig voneinander Polymethylenreste mit 2 bis 6 C-Atomen oder deren verzweigte Isomere; und m = 1 bis 6, p = 1 bis 6 und q = 1 bis 6 ist.

3. Reaktivfarbstoffe gemäss Anspruch 1, worin A ein Rest der Formel

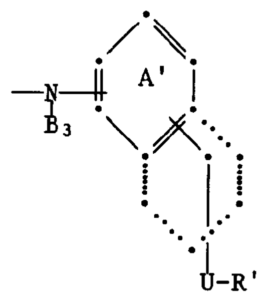

(4)

worin $B_3$ Wasserstoff oder Alkyl mit 1 bis 4 Kohlenstoffatomen, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann; U -CO- oder -$SO_2$-; R′ ein Rest der Formel

$$-\underset{V}{N}-(\overset{T}{alk})-CH_2-SO_2-Z \qquad (3a)$$

$$-\underset{R_1}{N}-(CH_2)_p-O-(CH_2)_m-SO_2-Z \qquad (3b)$$

$$-\underset{H}{N}-(alk')-NH-(alk')-SO_2-Z \qquad (3c)$$

oder

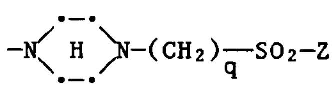

(3d)

ist, Z die in Anspruch 1 angegebene Bedeutung hat; alk ein Alkylenrest mit 1 bis 6 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest -$SO_2$-Z, worin Z die oben angegebene Bedeutung hat; V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann; oder ein Rest

$$-(\overset{T}{alk})-CH_2-SO_2-Z \qquad (3e),$$

worin Z, alk und T die angegebenen Bedeutungen haben; Rg Wasserstoff oder $C_1$-$C_6$-Alkyl, alk′ unabhängig voneinander Polymethylenreste mit 2 bis 6 C-Atomen oder deren verzweigte Isomere; und m = 1 bis 6, p = 1 bis 6 und q = 1 bis 6 ist; wobei falls U -$SO_2$- ist, V nicht Wasserstoff sein darf; und der Benzol- bzw. Naphthalinrest A′ weitere Substituenten enthalten kann.

4. Reaktivfarbstoffe gemäss Anspruch 1, worin A ein Rest der Formel

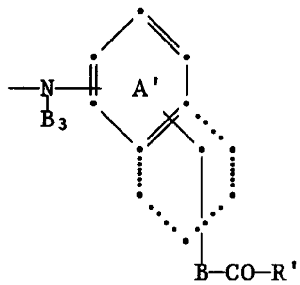

(5),

worin $B_3$ Wasserstoff oder Alkyl mit 1 bis 4 Kohlenstoffatomen, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann; B ein Rest

$$-(CH_2)_n- \;, \quad -O-(CH_2)_n- \quad \text{oder} \quad -NH-(CH_2)_n- ,$$

n = 1 bis 6; R′ ein Rest der Formel

$$-\underset{\substack{|\\ V}}{N}-(\overset{\substack{T\\ |}}{alk})-CH_2-SO_2-Z \qquad (3a)$$

$$-\underset{\substack{|\\ R_1}}{N}-(CH_2)_p-O-(CH_2)_m-SO_2-Z \qquad (3b)$$

$$-\underset{\substack{|\\ H}}{N}-(alk')-NH-(alk')-SO_2-Z \qquad (3c)$$

oder

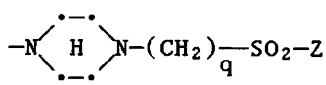

(3d)

ist; Z die in Anspruch 1 angegebene Bedeutung hat; alk ein Alkylenrest mit 1 bis 6 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat; V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann; oder ein Rest

$$-(\overset{\substack{T\\ |}}{alk})-CH_2-SO_2-Z \qquad (3e),$$

worin Z, alk und T die angegebenen Bedeutungen haben; Rg Wasserstoff oder $C_1$-$C_6$-Alkyl, alk′ unabhängig voneinander Polymethylenreste mit 2 bis 6 C-Atomen oder deren verzweigte Isomere; und m = 1 bis 6, p = 1 bis 6 und q = 1 bis 6 ist; und der Benzol- bzw. Naphthalinrest A′ weitere Substitutenten enthalten kann.

5. Reaktivfarbstoffe gemäss Anspruch 1, worin A ein Rest der Formel

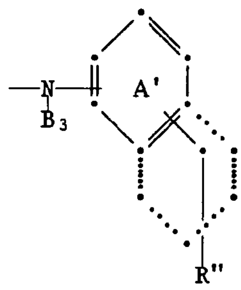

(6),

worin $B_3$ Wasserstoff oder Alkyl mit 1 bis 4 Kohlenstoffatomen, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann; R″ ein Rest der Formel

$$-SO_2-Z \quad (2)$$

$$-\underset{R_1}{N}-SO_2-Z \quad (2a)$$

oder

$$-\underset{R_1}{N}-CO-(CH_2)_r-SO_2-Z \quad (2b)$$

ist; Z die in Anspruch 1 angegebene Bedeutung hat; Rg Wasserstoff oder $C_1$-$C_6$-Alkyl; und r = 3 bis 5 ist; und der Benzol- bzw. Naphthalinrest A′ weitere Substituenten enthalten kann.

6. Reaktivfarbstoffe gemäss Anspruch 2, worin A ein Rest der Formel

$$-NHCH_2CH_2SO_2CH_2CH_2Cl \quad (7a)$$

$$-N\begin{matrix} CH_2CH_2SO_2CH_2CH_2Cl \\ CH_2CH_2SO_2CH_2CH_2Cl \end{matrix} \quad (7b)$$

$$-NHCH_2CH_2OCH_2CH_2SO_2CH_2CH_2Cl \quad (7c)$$

$$-NHCH_2CH_2SO_2CH=CH_2 \quad (7d)$$

$$-N\begin{matrix} CH_2CH_2SO_2CH=CH_2 \\ CH_2CH_2SO_2CH=CH_2 \end{matrix} \quad (7e)$$

$$-NHCH_2CH_2OCH_2CH_2SO_2CH=CH_2 \quad (7f)$$

$$-NHCH_2CH_2NHCH_2CH_2SO_2CH=CH_2 \quad (7g)$$

$$-NHCH_2CH_2N\begin{matrix} CH_2CH_2SO_2CH=CH_2 \\ CH_2CH_2SO_2CH=CH_2 \end{matrix} \quad (7h)$$

oder

$$-NHCH_2CH\begin{matrix} SO_2CH=CH_2 \\ CH_2CH_2CH_2SO_2CH=CH_2 \end{matrix} \quad (7i)$$

ist.

7. Reaktivfarbstoffe gemäss Anspruch 3, worin A ein Rest der Formel

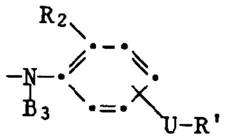

(8)

und $R_2$ Wasserstoff, $C_1$-$C_4$-Alkyl, $C_1$-$C_4$-Alkoxy, Halogen, Hydroxy, Carboxy oder Sulfo ist; und $B_3$, U und R′ die in Anspruch 3 angegebenen Bedeutungen haben.

8. Reaktivfarbstoffe gemäss Anspruch 1, worin $B_1$ und $B_2$ Wasserstoff und Q Sulfo ist.

9. Reaktivfarbstoffe gemäss Anspruch 1, worin X und Y Chloratome sind.

10. Reaktivfarbstoffe gemäss Anspruch 1, worin R Wasserstoff, Methyl oder Aethyl ist.

11. Reaktivfarbstoffe gemäss Anspruch 1, worin D der Rest eines Mono- oder Disazofarbstoffes ist.

12. Reaktivfarbstoffe gemäss Anspruch 1, worin D der Rest eines Metallkomplexazo- oder Formazanfarbstoffes ist.

13. Reaktivfarbstoffe gemäss Anspruch 1, worin D der Rest eines Anthrachinonfarbstoffes ist.

14. Reaktivfarbstoffe gemäss Anspruch 1, worin D der Rest eines Phthalocyaninfarbstoffes ist.

15. Reaktivfarbstoffe gemäss Anspruch 1, worin D der Rest eines Dioxazinfarbstoffes ist.

16. Reaktivfarbstoffe gemäss Anspruch 11, worin D ein Mono- oder Disazofarbstoffrest der Formel

$$D_1-N{=}N-(M-N{=}N)_s-K- \qquad (9a),$$

$$-D_1-N{=}N-(M-N{=}N)_s-K \qquad (9b),$$

oder

$$-D_1-N{=}N-(M-N{=}N)_s-K- \qquad (9c),$$

oder eines davon abgeleiteten Metallkomplexes; $D_1$ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon, 6-Hydroxypyridon-(2)oder Acetessigsäurearylamid-Reihe ist, wobei $D_1$, M und K bei Azofarbstoffen übliche Substituenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; s = 0 oder 1 ist; und $D_1$, M und K zusammen mindestens zwei Sulfogruppen, vorzugsweise drei oder vier Sulfogruppen, enthalten.

17. Reaktivfarbstoffe gemäss Anspruch 11, worin D ein Disazofarbstoffrest der Formel

$$D_1-N{=}N-K-N{=}N-D_2- \qquad (10a),$$

oder

$$-D_1-N{=}N-K-N{=}N-D_2- \qquad (10b),$$

$D_1$ und $D_2$ unabhängig voneinander der Rest einer Diazokomponente der Benzol- oder Naphthalinreihe, und K der Rest einer Kupplungskomponente der Napthalinreihe ist; wobei $D_1$, $D_2$ und K bei Azofarbstoffen übliche Substituenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; und $D_1$, $D_2$ und K zusammen mindestens zwei Sulfogruppen, vorzugsweise drei oder vier Sulfogruppen enthalten.

18. Reaktivfarbstoffe gemäss Anspruch 12, worin D der Rest eines 1:1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

19. Reaktivfarbstoffe gemäss Anspruch 12, worin D der Rest eines Formazanfarbstoffes der Formel

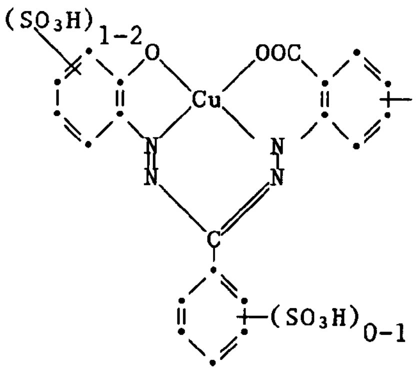

(11a) oder

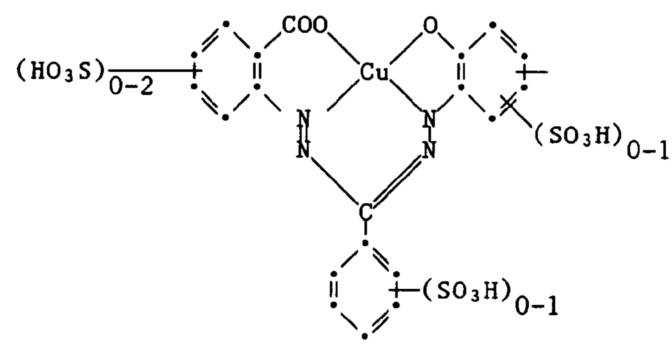

(11b),

ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.

20. Reaktivfarbstoffe gemäss Anspruch 13, worin D der Rest eines Anthrachinonfarbstoffes der Formel

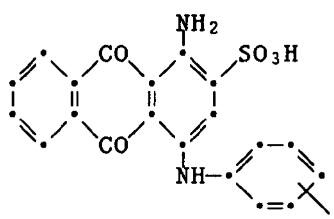

(12)

ist; wobei der Anthrachinonkern durch eine weitere Sulfogruppe, und der Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 stark wasserlöslichmachende Gruppen enthält.

21. Reaktivfarbstoffe gemäss Anspruch 14, worin D der Rest eines Phthalocyaninfarbstoffes der Formel

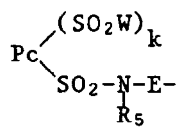

(13),

Pc der Rest eines Kupfer- oder Nickelphthalocyanins; W -OH und/oder $-NR_3R_4$; $R_3$ und $R_4$ unabhängig voneinander Wasserstoff oder Alkyl mit 1 bis 4 Kohlenstoffatomen, das durch Hydroxy oder Sulfo substituiert sein kann; $R_5$ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Aethylenrest; und k = 1 bis 3 ist.

22. Reaktivfarbstoffe gemäss Anspruch 15, worin D der Rest eines Dioxazinfarbstoffes der Formel

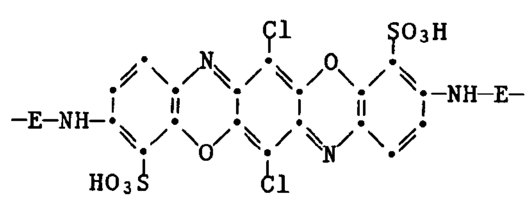

(14a)

oder

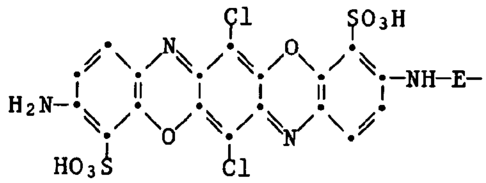

(14b)

ist, worin E ein Phenylenrest, der durch Alkyl mit 1 bis 4 C-Atomen, Halogen, Carboxy oder Sulfo substituiert sein kann; oder ein Alkylenrest mit 2 bis 6 C-Atomen ist; und die äusseren Benzolringe in den Formeln (14a) und (14b) durch Alkyl mit 1 bis 4 C-Atomen, Alkoxy mit 1 bis 4 C-Atomen, Acetylamino, Nitro, Halogen, Carboxy oder Sulfo weitersubstituiert sein können.

23. Reaktivfarbstoffe gemäss Anspruch 19, der Formel

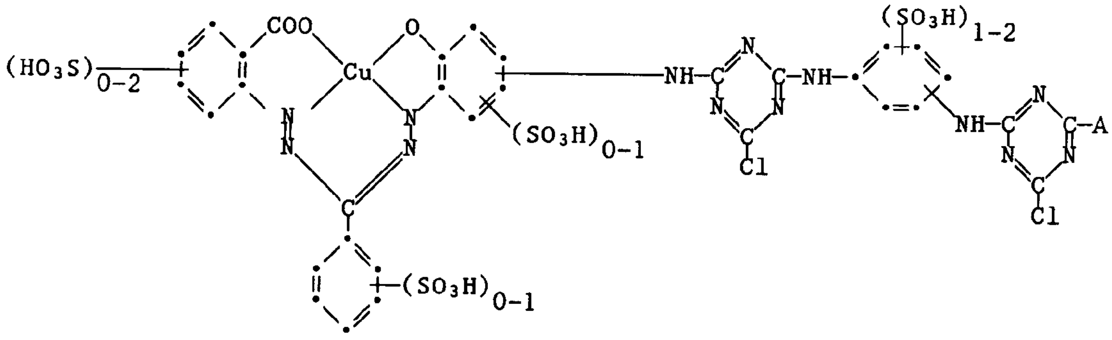

(11b'),

worin A die in Anspruch 6 angegebenen Bedeutungen hat.

24. Reaktivfarbstoffe gemäss Anspruch 20, der Formel

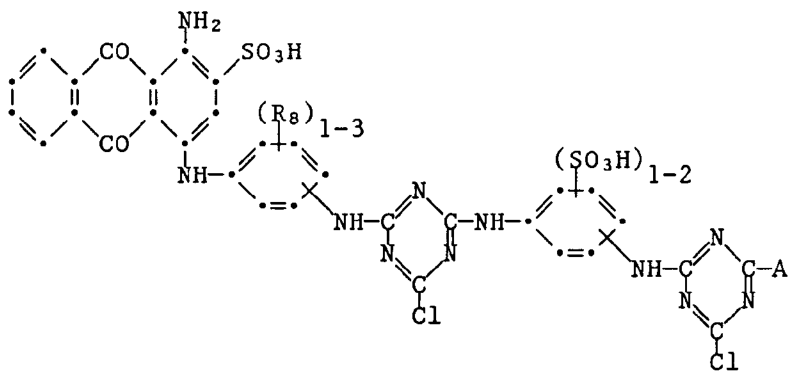

(12a),

worin $R_8$ für 1 bis 3 Substituenten aus der Gruppe Wasserstoff, $C_1$-$C_4$-Alkyl, $C_1$-$C_4$-Alkoxy, Halogen, Carboxy und Sulfo steht, und A die in Anspruch 6 angegebenen Bedeutungen hat.

25. Reaktivfarbstoff gemäss Anspruch 21, der Formel

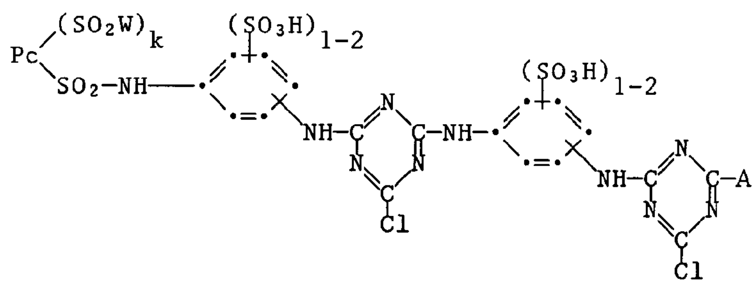

(13a),

worin Pc der Rest eines Kupfer- oder Nickelphthalocyanins; W -OH und/oder $-NR_3R_4$; $R_3$ und $R_4$ unabhängig voneinander Wasserstoff oder Alkyl mit 1 bis 4 Kohlenstoffatomen ist, das durch Hydroxy oder Sulfo substituiert sein kann; k = 1 bis 3, und A die in Anspruch 6 angegebenen Bedeutungen hat.

26. Reaktivfarbstoffe gemäss Anspruch 22, der Formel

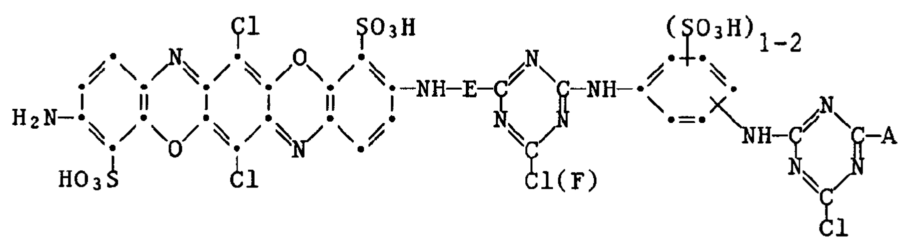

(14b'),

worin E eine direkte Bindung oder ein $-(CH_2)_2-NH-$ oder $-(CH_2)_3-NH-$ Rest ist, und A die in Anspruch 6 angegebenen Bedeutungen hat.

27. Reaktivfarbstoffe gemäss Anspruch 16, der Formel

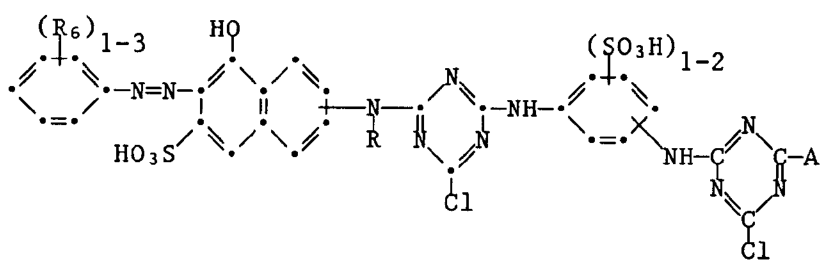

(15),

oder der Formel

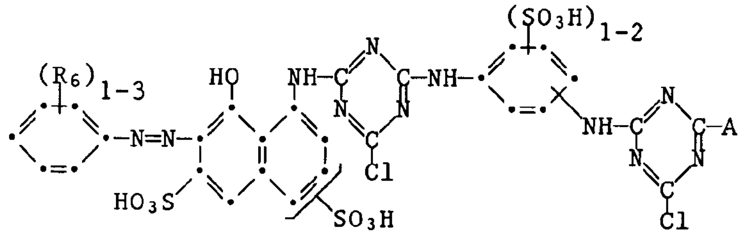

(16)

worin $R_6$ für 1 bis 3 Substituenten aus der Gruppe $C_1$-$C_4$-Alkyl, $C_1$-$C_4$-Alkoxy, Halogen, Carboxy und Sulfo steht; oder der Formel

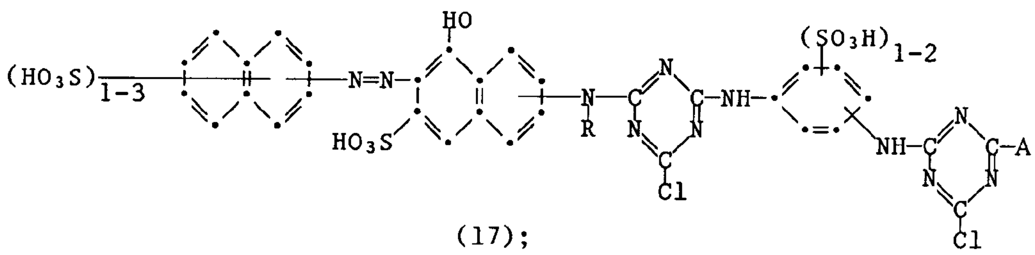

(17);

oder der Formel

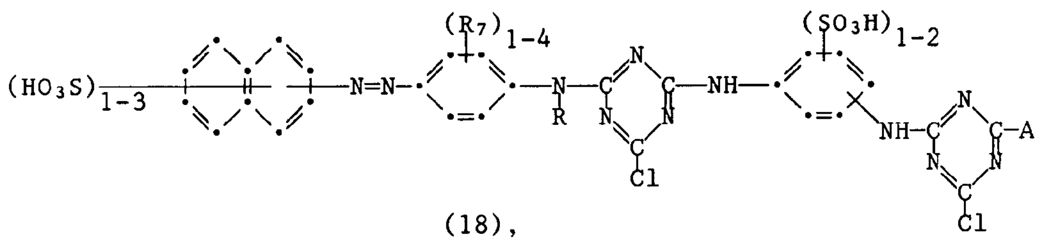

(18),

worin $R_7$ für 1 bis 4 Substituenten aus der Gruppe Wasserstoff, Halogen, Nitro, Cyan, Trifluormethyl, Sulfamoyl, Carbamoyl, $C_1$-$C_4$-Alkyl, $C_1$-$C_4$-Alkoxy, Amino, Acetylamino, Ureido, Hydroxy, Carboxy, Sulfomethyl und Sulfo unabhängig voneinander, steht; oder der Formel

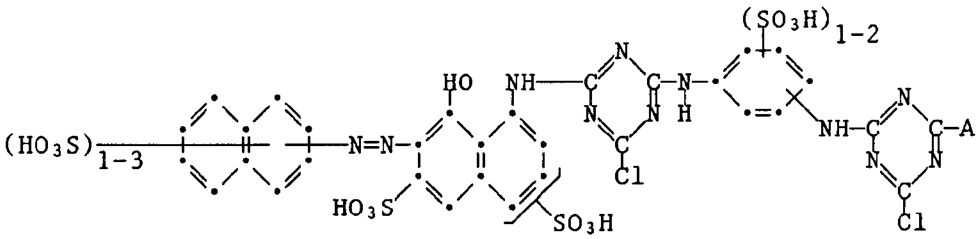

(19);

worin A in den Formeln (15) bis (19) die in Anspruch 6 angegebene Bedeutung hat.

28. Reaktivfarbstoffe gemäss Anspruch 11, der Formel

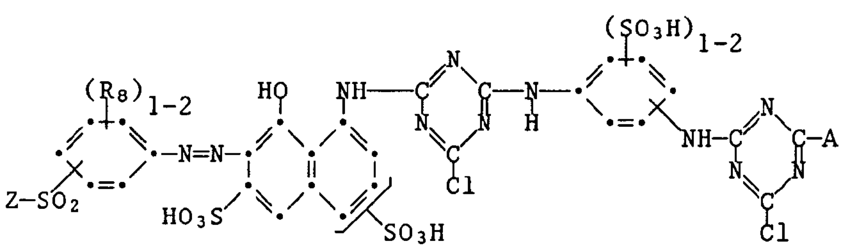

(20)

oder

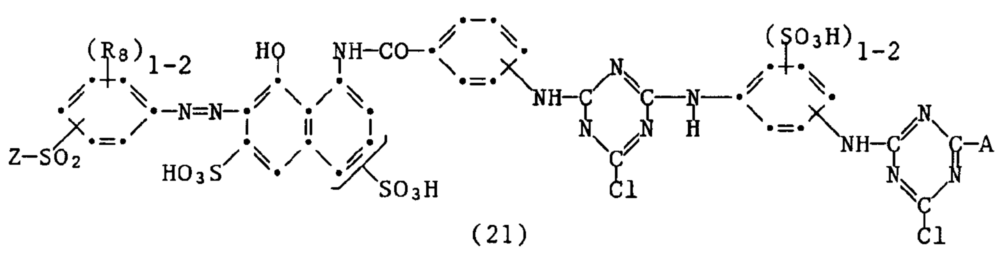

(21)

worin $R_8$ für 1 bis 2 Substituenten aus der Gruppe Wasserstoff, $C_1$-$C_4$-Alkyl, $C_1$-$C_4$-Alkoxy, Halogen, Carboxy und Sulfo steht; Z β-Sulfatoäthyl, β-Thiosulfatoäthyl, β-Phosphatoäthyl, β-Acyloxyäthyl, β-Halogenäthyl oder Vinyl ist; und A die in Anspruch 6 angegebene Bedeutung hat.

29. Reaktivfarbstoffe gemäss Anspruch 11, der Formel

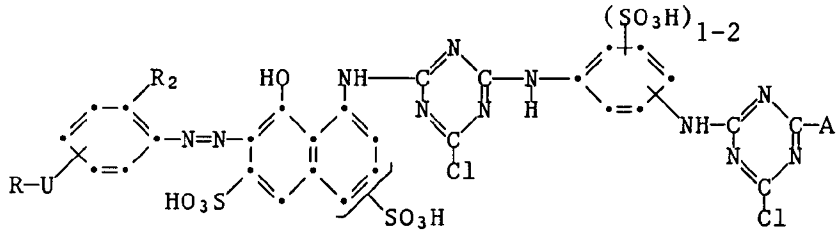

(22),

worin $R_2$ Wasserstoff, $C_1$-$C_4$-Alkyl, $C_1$-$C_4$-Alkoxy, Halogen, Hydroxy, Carboxy oder Sulfo; U -CO- oder -$SO_2$-; R′ ein Rest der Formel (3a) bis (3d) gemäss Anspruch 3 ist; und A die in Anspruch 6 angegebene Bedeutung hat.

30. Reaktivfarbstoffe gemäss Anspruch 16, der Formel

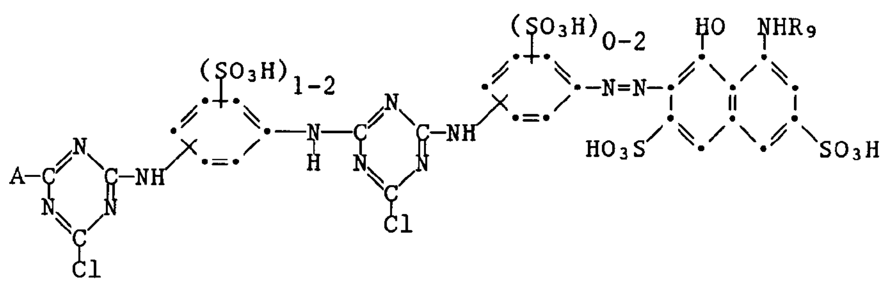

(23),

worin $R_9$ $C_1$-$C_4$-Alkanoyl oder Benzoyl ist; oder der Formel

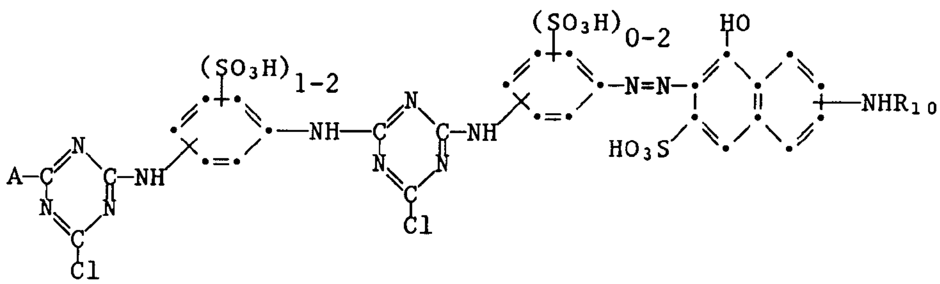

(24)

worin $R_{10}$ $C_1$-$C_4$-Alkanoyl oder Benzoyl; oder der Formel

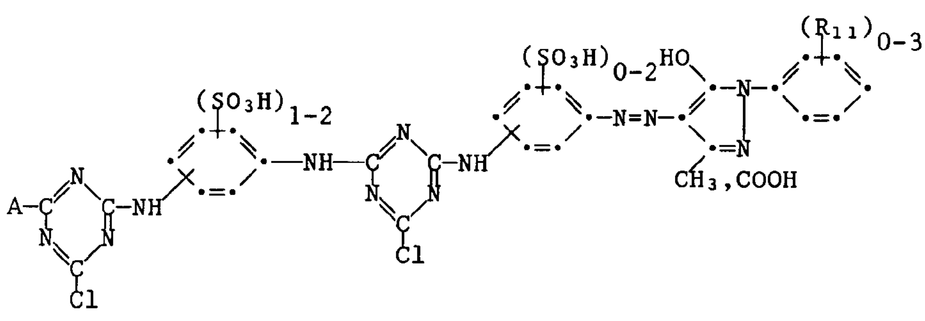

(25)

worin $R_{11}$ für 0 bis 3 Substituenten aus der Gruppe $C_1$-$C_4$-Alkyl, $C_1$-$C_4$-Alkoxy, Halogen, Carboxy und Sulfo steht; oder der Formel

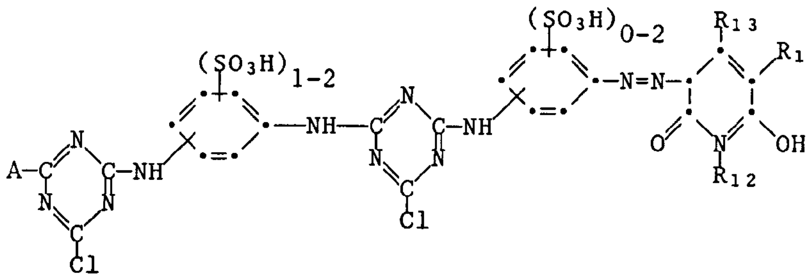

(26)

worin $R_{12}$ und $R_{13}$ unabhängig voneinander Wasserstoff, $C_1$-$C_4$-Alkyl oder Phenyl, und $R_{14}$ Wasserstoff, Cyano, Carbamoyl oder Sulfomethyl ist; und A in den Formeln (23) bis (26) die in Anspruch 6 angegebene Bedeutung hat.

31. Reaktivfarbstoffe gemäss Anspruch 17, der Formel

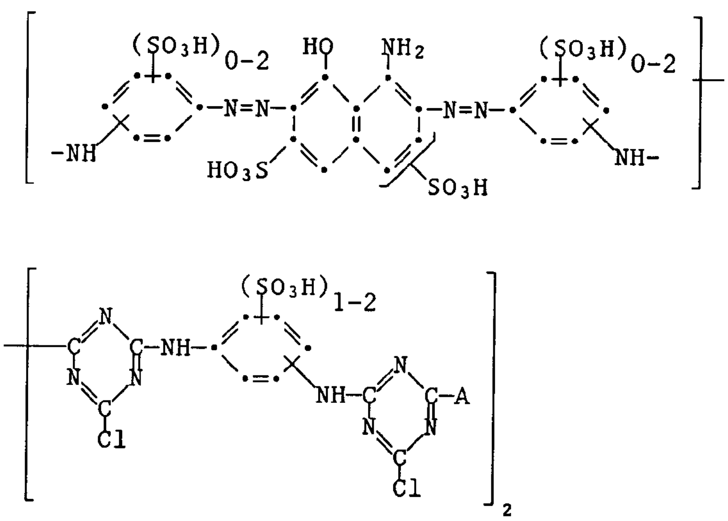

worin A die in Anspruch 6 angegebene Bedeutung hat.

32. Reaktivfarbstoffe gemäss Anspruch 16, der Formel

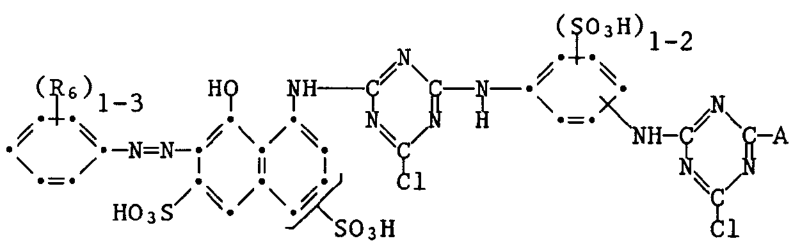

(28)

worin $R_6$ für 1 bis 3 Substituenten aus der Gruppe $C_1$-$C_4$-Alkyl, $C_1$-$C_4$-Alkoxy, Halogen, Carboxy und Sulfo steht; und A ein Rest der Formel (4) gemäss Anspruch 3, ein Rest der Formel (5) gemäss Anspruch 4, ein Rest der Formel (6) gemäss Anspruch 5 oder ein Rest der Formel (8) gemäss Anspruch 7 ist.

33. Reaktivfarbstoffe gemäss Anspruch 11, der Formel

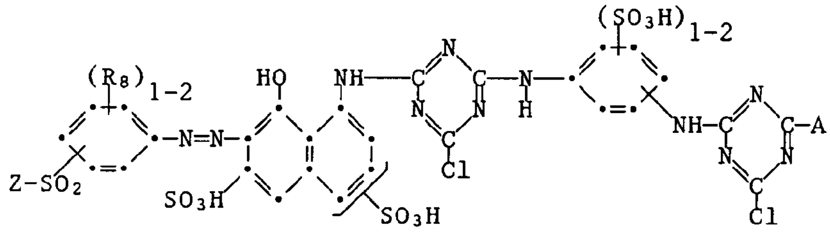

(29),

worin $R_8$ für 1 bis 2 Substituenten aus der Gruppe Wasserstoff, $C_1$-$C_4$-Alkyl, $C_1$-$C_4$-Alkoxy, Halogen, Carboxy und Sulfo steht; Z β-Sulfatoäthyl, β-Thiosulfatoäthyl, β-Phosphatoäthyl, β-Acyloxyäthyl, β-Halogenäthyl oder Vinyl ist; oder der Formel

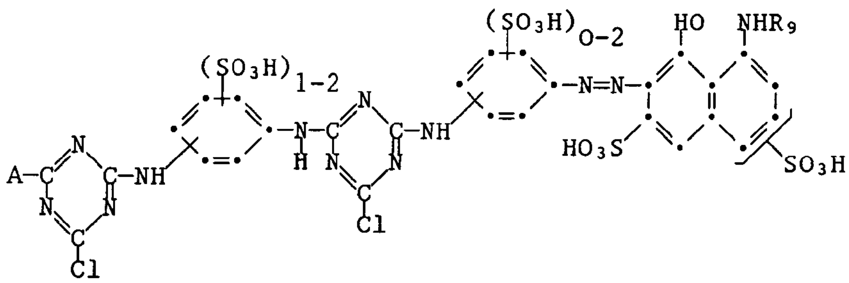

(30)

worin $R_9$ $C_1$-$C_4$-Alkanoyl oder Benzoyl ist; und A ein Rest der Formel (4), gemäss Anspruch 3, ein Rest der Formel,(5) gemäss Anspruch 4, ein Rest der Formel (6) gemäss Anspruch 5 oder ein Rest der Formel (8) gemäss Anspruch 7 ist.

34. Reaktivfarbstoffe gemäss Anspruch 2, worin Z die β-Sulfatoäthyl-, β-Chloräthyl- oder Vinylgruppe ist.

35. Verfahren zur Herstellung von Reaktivfarbstoffen der Formel (1), dadurch gekennzeichnet, dass man einen organischen Farbstoff der Formel

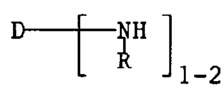

(31)

oder ein Farbstoffvorprodukt, mindestens zwei Aequivalente eines s-Triazins der Formel

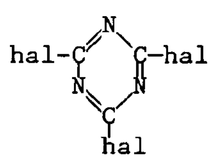

(32)

mindestens ein Aequivalent eines Diamins der Formel

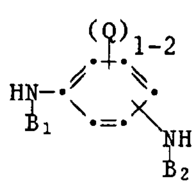

(33)

und mindestens ein Aequivalent eines Amins der Formel

$$H\text{-}A \qquad (34)$$

in beliebiger Folge miteinander umsetzt, wobei D, R, $B_1$, $B_2$, Q und A die in Anspruch 1 angegebenen Bedeutungen haben, und hal ein Halogenatom oder eine der unter Formel (1) für X und Y definierten Gruppen ist, oder, im Falle der Verwendung von Farbstoffvorprodukten, die erhaltenen Zwischenprodukte in die gewünschten Monohalogentriazinfarbstoffe überführt und gegebenenfalls eine weitere Umwandlungsreaktion anschliesst.

36. Verfahren gemäss Anspruch 35, dadurch gekennzeichnet, dass man einen Farbstoff der Formel

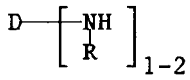

(31)

zunächst mit einem s-Triazin der Formel

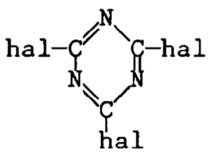

(32)

kondensiert, und die erhaltene Verbindung der Formel

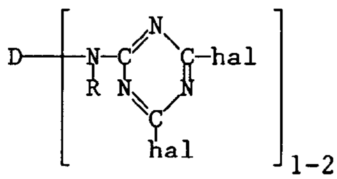

(35)

mit einem Diamin der Formel

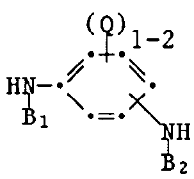

(33)

kondensiert; anschliessend erneut mit einem s-Triazin der Formel (32) kondensiert, und zuletzt mit einem Amin der Formel

H - A (34)

kondensiert;

37. Verfahren gemäss Anspruch 36, dadurch gekennzeichnet, dass man eine Komponente des Farbstoffs der Formel (1), die einen Rest der Formel

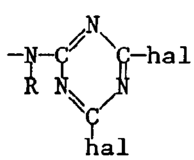

(36)

enthält, worin R und hal die in Anspruch 35 angegebenen Bedeutungen haben, mit einer zur Herstellung des Farbstoffs benötigten zweiten Komponente, die gegebenenfalls einen Rest der Formel (36) enthält, umsetzt, und den so erhaltenen Farbstoff der Formel

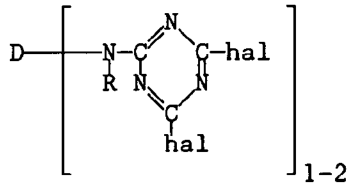

(35)

mit einem Diamin der Formel (33), einem weiteren s-Triazin der Formel (32) und einem Amin der Formel (34) umsetzt.

38. Verwendung der Reaktivfarbstoffe gemäss Anspruch 1, zum Färben oder Bedrucken von cellulosehaltigen Fasermaterialien.

39. Verwendung gemäss Anspruch 38, zum Färben oder Bedrucken von Baumwolle.

## Claims

1. A reactive dye of the formula

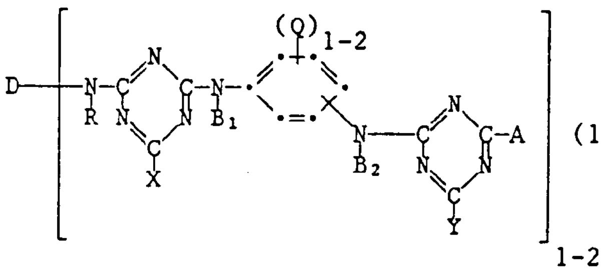

(1), (1)

in which D is the radical of a monoazo, polyazo, metal complex azo, anthraquinone, phthalocyanine, formazan, axomethine, dioxazine, phenazine, stilbene, triphenylmethane, xanthene, thioxanthone, nitroaryl, naphthoquinone, pyrenequinone or perylenetetracarbimide dye, R, $B_1$ and $B_2$ are independently of each other hydrogen or alkyl which has 1 to 4 carbon atoms and which can be substituted by halogen, hydroxyl, cyano, $C_1$-$C_4$alkoxy, $C_1$-$C_4$alkoxycarbonyl, carboxyl, sulfamoyl, sulfo or sulfato, X and Y independently of each other are fluorine, chlorine, bromine, sulfo, $C_1$-$C_4$alkylsulfonyl or phenylsulfonyl, A is an amino substituent which contains at least one group of the formula

$$-SO_2-Z \qquad (2)$$

Z is β-sulfatoethyl, β-thiosulfatoethyl, β-phosphatoethyl, β-acyloxyethyl, β-haloethyl or vinyl, and Q is 1 or 2 substituents from the group consisting of hydrogen, $C_1$-$C_4$alkyl, $C_1$-$C_4$alkoxy, halogen, carboxyl or sulfo, with the exception of a reactive dye of the formula (1) in which D is a phthalocyanine radical and neither X nor Y is fluorine.

2. A reactive dye according to claim 1 in which A is a radical of the formula

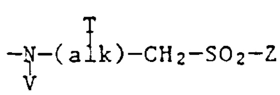

(3a)

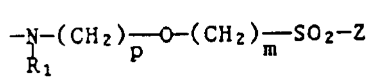

(3b)

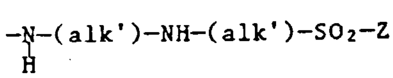

(3c)

or

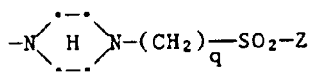

(3d)

Z is as defined in claim 1, alk is an alkylene radical having 1 to 6 C atoms or branched isomers thereof, T is hydrogen, chlorine, bromine, fluorine, hydroxyl, sulfato,-acyloxy having 1 to 4 C atoms, cyano, carboxyl, alkoxycarbonyl having 1 to 5 C atoms, carbamoyl or a radical $-SO_2-Z$ in which Z is as defined above, V is hydrogen or an alkyl radical having 1 to 4 C atoms which can be substituted by carboxyl or sulfo groups or by derivatives thereof, alkoxy groups having 1 or 2 C atoms, halogen or hydroxyl, or a radical

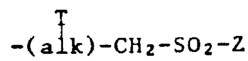

(3e)

in which Z, alk and T are as defined above, $R_1$ is hydrogen or $C_1$-$C_6$alkyl, each alk′ is independently either a polymethylene radical having 2 to 6 C atoms or a branched isomer thereof, and m is from 1 to 6, p is from 1 to 6 and q is from 1 to 6.

3. A reactive dye according to claim 2 in which A is a radical of the formula

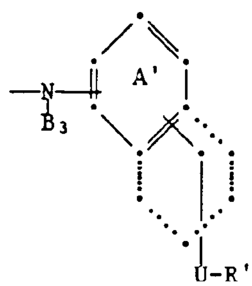

(4)

in which $B_3$ is hydrogen or alkyl having 1 to 4 carbon atoms which can be substituted by halogen, hydroxyl, cyano, $C_1$-$C_4$alkoxy, $C_1$-$C_4$alkoxycarbonyl, carboxyl, sulfamoyl, sulfo or sulfato, U is -CO- or $-SO_2-$, R′ is a radical of the formula

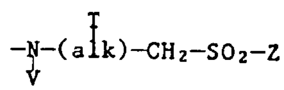

(3a)

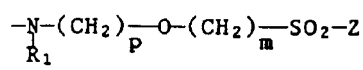

(3b)

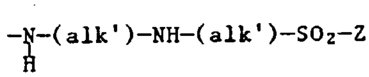

(3c)

or

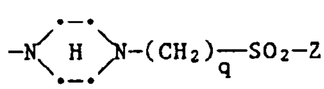

(3d)

Z is as defined in claim 1, alk is an alkylene radical having 1 to 6 C atoms or branched isomers thereof, T is hydrogen, chlorine, bromine, fluorine, hydroxyl, sulfato, acyloxy having 1 to 4 C atoms, cyano, carboxyl, alkoxycarbonyl having 1 to 5 C atoms, carbamoyl or a radical $-SO_2-Z$ in which Z is as defined above, V is hydrogen or an alkyl radical having 1 to 4 C atoms which can be substituted by carboxyl or sulfo groups or by derivatives thereof, alkoxy groups having 1 or 2 C atoms, halogen or hydroxyl, or a radical

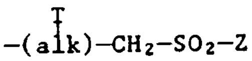

(3e)

in which Z, alk and T are as defined above, $R_1$ is hydrogen or $C_1$-$C_6$alkyl, each alk′ is independently either a polymethylene radical having 2 to 6 C atoms or a branched isomer thereof, and m is from 1 to 6, p is from 1 to 6 and q is from 1 to 6, where, if U is $-SO_2-$, V must not be hydrogen, and the benzene or naphthalene radical A′ can contain further substituents.

4. A reactive dye according to claim 1 in which A is a radical of the formula

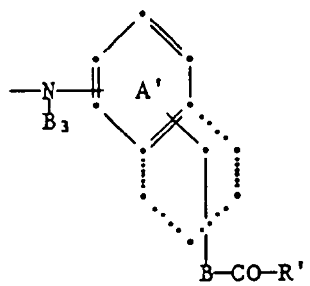

(5)

in which $B_3$ is hydrogen or alkyl having 1 to 4 carbon atoms which can be substituted by halogen, hydroxyl, cyano, $C_1$- $C_4$alkoxy, $C_1$-$C_4$alkoxycarbonyl, carboxyl, sulfamoyl, sulfo or sulfato, B is a radical $-(-CH_2-)_n-$, $-O-(-CH_2-)_n-$ or $-NH-(-CH_2-)_n-$, n is 1 to 6, R′ is a radical of the formula

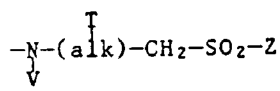

(3a)

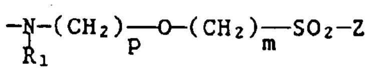

(3b)

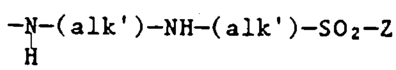

(3c)

or

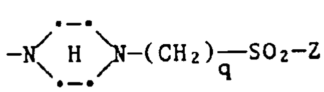

(3d)

Z is as defined in claim 1, alk is an alkylene radical having 1 to 6 C atoms or branched isomers thereof, T is hydrogen, chlorine, bromine, fluorine, hydroxyl, sulfato, acyloxy having 1 to 4 C atoms, cyano, carboxyl, alkoxycarbonyl having 1 to 5 C atoms, carbamoyl or a radical $-SO_2-Z$ in which Z is as defined above, V is hydrogen or an alkyl radical having 1 to 4 C atoms which can be substituted by carboxyl or sulfo groups or by derivatives thereof, alkoxy groups having 1 or 2 C atoms, halogen or hydroxyl, or a radical

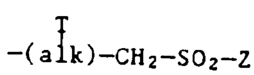

(3e)

in which Z, alk and T are as defined above, $R_1$ is hydrogen or $C_1$-$C_6$alkyl, each alk′ is independently either a polymethylene radical having 2 to 6 C atoms or a branched isomer thereof, and m is from to 1 to 6, p is from 1 to 6 and q is from 1 to 6, and the benzene or naphthalene radical A′ can contain further substituents.

5. A reactive dye according to claim 1 in which A is a radical of the formula

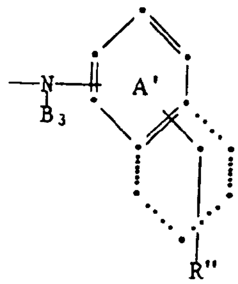

(6)

in which $B_3$ is hydrogen or alkyl having 1 to 4 carbon atoms which can be substituted by halogen, hydroxyl, cyano, $C_1$-$C_4$alkoxy, $C_1$-$C_4$alkoxycarbonyl, carboxyl, sulfamoyl, sulfo or sulfato, R″ is a radical of the formula

$-SO_2-Z$ (2)

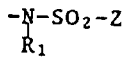

(2a)

or

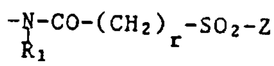

(2b)

Z is as defined in claim 1, $R_1$ is hydrogen or $C_1$-$C_6$alkyl, and r is 3 to 5, and the benzene or naphthalene radical A′ can contain further substituents.

6. A reactive dye according to claim 2 in which A is a radical of the formula

$-NHCH_2CH_2SO_2CH_2CH_2Cl$ (7a)

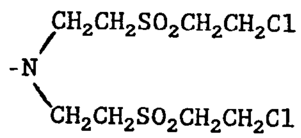

(7b)

$-NHCH_2CH_2OCH_2CH_2SO_2CH_2CH_2Cl$ (7c)

$-NHCH_2CH_2SO_2CH=CH_2$ (7d)

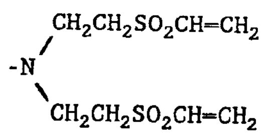

(7e)

$-NHCH_2CH_2OCH_2CH_2SO_2CH=CH_2$ (7f)

$-NHCH_2CH_2NHCH_2CH_2SO_2CH=CH_2$ (7g)

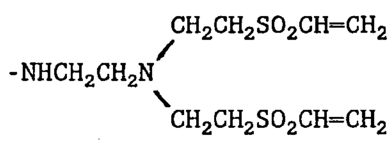

(7h)

Or

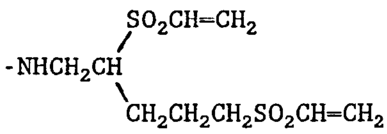

(7i)

7. A reactive dye according to claim 3 in which A is a radical of the formula

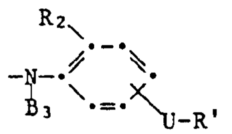

(8)

and $R_2$ is hydrogen, $C_1$-$C_4$alkyl, $C_1$-$C_4$alkoxy, halogen, hydroxyl, carboxyl or sulfo, and $B_3$, U and R′ are as defined in claim 3.

8. A reactive dye according to claim 1 in which $B_1$ and $B_2$ are hydrogen and Q is sulfo.

9. A reactive dye according to claim 1 in which X and Y are chlorine atoms.

10. A reactive dye according to claim 1 in which R is hydrogen, methyl or ethyl.

11. A reactive dye according to claim 1 in which D is the radical of a monoazo or disazo dye.

12. A reactive dye according to claim 1 in which D is the radical of a metal complex azo or formazan dye.

13. A reactive dye according to claim 1 in which D is the radical of an anthraquinone dye.

14. A reactive dye according to claim 1 in which D is the radical of a phthalocyanine dye.

15. A reactive dye according to claim 1 in which D is the radical of a dioxazine dye.

16. A reactive dye according to claim 11 in which D is a monoazo or disazo dye radical of the formula

$D_1$-N=N-(M-N=N)$_s$-K- (9a),

-$D_1$-N=N-(M-N=N)$_s$-K (9b),

or

-$D_1$-N=N-(M-N=N)$_s$-K- (9c),

or of a metal complex derived therefrom, $D_1$ is the radical of a diazo component of the benzene or naphthalene series, M is the radical of a middle component of the benzene or naphthalene series, and K is the radical of a coupling component of the benzene, naphthalene, pyrazolone, 6-hydroxy-2-pyridone or acetoacetarylamide series, where $D_1$, M and K can carry substituents customary with azo dyes, in particular hydroxyl, amino, methyl, ethyl, methoxy or ethoxy groups, substituted or unsubstituted alkanoylamino groups having 2 to 4 C atoms, substituted or unsubstituted benzoylamino groups or halogen atoms, s is 0 or 1, and $D_1$, M and K together contain at least two sulfo groups, preferably three or four sulfo groups.

17. A reactive dye according to claim 11 in which D is a disazo dye radical of the formula

$D_1$-N=N-K-N=N-$D_2$- (10a),

or

-$D_1$-N=N-K-N=N-$D_2$- (10b),

$D_1$ and $D_2$ are independently of each other the radical of a diazo component of the benzene or naphthalene series, and K is the radical of a coupling component of the naphthalene series, where $D_1$, $D_2$ and K can carry substituents customary with azo dyes, in particular hydroxyl, amino, methyl, ethyl, methoxy or ethoxy groups, substituted or unsubstituted alkanoylamino groups having 2 to 4 C atoms, substituted or unsubstituted benzoylamino groups or halogen atoms, and $D_1$, $D_2$ and K together contain at least two sulfo groups, preferably three or four sulfo groups.

18. A reactive dye according to claim 12 in which D is the radical of a 1:1 copper complex azo dye of the benzene or naphthalene series and the copper atom is bonded on each side to a metallizable group in orthoposition relative to the azo bridge.

19. A reactive dye according to claim 12 in which D is the radical of a formazan dye of the formula

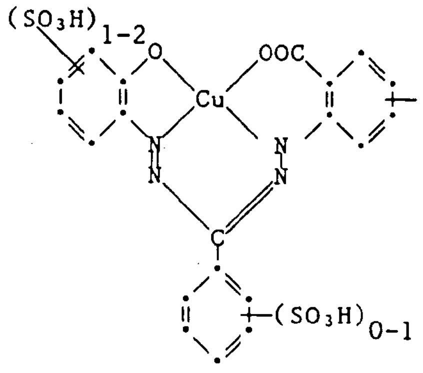

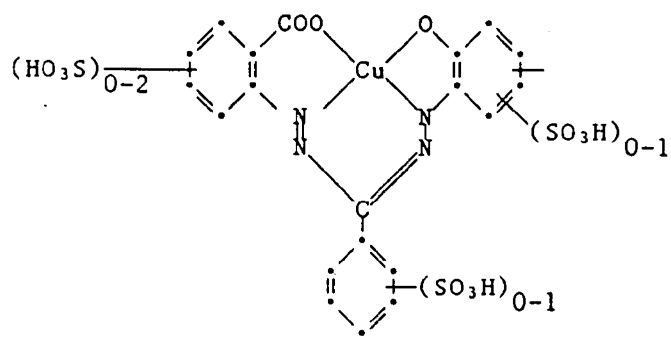

(11a) or (11b)

in which the benzene rings can be further substituted by alkyl having 1 to 4 C atoms, alkoxy having 1 to 4 C atoms, alkylsulfonyl having 1 to 4 C atoms, halogen or carboxyl.

20. A reactive dye according to claim 13 in which D is the radical of an anthraquinone dye of the formula

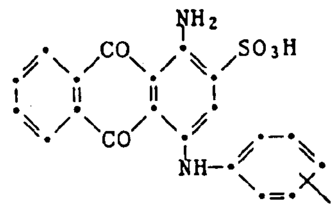

(12)

where the anthraquinone nucleus can be substituted by a further sulfo group and the phenylene radical by alkyl having 1 to 4 C atoms, alkoxy having 1 to 4 C atoms, halogen, carboxyl or sulfo, and the dye preferably contains at least 2 strongly water-solubilizing groups.

21. A reactive dye according to claim 14 in which D is the radical of a phthalocyanine dye of the formula

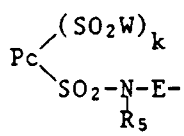

(13)

Pc is the radical of a copper- or nickel-phthalocyanine, W is -OH and/or $-NR_3R_4$, $R_3$ and $R_4$ are independently of each other hydrogen or alkyl having 1 to 4 carbon atoms which can be substituted by hydroxyl or sulfo, $R_5$ is hydrogen or alkyl having 1 to 4 carbon atoms, E is a phenylene radical which can be substituted by alkyl having 1 to 4 C atoms, halogen, carboxyl or sulfo, or is an alkylene radical having 2 to 6 C atoms, preferably a sulfophenylene or ethylene radical, and k is 1 to 3.

22. A reactive dye according to claim 15 in which D is the radical of a dioxazine dye of the formula

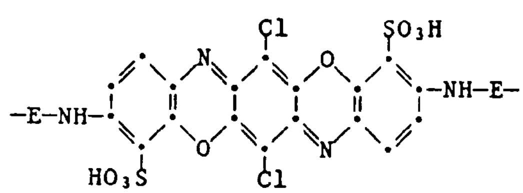

(14a)

or

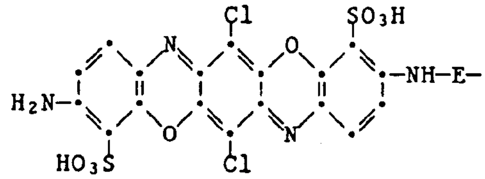

(14b)

in which E is a phenylene radical which can be substituted by alkyl having 1 to 4 C atoms, halogen, carboxyl or sulfo, or is an alkylene radical having 2 to 6 C atoms, and the outer benzene rings in the formulae (14a) and (14b) can be further substituted by alkyl having 1 to 4 C atoms, alkoxy having 1 to 4 C atoms, acetylamino, nitro, halogen, carboxyl or sulfo.

23. A reactive dye according to claim 19 of the formula

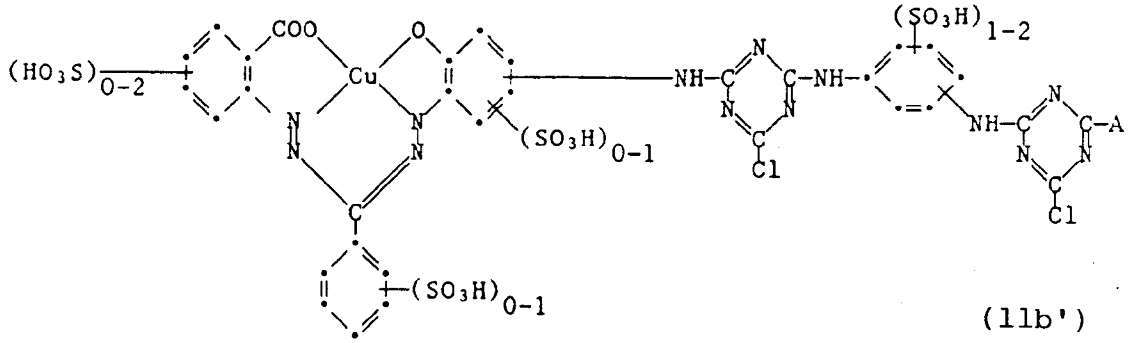

(11b')

in which A is as defined in claim 6.

24. A reactive dye according to claim 20 of the formula

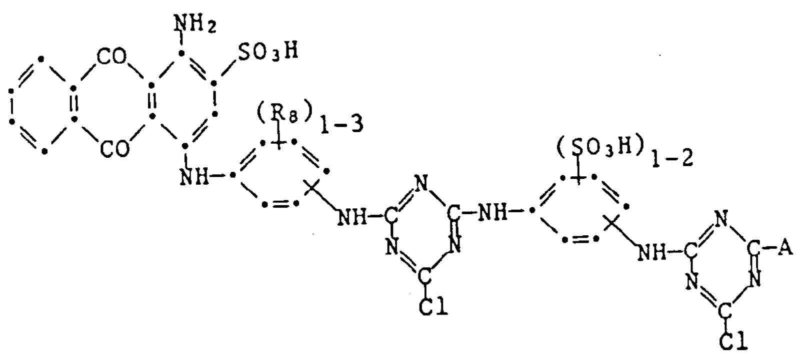

(12a)

in which $R_8$ is 1 to 3 substituents from the group consisting of hydrogen, $C_1$-$C_4$alkyl, $C_1$-$C_4$alkoxy, halogen, carboxyl and sulfo, and A is as defined in claim 6.

25. A reactive dye according to claim 21 of the formula

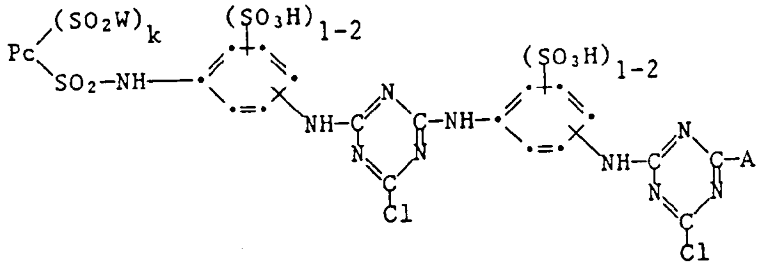

(13a)

in which Pc is a radical of a copper- or nickel-phthalocyanine, W is -OH and/or $-NR_3R_4$, $R_3$ and $R_4$ are independently of each other hydrogen or alkyl having 1 to 4 carbon atoms which can be substituted by hydroxyl or sulfo, k is 1 to 3, and A is as defined in claim 6.

26. A reactive dye according to claim 22 of the formula

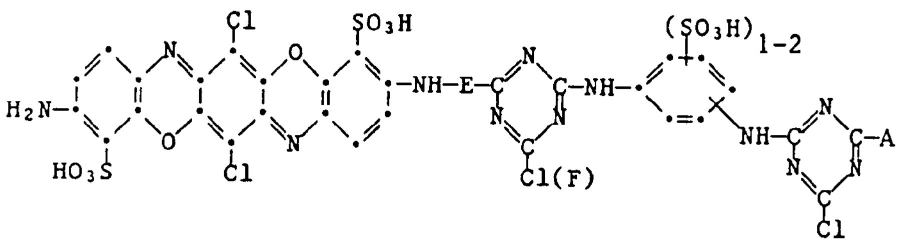

(14b')

in which E is a direct bond or a $-(-CH_2-)_2-NH-$ or $-(-CH_2-)_3-NH-$ radical and A is as defined in claim 6.

27. A reactive dye according to claim 16 of the formula

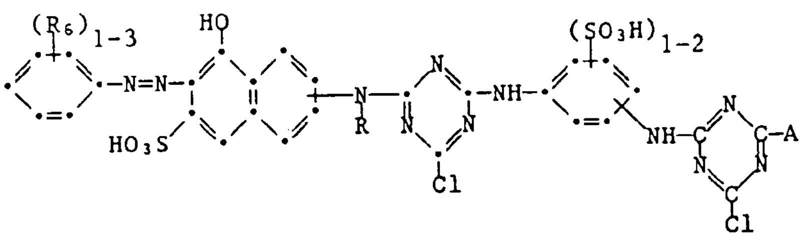

(15)

or of the formula

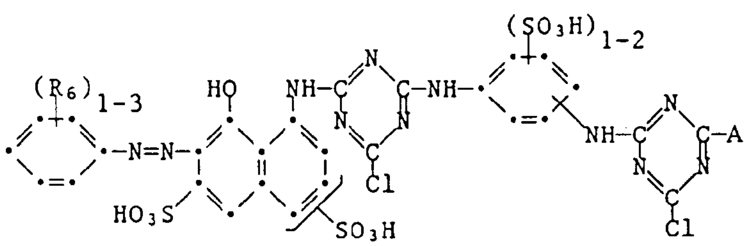

(16)

in which $R_6$ is 1 to 3 substituents from the group consisting of $C_1$-$C_4$alkyl, $C_1$-$C_4$alkoxy, halogen, carboxyl and sulfo, or of the formula

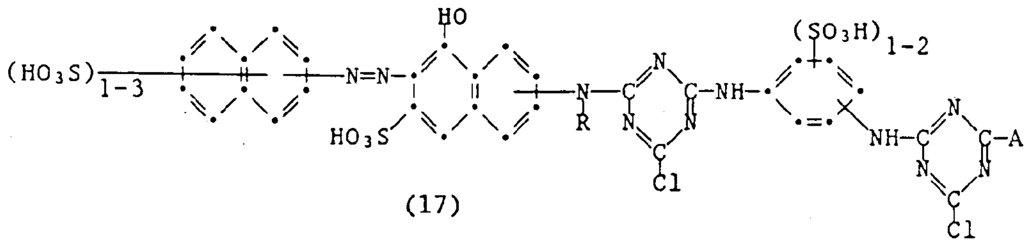

(17)

or of the formula

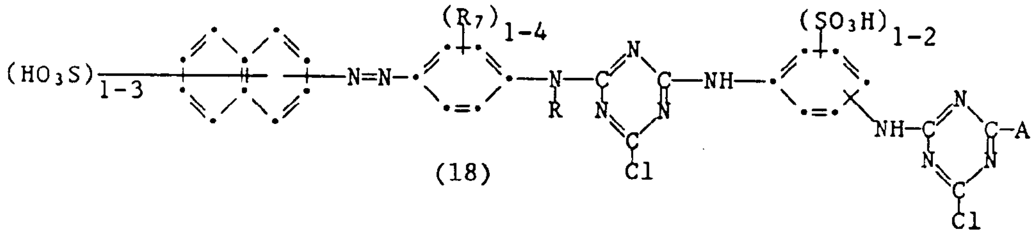

(18)

in which $R_7$ is 1 to 4 independently selected substituents from the group consisting of hydrogen, halogen, nitro, cyano, trifluoromethyl, sulfamoyl, carbamoyl, $C_1$-$C_4$alkyl, $C_1$-$C_4$alkoxy, amino, acetylamino, ureido, hydroxyl, carboxyl, sulfomethyl and sulfo, or of the formula

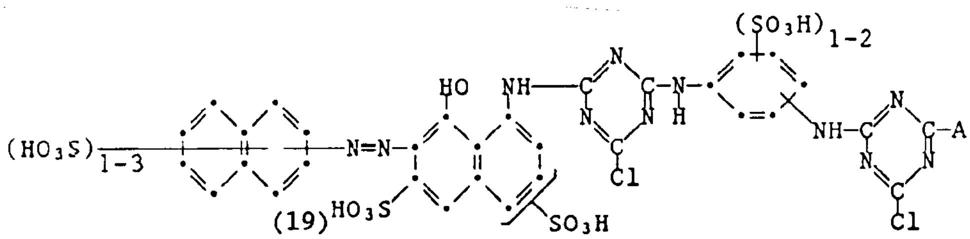

(19)

in which A in the formulae (15) to (19) is as defined in claim 6.

28. A reactive dye according to claim 11 of the formula

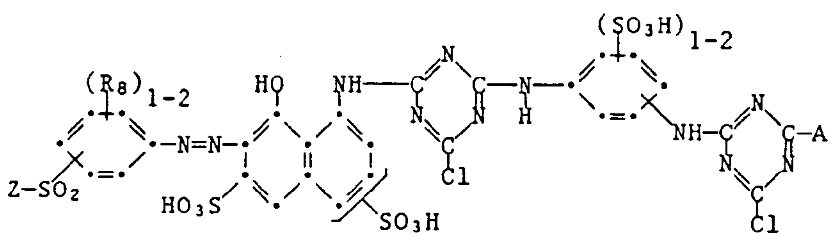

(20)

or

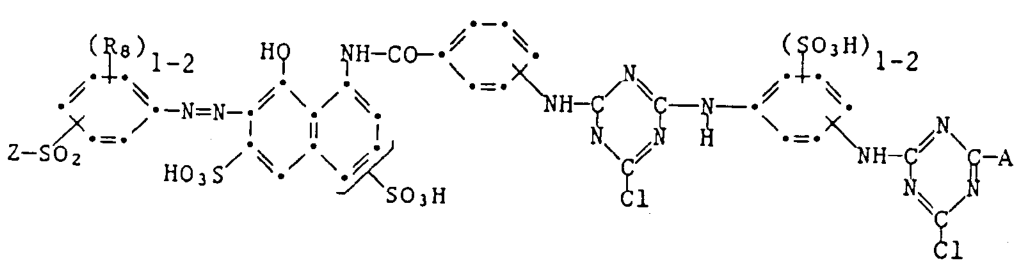

(21)

in which $R_8$ is 1 or 2 substituents from the group consisting of hydrogen, $C_1$-$C_4$alkyl, $C_1$-$C_4$alkoxy, halogen, carboxyl and sulfo, Z is β-sulfatoethyl, β-thiosulfatoethyl, β-phosphatoethyl, β-acyloxyethyl, β-haloethyl or vinyl, and A is as defined in claim 6.

29. A reactive dye according to claim 11 of the formula

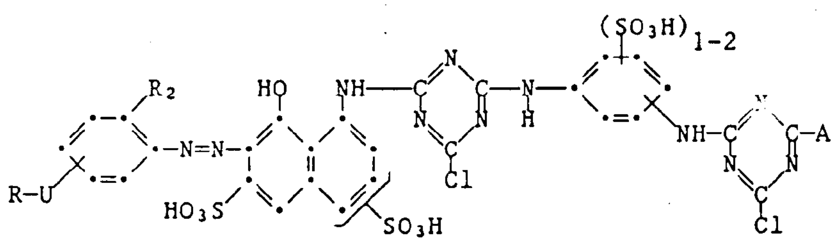

(22)

in which $R_2$ is hydrogen, $C_1$-$C_4$alkyl, $C_1$-$C_4$alkoxy, halogen, hydroxyl, carboxyl or sulfo, U is -CO- or -$SO_2$-, R′ is a radical of the formula (3a) to (3d) according to claim 3, and A is as defined in claim 6.

30. A reactive dye according to claim 16 of the formula

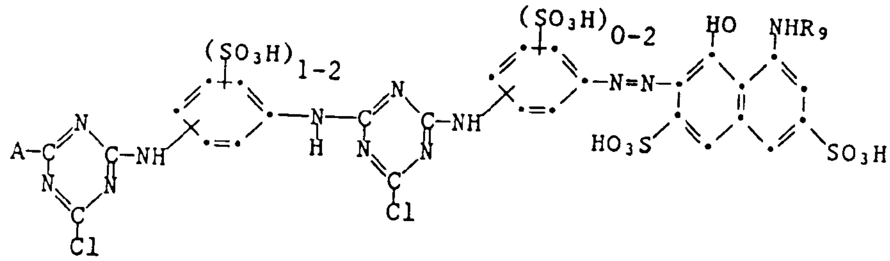

(23)

in which $R_9$ is $C_1$-$C_4$alkanoyl or benzoyl, or of the formula

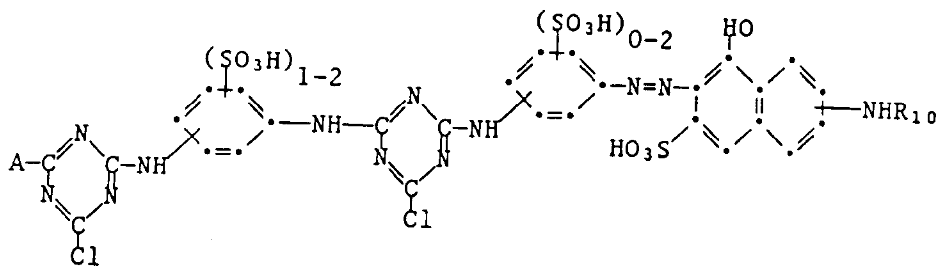

(24)

in which $R_{10}$ is $C_1$-$C_4$alkanoyl or benzoyl, or of the formula

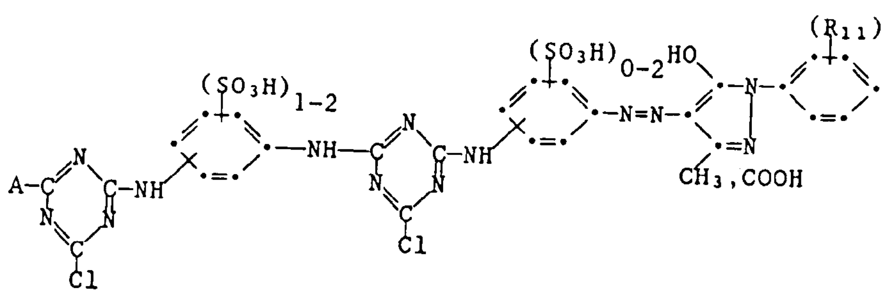

(25)

in which $R_{11}$ is 0 to 3 substituents from the group consisting of $C_1$-$C_4$alkyl, $C_1$-$C_4$alkoxy, halogen, carboxyl and sulfo, or of the formula

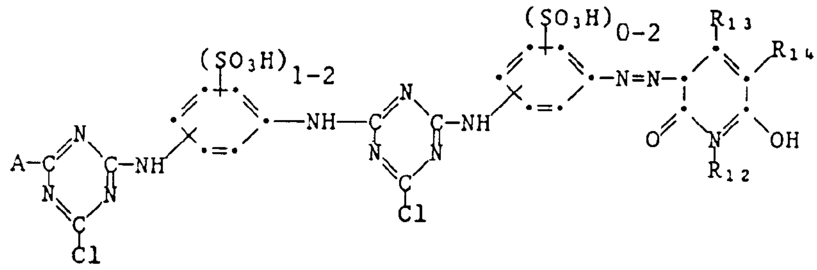

(26)

in which $R_{12}$ and $R_{13}$ are independently of each other hydrogen, $C_1$-$C_4$alkyl or phenyl, $R_{14}$ is hydrogen, cyano, carbamoyl or sulfomethyl, and A in the formulae (23) to (26) is as defined in claim 6.

31. A reactive dye according to claim 17 of the formula

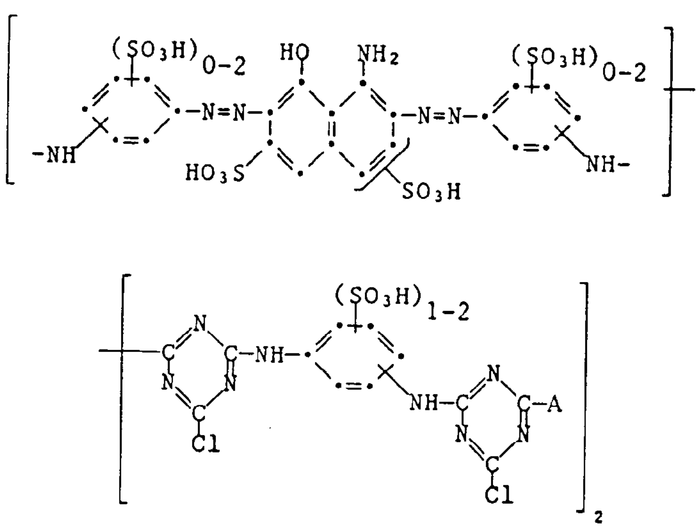

in which A is as defined in claim 6.

32. A reactive dye according to claim 16 of the formula

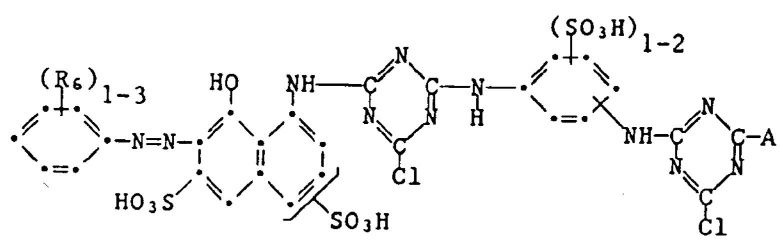

(28)

in which $R_6$ is 1 to 3 substituents from the group consisting of $C_1$-$C_4$alkyl, $C_1$-$C_4$alkoxy, halogen, carboxyl and sulfo, and A is a radical of the formula (4) according to claim 3, a radical of the formula (5) according to claim 4, a radical of the formula (6) according to claim 5 or a radical of the formula (8) according to claim 7.

33. A reactive dye according to claim 11 of the formula

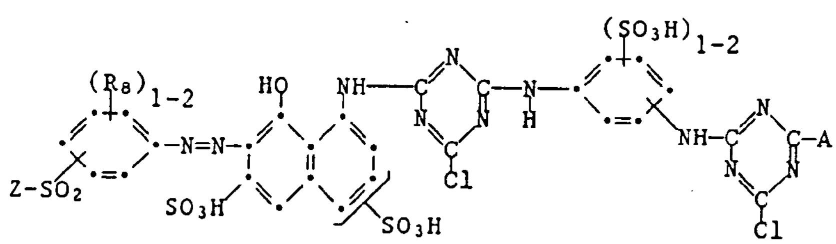

(29)

in which $R_8$ is 1 or 2 substituents from the group consisting of hydrogen, $C_1$-$C_4$alkyl, $C_1$-$C_4$alkoxy, halogen, carboxyl and sulfo, Z is β-sulfatoethyl, β-thiosulfatoethyl, β-phosphatoethyl, β-acyloxyethyl, β-haloethyl or vinyl, or of the formula

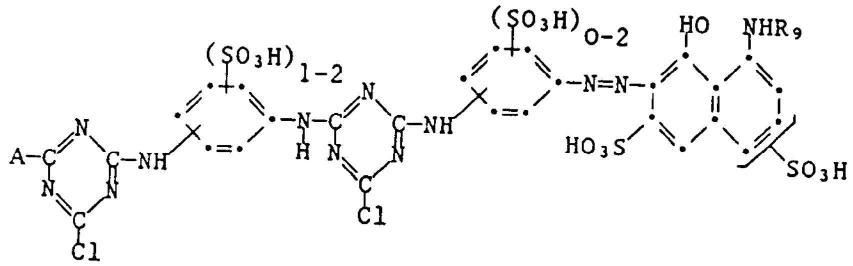 (30)

in which $R_9$ is $C_1$-$C_4$alkanoyl or benzoyl, and A is a radical of the formula (4) according to claim 3, a radical of the formula (5) according to claim 4, a radical of the formula (6) according to claim 5 or a radical of the formula (8) according to claim 7.

34. A reactive dye according to claim 2 in which Z is the β-sulfatoethyl, β-chloroethyl or vinyl group.

35. A process for preparing a reactive dye of the formula (1), which comprises reacting an organic dye of the formula

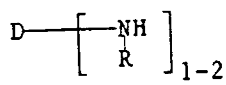 (31)

or a dye precursor, at least two equivalents of an s-triazine of the formula

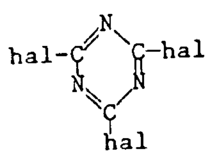 (32)

at least one equivalent of a diamine of the formula

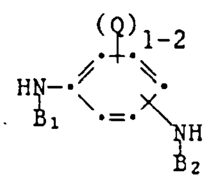 (33)

and at least one equivalent of an amine of the formula

H - A (34)

with one another in any desired order, D, R, $B_1$, $B_2$, Q and A being as defined in claim 1, and hal being a halogen atom or one of the groups defined under the formula (1) for X and Y, or, if dye precursors are used, converting the intermediates obtained into the desired monohalotriazine dyes and, if desired, following up with a further conversion reaction.

36. A process according to claim 35 wherein a dye of the formula

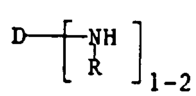 (31)

in condensed first with an s-triazine of the formula

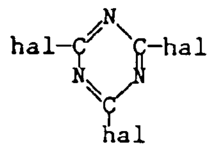

(32)

and the compound obtained of the formula

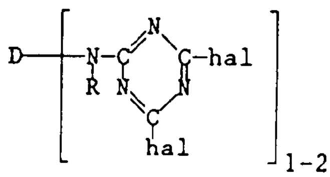

(35)

is condensed with a diamine of the formula

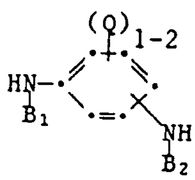

(33)

then again with an s-triazine of the formula (32) and finally with an amine of the formula

H - A (34).

37. A process according to claim 36 wherein a component of the dye of the formula (1), which contains a radical of the formula

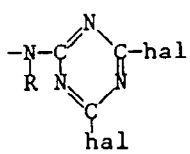

(36)

in which R and hal are as defined in claim 35, is reacted with a second component required for preparing the dye, which can, if desired, contain a radical of the formula (36), and the dye thus obtained of the formula

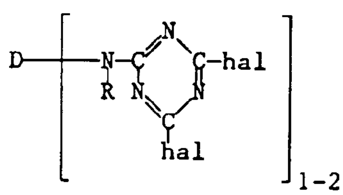

(35)

is reacted with a diamine of the formula (33), a further s-triazine of the formula (32) and an amine of the formula (34).

38. Use of a reactive dye according to claim 1, for dyeing or printing cellulose-containing fibre materials.

39. Use according to claim 38, for dyeing or printing cotton.

## Revendications

1. Colorants réactifs de formule

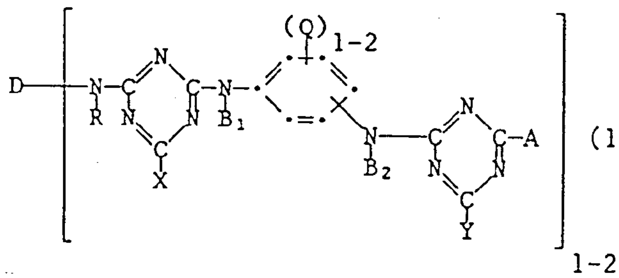

(1),

dans laquelle D est le reste d'un colorant monoazoïque, polyazoïque, complexe métal-colorant azoïque, anthraquinone, phtalocyanine, formazan, azométhine, dioxazine, phénazine, stilbène, triphénylméthane, xanthène, thioxanthone, nitroaryle, naphtoquinone, pyrènequinone ou pérylènetétracarbimide, R, $B_1$ et $B_2$, indépendamment l'un de l'autre, représentent un atome d'hydrogène ou un groupe alkyle en $C_{1-4}$, qui peut être substitué par halogène, hydroxy, cyano, alcoxy en $C_{1-4}$, alcoxy($C_{1-4}$)carbonyle, carboxy, sulfamoyle, sulfo u sulfato, X et Y, indépendamment l'un de l'autre, représentent un atome de fluor, de chlore ou de brome, ou un groupe sulfo, alkyl($C_{1-4}$)sulfonyle ou phénylsulfonyle, A est un substituant amino qui contient au moins un groupe de formule

$$-SO_2-Z \qquad (2),$$

Z représentant un groupe β-sulfatoéthyle, β-thiosulfatoéthyle, β-phosphatoéthyle, β-acyloxyéthyle, β-halogénoéthyle ou vinyle, et Q représente 1 ou 2 substituants choisis parmi hydrogène, alkyle en $C_{1-4}$, alcoxy en $C_{1-4}$, halogène, carboxy ou sulfo, à l'exclusion des colorants réactifs de formule (1), dans laquelle D est un reste phtalocyanine et X et Y ne sont pas des atomes de fluor.

2. Colorants réactifs selon la revendication 1, dans lesquels A est un reste de formule

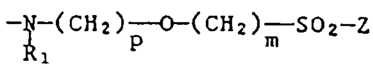

(3b)

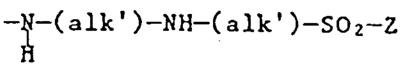

(3c)

ou

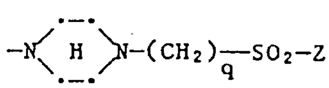

(3d)

,

où Z a la définition donnée dans la revendication 1, alk représente un reste alkylène en $C_{1-6}$ ou bien ses isomères ramifiés, T est un atome d'hydrogène, de chlore, de brome ou de fluor, ou un groupe hydroxy, sulfato acyloxy en $C_{1-4}$, cyano, carboxy, alcoxy($C_{1-5}$)carbonyle, carbamoyle, ou un reste $-SO_2Z$, dans lequel Z a la définition indiquée ci-dessus, V est un atome d'hydrogène ou un groupe carboxy ou sulfo ou leurs dérivés, des groupes alcoxy en $C_{1-2}$, un atome d'halogène ou un groupe hydroxy, ou bien un reste

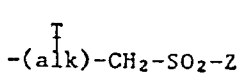

(3e)

dans lequel Z, alk et T ont les définitions indiquées, $R_1$ est hydrogène ou alkyle en $C_{1-6}$, les alk', indépendamment l'un de l'autre, représentent des restes polyméthylène en $C_{2-6}$ ou leurs isomères ramifiés, et m = 1 à 6, p = 1 à 6 et q = 1 à 6.

3. Colorants réactifs selon la revendication 1, dans lesquels A est un reste de formule

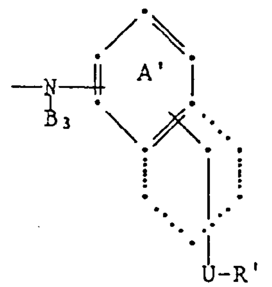

(4)

dans laquelle $B_3$ est un atome d'hydrogène ou un groupe alkyle en $C_{1-4}$, qui peut être substitué par halogène, hydroxy, cyano, alcoxy en $C_{1-4}$, alcoxy($C_{1-4}$)carbonyle, carboxy, sulfamoyle, sulfo ou sulfato, U est un groupe -CO- ou $-SO_2-$, et R' est un reste de formule

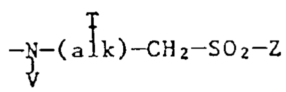

(3a)

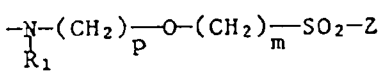

(3b)

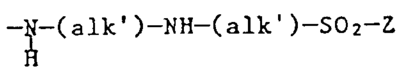

(3c)

ou

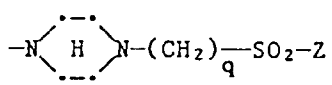

(3d),

où Z a la définition indiquée dans la revendication 1, alk représente un reste alkylène en $C_{1-6}$ ou ses isomères ramifiés, T est un atome d'hydrogène, de chlore, de brome ou de fluor, ou un groupe hydroxy, sulfato, acyloxy en $C_{1-4}$, cyano, carboxy, alcoxy($C_{1-5}$)carbonyl, carbamoyle, ou un reste $-SO_2Z$, dans lequel Z a la définition indiquée ci-dessus, V est un atome d'hydrogène ou un groupe alkyle en $C_{1-4}$, qui peut être substitué par des groupes carboxy ou sulfo ou par leurs dérivés, des groupes alcoxy en $C_{1-2}$, un atome d'halogène ou un groupe hydroxy, ou bien un reste

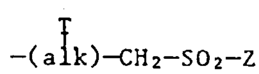

(3e),

dans lequel Z, alk et T ont les définitions indiquées, $R_1$ est hydrogène ou alkyle en $C_{1-6}$, les alk', indépendamment l'un de l'autre, représentent des reste polyméthylène en $C_{2-6}$ ou leurs isomère ramifiés, et m = 1 à 6, p = 1 à 6 et q = 1 à 6, sous réserve que, dans le cas où U est $-SO_2-$, V ne peut être hydrogène, et le reste benzénique ou naphtalénique A' peut renfermer d'autres substitutants.

4. Colorants réactifs selon la revendication 1, dans lesquels A est un reste de formule

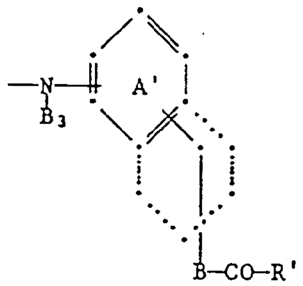

(5),

dans laquelle $B_3$ est un atome d'halogène ou un groupe alkyl en $C_{1-4}$, qui peut être substitué par un atome d'hydrogène ou un groupe hydroxy, cyano, alcoxy en $C_{1-4}$, alcoxy($C_{1-4}$)carbonyle, carboxy, sulfamoyle, sulfo ou sulfato, B est un reste $-(CH_2)_n-$, $-O-(CH_2)_n-$, $-NH-(CH_2)_n-$, n = 1 à 6, R' est un reste de formule

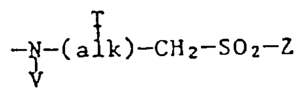

(3a)

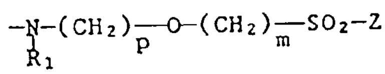

(3b)

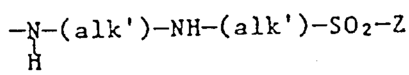

(3c)

ou

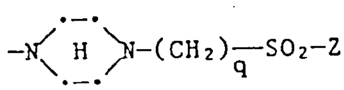

(3d)

,

où Z a la définition indiquée dans la revendication 1, alk représente un reste alkylène en $C_{1-6}$ ou ses isomères ramifiés, T est un atome d'hydrogène, de chlore, de brome ou de fluor, ou un groupe hydroxy, sulfato, acyloxy en $C_{1-4}$, cyano, carboxy, alcoxy($C_{1-5}$)carbonyle, carbamoyle, ou un reste $-SO_2Z$, dans lequel Z a la définition indiquée ci-dessus, V est un atome d'hydrogène ou un groupe alkyle en $C_{1-4}$, qui peut être substitué par des groupe carboxy ou sulfo ou par leurs dérivés, des groupes alcoxy en $C_{1-2}$, un atome d'halogène ou un groupe hydroxy, ou bien un reste

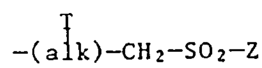

(3e),

dans lequel Z, alk et T ont les définitions indiquées, $R_1$ est un hydrogène ou alkyle en $C_{1-6}$, les alk', indépendamment l'un de l'autre, représentent des restes polyméthylène en $C_{2-6}$ ou leurs isomères ramifiés, et m = 1 à 6, p = 1 à 6 et q = 1 à 6, et le reste benzénique ou naphtalénique A' peut renfermer d'autres substituants.

5. Colorants réactifs selon la revendication 1, dans lesquels A est un reste de formule

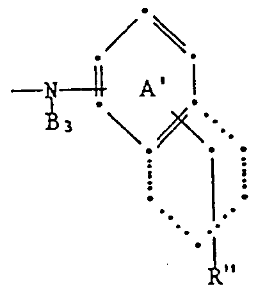

(6),

dans laquelle $B_3$ est un atome d'hydrogène ou un groupe alkyle en $C_{1-4}$, qui peut être substitué par un atome d'halogène ou un groupe hydroxy, cyano, alcoxy en $C_{1-4}$, alcoxy($C_{1-4}$)carbonyle, carboxy, sulfamoyle, sulfo ou sulfato, R″ est un reste de formule

$-SO_2-Z$ (2)

$-N(R_1)-SO_2-Z$ (2a)

ou

$-N(R_1)-CO-(CH_2)_r-SO_2-Z$ (2b),

où Z a la définition indiquée dans la revendication 1, $R_1$ est hydrogène ou alkyle en $C_{1-6}$, et r = 3 à 5, et le reste benzénique ou naphtalénique A′ peut renfermer d'autres substituants.

6. Colorants réactifs selon la revendication 2, dans lesquels A est un reste de formule

$-NHCH_2CH_2SO_2CH_2CH_2Cl$ (7a)

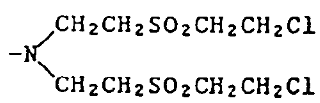

(7b)

$-NHCH_2CH_2OCH_2CH_2SO_2CH_2CH_2Cl$ (7c)

$-NHCH_2CH_2SO_2CH=CH_2$ (7d)

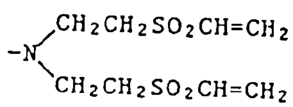

(7e)

$-NHCH_2CH_2OCH_2CH_2SO_2CH=CH_2$ (7f)

$-NHCH_2CH_2NHCH_2CH_2SO_2CH=CH_2$ (7g)

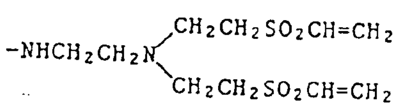

(7h)

ou

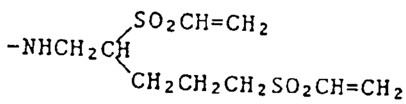

(7i)

7. Colorants réactifs selon la revendication 3, dans lesquels A est un reste de formule

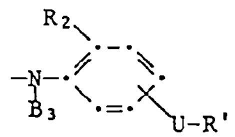

(8)

et $R_2$ est un atome d'hydrogène ou d'halogène, ou un groupe alkyle en $C_{1-4}$, alcoxy en $C_{1-4}$, hydroxy, carboxy ou sulfo, et $B_3$, U et R' ont les définitions donnée dans la revendication 3.

8. Colorants réactifs selon la revendication 1, dans lesquels $B_1$ et $B_2$ sont des atomes d'hydrogène et Q est sulfo.

9. Colorants réactifs selon la revendication 1, dans lesquels X et Y sont des atomes de chlore.

10. Colorants réactifs selon la revendication 1, dans lesquels R est hydrogène, méthyle ou éthyle.

11. Colorants réactifs selon la revendication 1, dans lesquels D est le reste d'un colorant monoazoïque ou disazoïque.

12. Colorants réactifs selon la revendication 1, dans lesquels D est le reste d'un colorant complexe métal-colorant azoïque ou d'un colorant formazan.

13. Colorants réactifs selon la revendication 1, dans lesquels D est le reste d'un colorant anthraquinone.

14. Colorants réactifs selon la revendication 1, dans lesquels D est le reste d'un colorant phtalocyanine.

15. Colorants réactifs selon la revendication 1, dans lesquels D est le reste d'un colorant dioxazine.

16. Colorants réactifs selon la revendication 1, dans lesquels D est le reste d'un colorant monoazoïque ou disazoïque de formule

$D_1$-N=N-(M-N=N)$_s$-K- (9a),

-$D_1$-N=N-(M-N=N)$_s$-K (9b),

ou

-$D_1$-N=N-(M-N=N)$_s$-K- (9c),

ou d'un complexe métallique dérivé de tels colorants, $D_1$ est le reste d'un composant diazo de la série du benzène ou du naphtalène, M est le reste d'un composant central de la série du benzène ou du naphtalène, et K est le reste d'un copulant de la série du benzène, du naphtalène, de la pyrazolone, de la 6-hydroxypyridone-(2) ou d'un arylamide de l'acide acétoacétique, $D_1$, M et K pouvant porter les substituants habituels pour colorants azoïques, en particulier des groupes hydroxy, amino, méthyle, éthyle, méthoxy ou éthoxy, des groupes alcanoyl($C_{2-4}$)amino éventuellement substitués, des groupes benzoylamino éventuellement substitués ou des atomes d'halogène, s = 0 ou 1, et $D_1$, M et K contiennent ensemble au moins deux groupes sulfo, de préférence trois ou quatre groupes sulfo.

17. Colorants réactifs selon la revendication 11, dans lesquels D est le reste d'un colorant disazoïque de formule

$D_1$-N=N-K-N=N-$D_2$- (10a),

ou

-$D_1$-N=N-K-N=N-$D_2$- (10b),

$D_1$ et $D_2$, indépendamment l'un de l'autre, représentent le reste d'un composant diazo de la série du benzène ou de naphtalène, et K est le reste d'un copulant de la série du naphtalène, $D_1$, $D_2$ et K pouvant porter les substituants habituels pour colorants azoïque, en particulier des groupes hydroxy, amino, méthyle, éthyle, méthoxy ou éthoxy, des groupes alcanoyl($C_{2-4}$)amino éventuellement substitués, des groupes benzoylamino éventuellement substitués ou des atomes d'halogène, et $D_1$, $D_2$ et K contiennent ensemble au moins deux groupes sulfo, de préférence trois ou quatre groupes sulfo.

18. Colorants réactifs selon la revendication 12, dans lesquels D est le reste d'un complexe 1:1 cuivre-colorant azoïque de la série du benzène ou du naphtalène, et l'atome de cuivre est lié à deux groupes métallables, un de chaque côté, placés en position ortho par rapport au pont azo.

19. Colorants réactifs selon la revendication 12, dans lesquels D est le reste d'un colorant formazan de formule

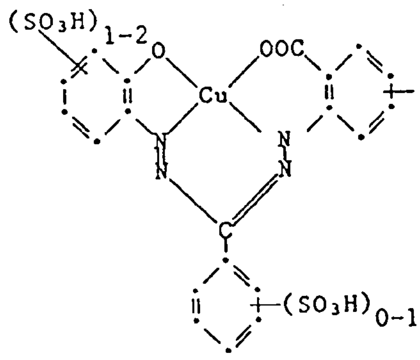

(11a)

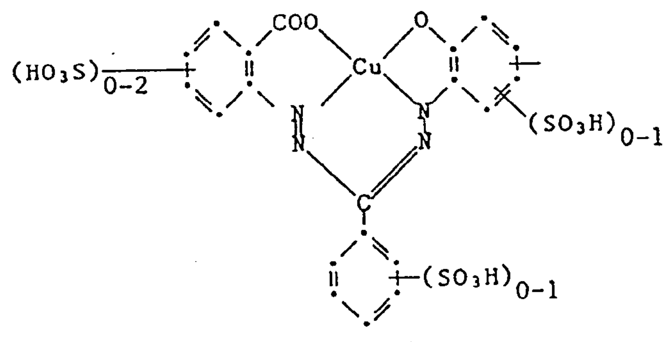

(11b),

ou ,

dans laquelle les noyaux benzéniques peuvent en outre être substitués par alkyle en $C_{1-4}$, alcoxy en $C_{1-4}$, alkyl($C_{1-4}$)sulfonyle, halogène ou carboxy.

20. Colorants réactifs selon la revendication 13, dans lesquels D est le reste d'un colorant authraquinone de formule

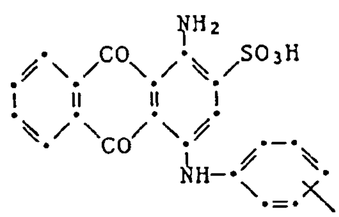

(12)

,

le noyau anthraquinone pouvant être substitué par un autre groupe sulfo, et le reste phényle pouvant être substitué par alkyle en $C_{1-4}$, alcoxy en $C_{1-4}$, halogène, carboxy ou sulfo, le colorant comportant de préférence au moins 2 groupes fortement hydrosolubilisants.

21. Colorants réactifs selon la revendication 14, dans lesquels D est le reste d'un colorant phtalocyanine de formule

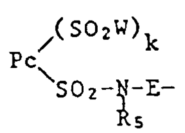

(13),

où Pc est le reste d'une phtalocyanine du cuivre ou du nickel, W est -OH et/ou $-NR_3R_4$, $R_3$ et $R_4$, indépendamment l'un de l'autre, représentent un atome d'hydrogène ou un groupe alkyl en $C_{1-4}$, qui peut être substitué par hydroxy ou sulfo, $R_5$ est hydrogène ou alkyle en $C_{1-4}$, E est un reste phénylène qui peut être substitué par alkyle en $C_{1-4}$, halogène, carboxy ou sulfo, ou bien un reste alkylène en $C_{2-6}$, de préférence un reste sulfophénylène ou éthylène, et k = 1 à 3.

22. Colorants réactifs selon la revendication 15, dans lesquels D est le reste d'un colorant dioxazine de formule

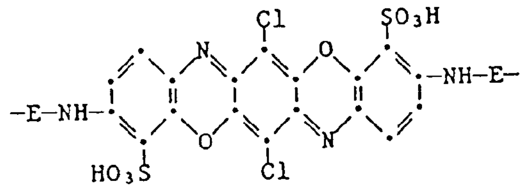

(14a)

ou

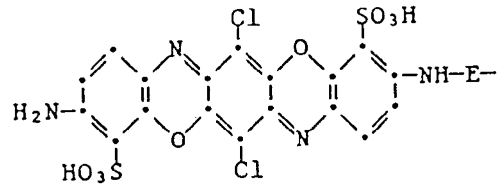

(14b)

dans lesquelles E est un reste phénylène, qui peut être substitué par alkyle en $C_{1-4}$, halogène, carboxy ou sulfo, ou bien un reste alkylène en $C_{2-6}$, et les cycles benzèniques externes des formules (14a) et 14b) peuvent encore être substitués par alkyle en $C_{1-4}$, alcoxy en $C_{1-4}$, acétylamino, nitro, halogène, carboxy ou sulfo.

23. Colorants réactifs selon la revendication 19, de formule

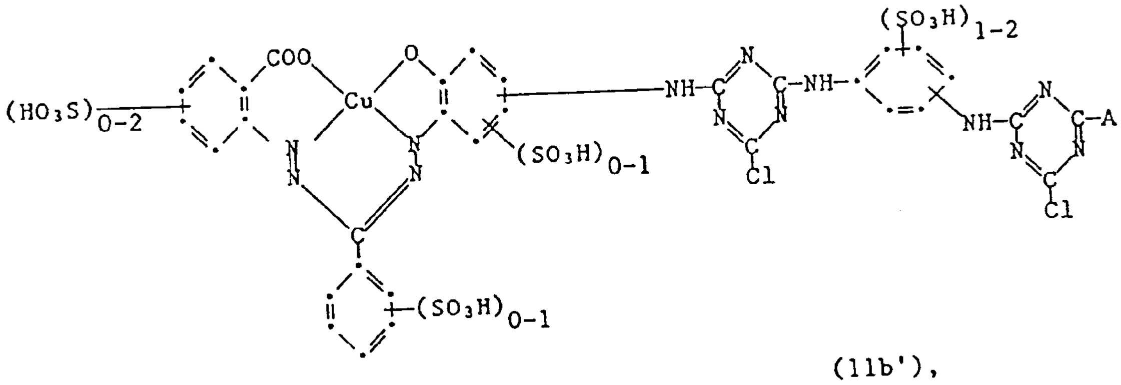

(11b'),

dans laquelle A a les définitions données dans la revendication 6.

24. Colorants réactifs selon la revendication 20, de formule

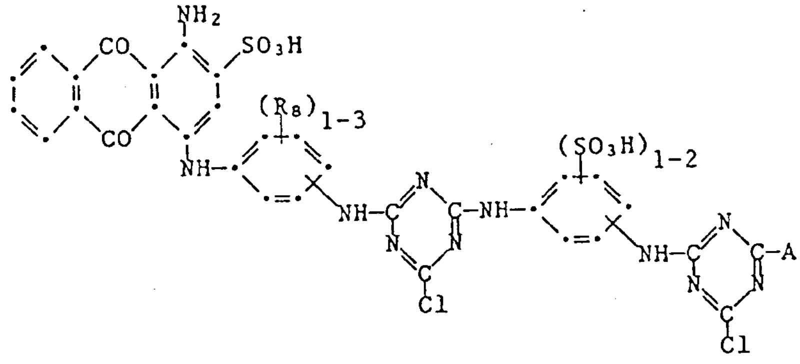

(12a),

dans laquelle $R_8$ représente 1 à 3 substituants choisis dans le groupe formé par hydrogène, alkyle en $C_{1-4}$, alcoxy en $C_{1-4}$, halogène, carboxy et sulfo, et A a les définitions données dans la revendication 6.

25. Colorants réactifs selon la revendication 21, de formule

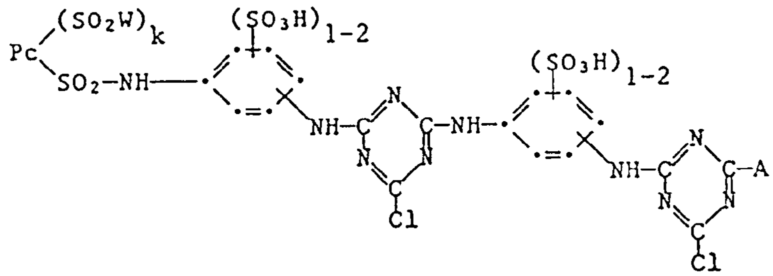

(13a),

dans laquelle Pc est le reste d'une phtalocyanine du cuivre ou du nickel, W est -OH et/ou $-NR_3R_4$, $R_3$ et $R_4$, indépendamment l'un de l'autre, représentent un atome d'hydrogène ou un groupe alkyle en $C_{1-4}$, qui peut être substitué par hydroxy ou sulfo, k = 1 à 3, et A a les définitions données dans la revendication 6.

26. Colorants réactifs selon la revendication 22, de formule

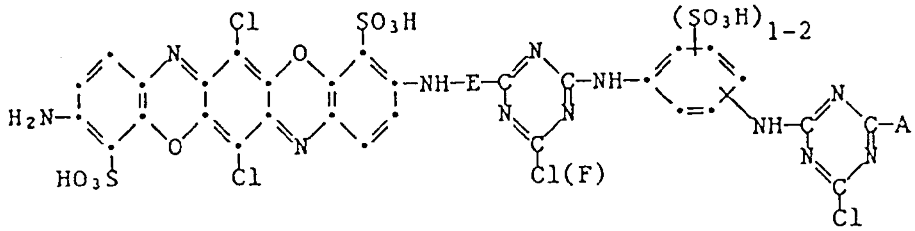

(14b'),

dans laquelle E est une liaison directe ou un reste $-(CH_2)_2-NH-$ ou $-(CH_2)_3-NH-$, et A a les définitions indiquées dans la revendication 6.

27. Colorants réactifs selon la revendication 16, de formule

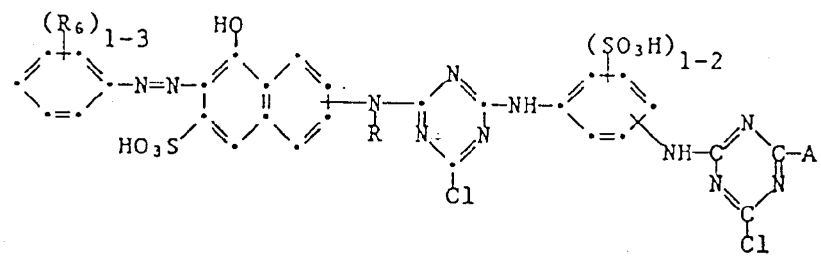

(15),

ou de formule

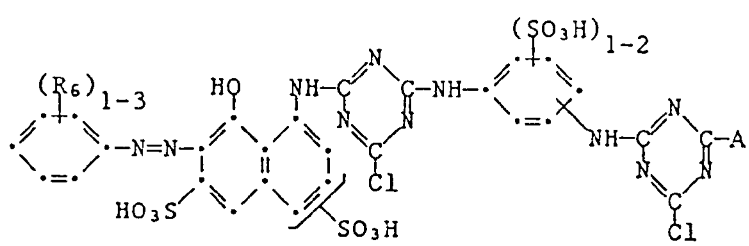

(16)

dans laquelle $R_6$ représente 1 à 3 substituants pris dans le groupe formé par alkyle en $C_{1-4}$, alcoxy en $C_{1-4}$, halogène, carboxy et sulfo; ou de formule

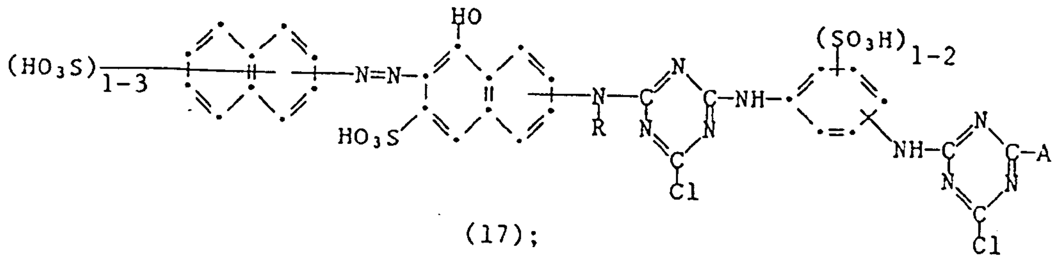

(17);

ou de formule

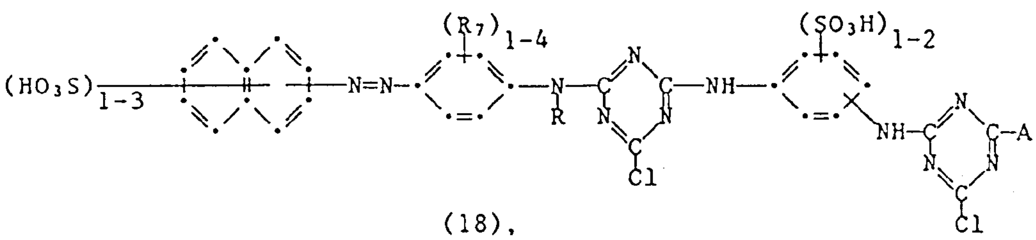

(18),

dans laquelle $R_7$ représente 1 à 4 substituants pris dans le groupe formé par hydrogène, halogène, nitro, cyano, trifluorométhyle, sulfamoyle, carbamoyle, alkyle en $C_{1-4}$, alcoxy, en $C_{1-4}$, amino, acétylamino, uréido, hydroxy, carboxy, sulfométhyle et sulfo, indépendamment les uns des autres; ou de formule

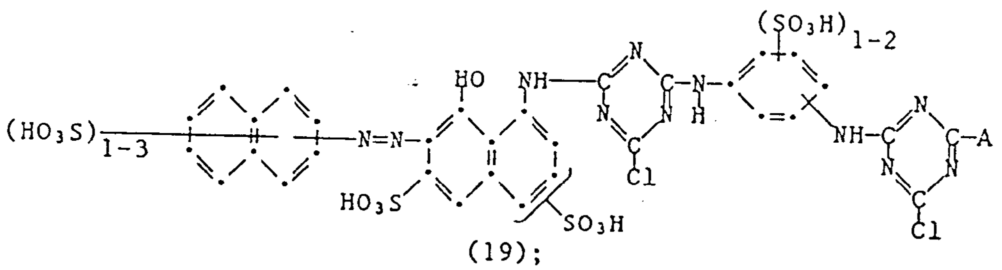

(19);

A ayant, dans les formules (15) à (19), la définition indiquée dans la revendication 6.

28. Colorants réactifs selon la revendication 11, de formule

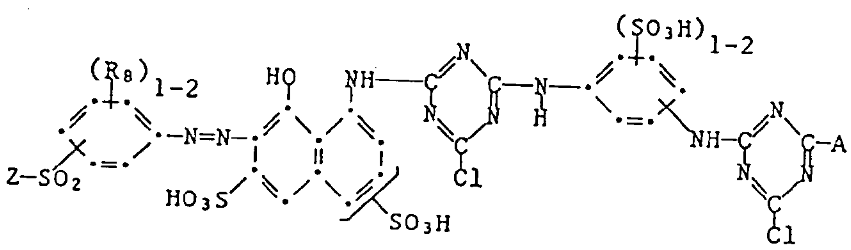

(20)

ou

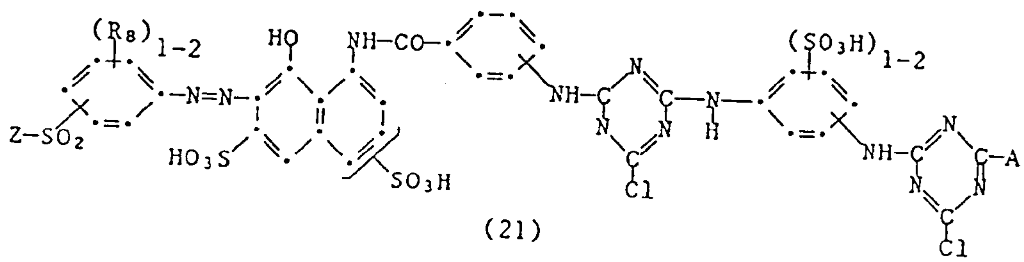

(21)

dans laquelle $R_8$ représente 1 à 2 substituants pris dans le groupe formé par hydrogène, alkyle en $C_{1-4}$, alcoxy en $C_{1-4}$, halogène, carboxy et sulfo, Z est β-sulfatoéthyle, β-thiosulfatoéthyle, β-phosphatoéthyle, β-acyloxyéthyle, β-halogénoéthyle ou vinyle, et A a la définition indiquée dans la revendication 6.

29. Colorants réactifs selon la revendication 11, de formule

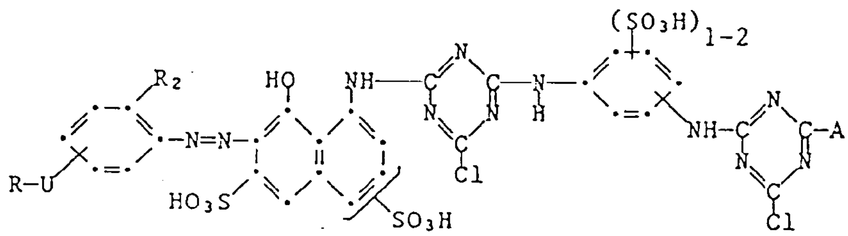 (22),

dans laquelle $R_2$ représente hydrogène, alkyle en $C_{1-4}$, alcoxy en $C_{1-4}$, halogène, hydroxy, carboxy ou sulfo, U est -CO- ou -$SO_2$-, R′ est un reste d'une formule (3a) à (3d) de la revendication 3, et A a la définition indiquée dans la revendication 6.

30. Colorants réactifs selon la revendication 16, de formule

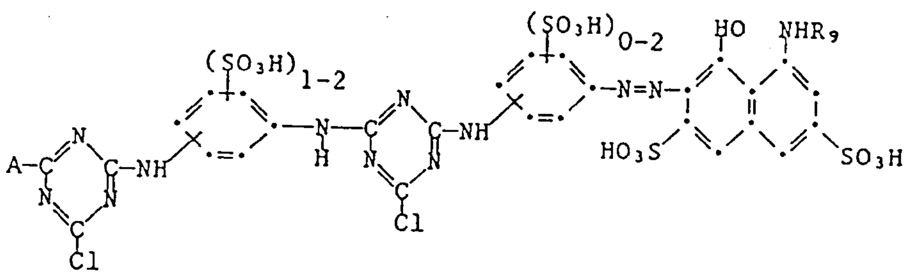 (23),

dans laquelle $R_9$ est une groupe alcanoyle en $C_{1-4}$ ou benzoyle; ou de formule

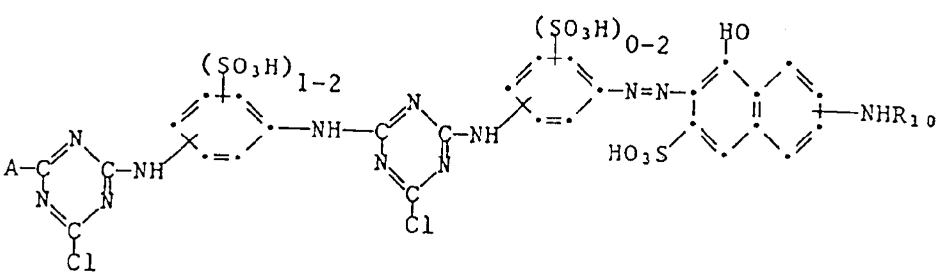 (24)

dans laquelle $R_{10}$ est un groupe alcanoyle en $C_{1-4}$ ou benzoyle; ou de formule

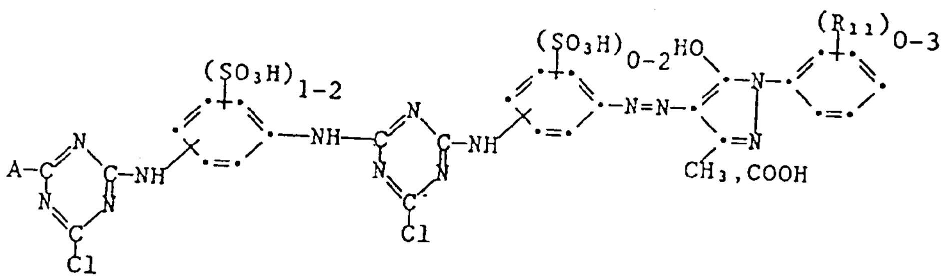

(25)

dans laquelle $R_{11}$ représente 0 à 3 substituant(s) pris dans le groupe formé par alkyle en $C_{1-4}$, alcoxy en $C_{1-4}$, halogène, carboxy et sulfo; ou de formule

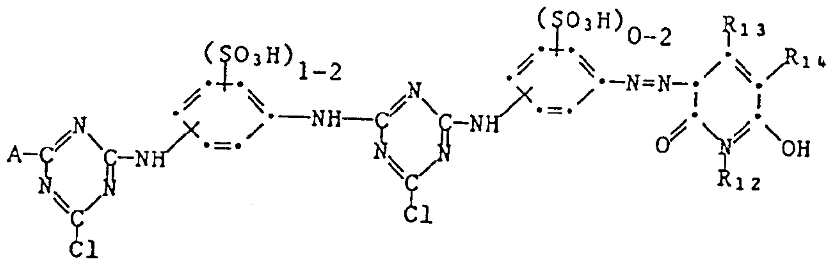

(26)

dans laquelle $R_{12}$ et $R_{13}$ sont, indépendamment l'un de l'autre, hydrogène, alkyle en $C_{1-4}$ ou phényle, et $R_{14}$ est hydrogène, cyano, carbamoyle ou sulfométhyle, et A a, dans les formules (15) à (19), la définition indiquée dans la revendication 6.

31. Colorants réactifs selon la revendication 17, de formule

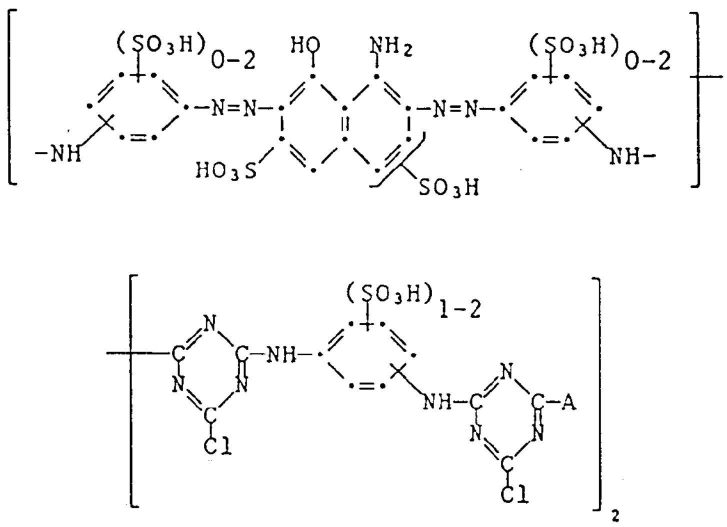

dans laquelle A a la définition indiquée dans la revendication 6.

32. Colorants réactifs selon la revendication 16, de formule

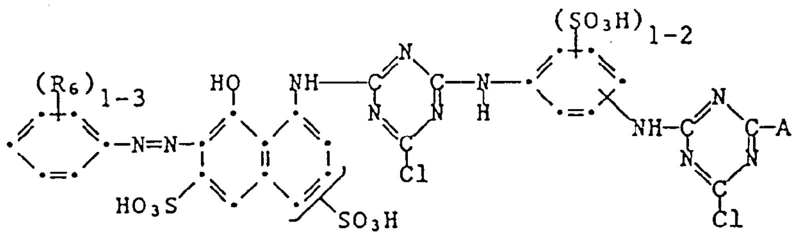

(28)

dans laquelle $R_6$ représente 1 à 3 substituants pris dans le groupe formé par alkyle en $C_{1-4}$, alcoxy en $C_{1-4}$, halogène carboxy ou sulfo, et A est un reste de la formule (4) de la revendication 3, un reste de la formule (5) de la revendication 4, un reste de la formule (6) de la revendication 5 ou un reste de la formule (8) de la revendication 7.

33. Colorants réactifs selon la revendication 11, de formule

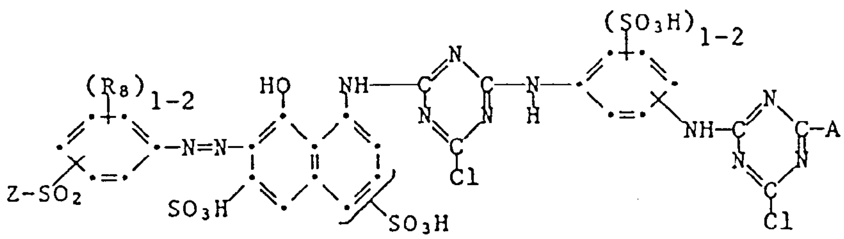

(29),

dans laquelle $R_8$ représente 1 à 2 substituants pris dans le groupe formé par hydrogène, alkyle en $C_{1-4}$, alcoxy en $C_{1-4}$, halogène, carboxy et sulfo, Z est β-sulfatoéthyle, β-thiosulfatoéthyle, β-phosphatoéthyle, β-acyloxyéthyle, β-halogénoéthyle ou vinyle; ou de formule

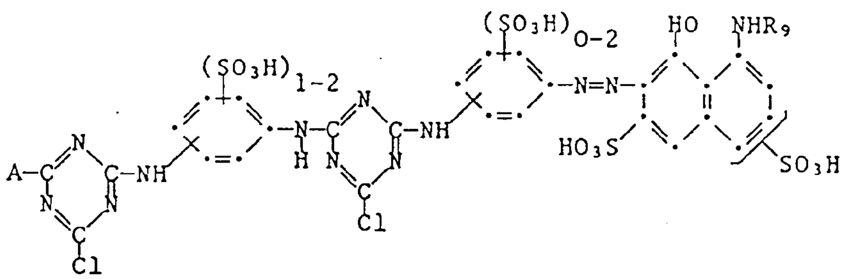

(30)

dans laquelle $R_9$ est un groupe alcanoyle en $C_{1-4}$ ou benzoyle, et A est un reste de la formule (4) de la revendication 3, un reste de la formule (5) de la revendication 4, un reste de la formule (6) de la revendication 5 ou un reste de la formule (8) de la revendication 7.

34. Colorants réactifs selon la revendication 2, dans lesquels Z est un groupe β-sulfatoéthyle, β-chloroéthyle ou vinyle.

35. Procédé de préparation de colorants réactifs de formule (1), caractérisé en ce qu'on fait réagir ensemble, dans un ordre quelconque, un colorant organique de formule

$$D\text{-}(\text{-}NHR)_{1-2} \quad (31)$$

ou un précurseur de colorant, au moins deux équivalents d'une s-triazine de formule

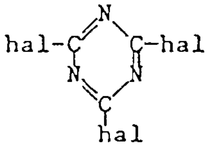

(32)

au moins un équivalent d'une diamine de formule

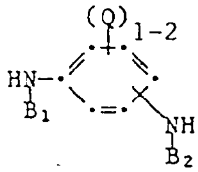

(33)

et au moins un équivalent d'une amine de formule

H-A (34)

D, R, $B_1$, $B_2$, Q et A ayant les définition données dans la revendication 1, et hal représentant un atome d'halogène ou un des groupes définis pour X et Y à propos de la formule (1), et on transforme, au cas où l'on utilise un précurseur de colorant, les produits intermédiaires obtenus en les colorants monohalogénotriazine souhaités, et qu'on réalise éventuellement une réaction de transformation supplémentaire.

36. Procédé selon la revendication 35, caractérisé en ce qu'on condense d'abord un colorant de formule

$D\text{-}(\text{-}NHR)_{1\text{-}2}$ (31)

avec une s-triazine de formule

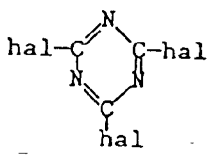

(32)

et on condense le composé obtenu, de formule

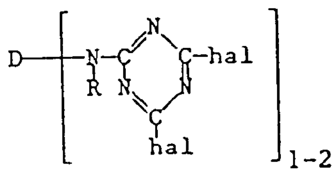

(35)

,

avec un diamine de formule

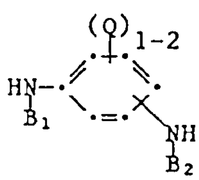

(33)

,

puis on condense à nouveau le produit obtenu avec une s-triazine de formule (32), et finalement avec un amine de formule

H-A (34).

37. Procédé selon la revendication 36, caractérisé en ce qu'on fait réagir un composant du colorant de formule (1), qui contient un reste de formule

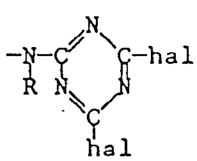

(36)

,

dans laquelle R et hal ont les définitions données dans la revendication 35, avec un deuxième composant nécesaire à la préparation du colorant, qui comporte éventuellement un reste de formule (36), et qu'on fait réagir le colorant de formule

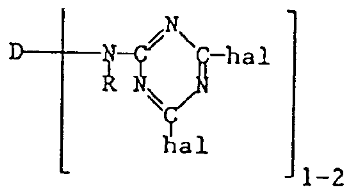

(35)

ainsi obtenu avec un diamine de formule (33), une autre s-triazine de formule (32) et une amine de formule (34).

38. Emploi des colorants réactifs de la revendication 1, pour la teinture ou l'impression de matière fibreuses contenant de la cellulose.

39. Emploi selon la revendication 38, pour la teinture ou l'impression du coton.